(19) Europäisches Patentamt

European Patent Office

Office européen des brevets

(11) **EP 1 493 109 B1**

(12) **FASCICULE DE BREVET EUROPEEN**

(45) Date de publication et mention
de la délivrance du brevet:
**27.12.2006 Bulletin 2006/52**

(21) Numéro de dépôt: **03745825.4**

(22) Date de dépôt: **04.04.2003**

(51) Int Cl.:
***G06F 17/30*** (2006.01)

(86) Numéro de dépôt international:
**PCT/FR2003/001076**

(87) Numéro de publication internationale:
**WO 2003/085554 (16.10.2003 Gazette 2003/42)**

(54) **METHODE DE GESTION DES REORGANISATIONS DANS UN ENSEMBLE DE BASES DE DONNEES INDEXEES D'UN SYSTEME INFORMATIQUE**

VERFAHREN ZUR UMORGANISATIONSVERWALTUNG IN EINER MENGE INDIZIERTER DATENBANKEN EINES COMPUTERSYSTEMS

METHOD FOR REORGANIZATION MANAGEMENT IN A SET OF INDEXED DATABASES OF A COMPUTER SYSTEM

(84) Etats contractants désignés:
**AT BE BG CH CY CZ DE DK EE ES FI FR GB GR HU IE IT LI LU MC NL PT RO SE SI SK TR**

(30) Priorité: **08.04.2002 FR 0204301**

(43) Date de publication de la demande:
**05.01.2005 Bulletin 2005/01**

(73) Titulaire: **Infotel**
**93175 Bagnolet (FR)**

(72) Inventeur: **LAFFORET, Bernard**
**F-94420 Le Plessis Trevise (FR)**

(74) Mandataire: **Poidatz, Emmanuel**
**Cabinet JP Colas**
**37, avenue Franklin D. Roosevelt**
**75008 Paris (FR)**

(56) Documents cités:
**US-A- 5 881 379**          **US-A- 5 887 274**

• **SOCKUT G H ET AL: "A METHOD FOR ON-LINE REORGANIZATION OF A DATABASE" IBM SYSTEMS JOURNAL, IBM CORP. ARMONK, NEW YORK, US, vol. 36, no. 3, 1997, pages 411-436, XP000701880 ISSN: 0018-8670**
• **MARUYAMA K ET AL: "Optimal reorganization of distributed space disk files" COMMUNICATIONS OF THE ACM, NOV. 1976, USA, vol. 19, no. 11, pages 634-642, XP002236355 ISSN: 0001-0782**
• **BARU C ET AL: "Data reorganization in parallel database systems" ADVANCES IN PARALLEL AND DISTRIBUTED SYSTEMS, 1993., PROCEEDINGS OF THE IEEE WORKSHOP ON PRINCETON, NJ, USA 6 OCT. 1993, LOS ALAMITOS, CA, USA,IEEE COMPUT. SOC, 1993, pages 102-107, XP010223428 ISBN: 0-8186-5250-0**

**Description**

La présente invention concerne la réorganisation de bases de données gérées à l'aide d'un système informatique, plus particulièrement les bases de données indexées dans lesquelles un index, le plus souvent sous forme de table d'index, est utilisé pour accéder à un objet recherché, par exemple une ligne de la base de données. Ces bases de données peuvent être de très grande taille. Pour fixer les idées et sans caractère limitatif pour la présentation de l'invention la taille de ces bases de données de très grandes tailles peut aller de un million à quelques milliards de lignes. Ces bases de données sont en général enregistrées dans des mémoires de grande capacité, par exemple des mémoires à disque, chaque ligne de données étant adressée de façon appropriée. Les tailles considérables que peuvent avoir les bases de données requièrent souvent l'exploitation de ces dernières par partitions auxquelles sont associés des index de partitions spécifiques et/ou les index de bases de données complètes.

Il est capital, pour maintenir la capacité d'une base de données à être consultée par une connexion en ligne (on line) avec un temps d'accès aux données raisonnable, malgré l'effet retardateur du aux mises à jour pratiquées sur la base, de procéder à des réorganisations périodiques de cette base de données.

La réorganisation est une étape essentielle dans l'entretien des bases de données (et de leurs index). La réorganisation est faite hors ligne (off line) en général pendant la fenêtre de maintenance (fenêtre « batch ») et consiste à décharger la base de données, à ranger ses lignes d'information dans un ordre souhaité, par exemple l'ordre alphabétique, puis à recharger les lignes une fois rangées dans la base de données en mettant à jour les index, si possible de façon réorganisée.

Pour la suite de l'exposé on appellera indistinctement « objet à réorganiser » OR un objet susceptible de réorganisation d'un système d'information, en particulier la base de donnée seule, son ou ses index, l'association base de données et index, les partitions de la bases de données, leurs index associés (spécifiques ou non) et les associations partitions et leurs index.

De même pour la suite de l'exposé, on appellera système informatique d'information ou système d'information un système informatique complet (matériels et logiciels) adapté pour la gestion de bases de données et comportant au moins une base de données. On rencontre de tels systèmes notamment comme serveurs en ligne (on line) internes ou externes auxquels des utilisateurs se connectent pour consulter les bases de données correspondantes par l'intermédiaire de requêtes et autres demandes de recherche de données.

Les capacités « machine » du système d'information (unités centrales éventuellement mises en réseau) sont en général divisées en régions de traitement distinctes pilotées de façon unitaire par une région de contrôle. A chaque région de traitement sont affectées un certain nombre de tâches ordonnées (programmes ou sous-programmes à exécuter) et sont allouées les ressources matérielles nécessaires en mémoires virtuelles et périphériques (disques durs, imprimantes, mémoires sur supports externes etc...). Par souci d'efficacité en exécution et en allocation de ressources matérielles et/ou logicielles on affecte si possible à chaque région de traitement des tâches de même type, telles que par exemple pour des tâches généralement exécutables dans la fenêtre de maintenance dite fenêtre « batch », des réorganisations de fichiers ou bases de données (demandant beaucoup d'espace de disque) ou des copies images de fichiers (demandant des périphériques de sortie externe, lecteurs de bandes magnétiques, lecteurs/graveurs de CD-ROM, etc...).

D'une façon générale les réorganisations de bases de données sont nécessaires pour éviter que les performances des transactions (lecture et/ou mise à jour) accédant aux bases de données ne se dégradent. Toutefois il n'est pas possible de maintenir tous les objets d'un système d'information en état de parfaite organisation parce que :

    i) les réorganisations consomment du temps et des ressources du système (processeurs, mémoire vive et mémoires sur disques);
    ii) des réorganisations trop fréquentes entraîneraient des coûts de réalisations supérieurs aux surcoûts générés par l'exploitation de bases de données faiblement désorganisées.

Une première étape du travail de gestion de la réorganisation d'un ensemble de bases de données consiste en l'élaboration d'un planning d'exécution des réorganisations. Ce planning est utilisé pour le lancement des réorganisations des bases de données hors ligne (off line) pendant la période de maintenance journalière de quelques heures prévue pour le système d'information (fenêtre « batch » ou fenêtre des exécutions groupées).

Le document US 5.881.379 décrit notamment une méthode de réorganisation de bases de données faisant appel à des pointeurs indirects pour s'affranchir du journal "log". En particulier cette méthode comporte l'établissement d'un pré-planning de réorganisation dans lequel sont répertoriés les éléments des données concernées par la réorganisation envisagée et les opérations qui en résultent, pré-planning qui est ensuite utilisé pour le planning définitif de la réorganisation.

On connaît également des outils logiciels susceptibles de générer le planning d'exécution des réorganisations à venir en fonction :

- de la liste des objets à réorganiser,
- de la fréquence prédéterminée de réorganisation par objet,
- du niveau de désorganisation des objets mesuré par des techniques non documentées.

Toutefois aucun des outils connus ne remet en cause le planning initial en fonction d'événements pouvant survenir pendant l'exécution des réorganisations planifiées.

Accessoirement aucun de ces outils ne prétend procéder à une étude d'optimisation pour générer ce planning, notamment à partir des ressources matérielles et logicielles disponibles instantanément et/ou à partir des coûts de réorganisation et/ou de non-réorganisation ou en fonction de paramètres instantanés réels ou estimés des objets à réorganiser tels que leur taille, leur taux de désorganisation et leur temps de réorganisation.

L'invention a pour but une gestion de la réorganisation d'un ensemble de bases de données indexées d'un système informatique d'information permettant d'améliorer les performances d'une configuration donnée du système d'information par une recherche d'optimisation continuelle, notamment du point de vue coûts et/ou des temps de réorganisation des réorganisations des bases de données (et/ou leurs partitions) et de leurs index.

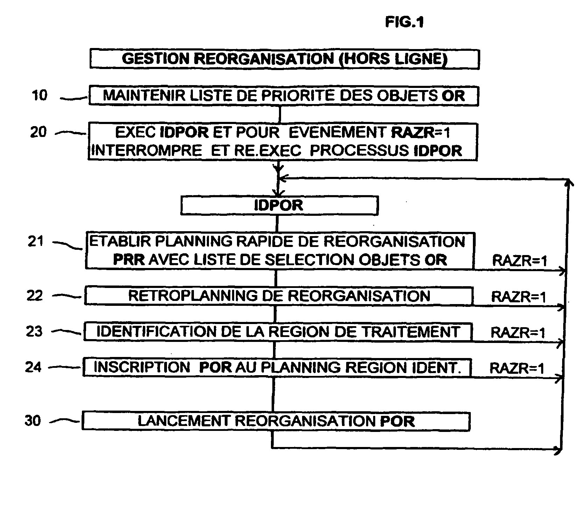

A cette fin, l'invention propose une méthode de gestion des réorganisations dans un ensemble de bases de données indexées d'un système informatique d'information adaptée à la réorganisation « hors ligne » dans au moins une région de traitement de réorganisation du système et comportant les phases opérationnelles suivantes (voir figure 1) :

(10) - Création et maintien par mise à jour en continu d'une liste **PRIOREORG** des objets à réorganiser par priorité décroissante fonction de l'état de désorganisation des objets à réorganiser ;

(20) - Exécution du processus **IDPOR** d'identification du premier ou prochain objet à réorganiser **POR** avec, à chaque événement **RAZR=1** interne au système pour lequel la sélection du premier ou prochain objet à réorganiser doit être remise en cause, interruption et remise à zéro et nouvelle exécution du processus **IDPOR,** lequel processus comportant les étapes suivantes :

(21)- Etablissement d'un planning rapide de réorganisation **PRR** à l'aide de la liste **PRIOREORG** et du temps opérationnel résiduel disponible **TRR** dans l'ensemble des régions de réorganisation et d'une liste de sélection **SELECT/OR** d'objets à réorganiser **OR** ordonnés par priorités décroissantes optimisées en fonction du gain de la réorganisation de chaque objet **OR,** ledit gain étant défini comme le produit d'un facteur représentatif du taux de désorganisation d'un objet **OR** par le temps de réorganisation de cet objet;

(22) - Etablissement d'un rétroplanning de réorganisation dans lequel pour tout objet courant à réorganiser **OR** extrait de la liste **SELECT/OR** par priorité croissante pour favoriser le traitement avancé des objets de plus grandes tailles possibles, on calcule pour chaque région de réorganisation le dernier délai de la région **DDRR,** représentant dans la fenêtre « batch » allouée à la réorganisation « hors ligne » le temps minimal nécessaire à la réorganisation de l'objet courant **OR,** égal dans le cas présent à la durée de temps consommé **DCRR** plus le temps de réorganisation de l'objet courant **DROR;**

(23) - Identification de la région de traitement **RTR** de l'objet courant **OR** par adéquation optimisée entre la durée de traitement disponible dans ladite région **DRR** avec la durée de traitement **DROR** nécessaire pour la réorganisation de l'objet **OR** avec **DRR - DDRR** minimal ≥ **0 ;**

(24) - Inscription de l'objet courant **OR** comme prochain objet à réorganiser **POR** au planning de la région identifiée en valorisant le pointeur **POR** correspondant à l'adresse de l'objet courant à réorganiser et en augmentant la durée de temps consommé **DCRR** dans la région du temps de la réorganisation **DROR.**

(30) - Lancement de la réorganisation de l'objet POR dès que la région de traitement de réorganisation **RTR** identifiée est libérée en l'absence de tout évènement **RAZR=1** survenu entre temps ; Remise à zéro et nouvelle exécution du processus **IDPOR.**

Ainsi l'introduction dans la méthode de gestion selon l'invention du principe même du planning rapide de réorganisation **PRR** (dont le temps machine est minimal pour permettre des réactualisations fréquentes sans véritable pénalisation) et du principe de la réactualisation permanente du planning rapide de réorganisation **PRR** permet de prendre en compte immédiatement l'évolution du système d'information complet et des ses principaux paramètres (taux instantané de désorganisations des objets à réorganiser, allongement de la durée d'une réorganisation par rapport à la durée estimée, libération d'une région de traitement, fin d'une tâche de réorganisation, etc) pour modifier les priorités des réorganisations et optimiser le lancement de celles-ci.

A côté des réorganisations de fichiers tels que bases de données les copies des fichiers modifiés constitue un impératif de sécurité dans le domaine de l'exploitation de systèmes informatiques. En effet pour des raisons de sécurité informatique certains systèmes d'information utilisés pour la gestion d'un ensemble de bases de données incorporent dans leur ensemble de logiciels d'exploitation un dispositif de verrouillage de la remise en service d'une base de données réorganisée avant la prise de la copie de sauvegarde correspondante.

Selon un premier mode d'exécution de la méthode de gestion selon l'invention l'ordre optimal des réorganisations est coordonné avec l'ordre des copies de sauvegarde d'objets du système d'information en tenant compte des réorganisations en cours ou juste effectuées. Selon une variante avantageuse l'ordre des copies de sauvegarde est modifié par l'exécution en première priorité, pour au moins un objet à réorganiser **OR,** de la copie dudit objet OR au plus tôt en fin de traitement de réorganisation.

Pour ce faire, la méthode de gestion des réorganisations selon l'invention est globalisée pour gérer d'une part les réorganisations, d'autre part les copies sachant que pour des raisons d'optimisation on a la faculté de découper les objets à traiter en partitions jusqu'aux plus petites parties d'objets à traiter possibles pour chaque type de traitement. Il en résulte que la liste et les objets à copier peuvent être différents de la liste et des objets à réorganiser.

Par ailleurs en ce qui concerne les copies, on distingue généralement trois types de copie, la copie en continu ou copie « journal » (en anglais « log »), la copie incrémentale qui ne prend que les modifications apportées aux fichiers et la copie totale ou copie image. Dans le cadre de la présente invention, sont concernées principalement les copies images et accessoirement les copies incrémentales.

D'une façon silimaire à ce qui a été mis en place pour les réorganisations, la méthode de gestion des réorganisations et des copies comporte une phase de création et de maintien d'une liste **PRIOCOPIE** de priorité des objets à copier (en fonction du temps passé depuis la dernière copie de chaque objet à copier **OC**) et l'établissement d'un planning rapide de copie, sachant que certains objets **OR** juste réorganisés (par exemple une base de données) sont déverrouillés avant remise en ligne par une prise de copie image; pour ce faire, on choisit dans le cadre de la présente invention de copier ces objets en **première priorité.** Il en résulte une double interaction entre le planning rapide de copie **PPC** et le planning rapide de réorganisation **PRR\*** (voisin du planning **PRR** mais modifié en conséquence pour intégrer la composante copie), pour le premier, **PPC,** par la priorité première donnée à certaines ou à toutes les copies après réorganisations et pour le second **PRR\***, par l'allongement du temps total de réorganisation par addition au temps machine réel de réorganisation d'un temps d'attente (aussi appelé temps gaspillé) correspondant au temps de copie de l'objet juste réorganisé.

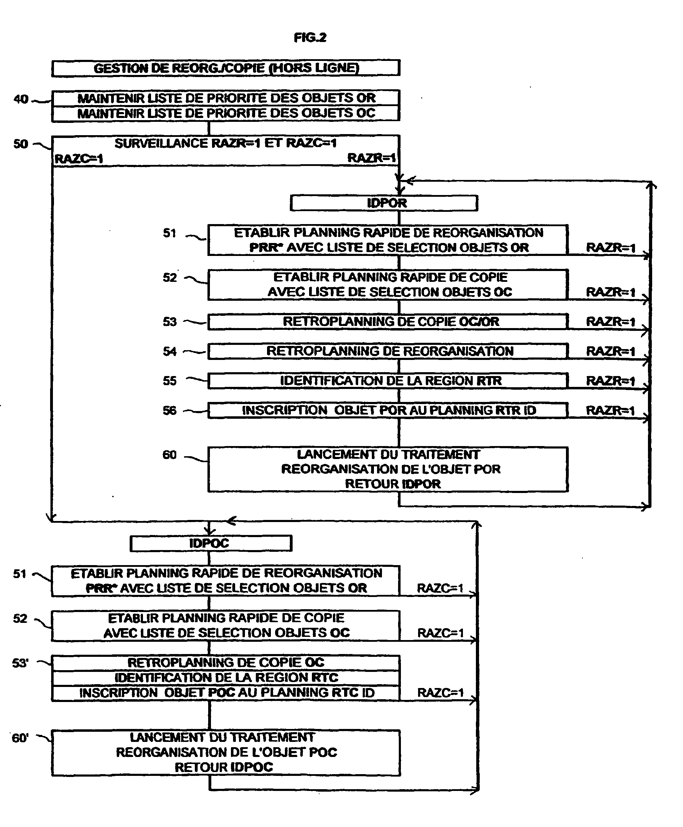

A cette fin, l'invention propose une méthode globale de gestion des réorganisations d'un ensemble de bases de données indexées d'un système informatique d'information adaptée à la réorganisation « hors ligne » intégrant la gestion des copies et comportant les phases opérationnelles suivantes (voir figure 2) :

(40) - Création et maintien par mise à jour en continu :

- de la liste **PRIOREORG** des objets à réorganiser par priorité décroissante fonction de l'état de désorganisation des objets à réorganiser ; et
- d'une liste **PRIOCOPIE** des objets à copier par priorité décroissante fonction de l'ancienneté des dernières copies des objets à copier.

(50)- Surveillance en continu de l'apparition dans le système d'information de tout événement :

- **RAZR=1** pour lequel !a sélection du premier ou prochain objet à réorganiser **POR** doit être remise en cause, notamment une fin d'une tâche de réorganisation dans une région de traitement de réorganisation et/ou la libération d'une zone de traitement pour la réorganisation ou la copie ; et/ou
- **RAZC=1** pour lequel la sélection du premier ou prochain objet à copier **POC** doit être remise en cause, notamment une fin d'une tâche de copie dans une région de traitement de copie, une copie prioritaire en fin de réorganisation et/ou la libération d'une zone de traitement pour la réorganisation ou la copie, avec pour tout événement **RAZR=1,** lancement de l'exécution du processus **IDPOR** d'identification du premier objet à réorganiser **POR** ou, si le processus **IDPOR** est en cours d'exécution, interruption et nouveau lancement du processus **IDPOR ;** et/ou pour tout événement **RAZC=1,** lancement de l'exécution du processus **IDPOC** d'identification du premier objet à copier **POC** ou, si le processus **IDPOC** est en cours d'exécution, interruption et nouveau lancement du processus **IDPOC ;**
- le processus **IDPOR** comportant alors les opérations suivantes

(51) - Etablissement d'un planning rapide de réorganisation **PRR\*** à l'aide de la liste **PRIOREORG** et du temps opérationnel de réorganisation résiduel disponible **TRR** dans l'ensemble des régions de réorganisation et d'une liste de sélection **SELECT/OR** d'objets à réorganiser **OR** ordonnés par priorités décroissantes optimisées en fonction du gain de la réorganisation de chaque objet **OR** ledit gain étant défini comme le produit d'un facteur représentatif du taux de désorganisation d'un objet OR par le temps de réorganisation de cet objet;

(52) - Etablissement d'un planning rapide de copie **PRC** à partir de la liste **SELECT/OR,** puis de la liste **PRIOCOPIE** et dans la limite du temps opérationnel de copie résiduel disponible **TRC** dans l'ensemble des régions de copie, d'une liste de sélection **SELECT/OC** en mémoire de type LIFO ou pile d'objets à copier **OC** empilés par priorités décroissantes, la priorité la plus haute étant donnée à l'objet dont la copie remonte le plus loin dans le temps, les ajouts de copies d'objets après réorganisation étant effectués en tête de la liste **PRIOCOPIE.**

(53) - Etablissement d'un rétroplanning de copie dans lequel pour tout objet courant à réorganiser **OR** extrait de la liste **SELECT/OR** par priorité croissante, on calcule pour chaque région de copie le temps à réserver **TCR** pour la copie de l'objet **OR** après réorganisation ;

(54) - Etablissement d'un rétroplanning de réorganisation dans lequel pour tout objet courant à réorganiser **OR** extrait de la liste **SELECT/OR** par priorité croissante pour favoriser le traitement avancé des objets de plus grandes tailles possibles, on calcule pour chaque région de réorganisation le dernier délai de la région **DDRR,** représentant dans la fenêtre « batch » allouée à la réorganisation « hors ligne » le délai minimal nécessaire à la réorganisation de l'objet courant **OR,** selon une formulation distincte si une copie de l'objet **OR** en fin de réorganisation doit être faite ou non;

(55) - Identification de la région de traitement **RTR** de l'objet courant à réorganiser **OR** par adéquation optimisée entre la durée de traitement disponible dans ladite région **DRR** avec la durée de traitement **DROR** nécessaire pour la réorganisation de l'objet courant **OR** avec **DRR - DDRR minimal $\geq$ 0** sans copie à faire ou avec valeur absolue de **DRR - DDL** minimal et **DROR+DCOR $\leq$ DRR** si copie à faire;

(56) - Inscription de l'objet courant à réorganiser **OR** comme prochain objet à réorganiser **POR** au planning de la région identifiée en valorisant le pointeur **POR** correspondant à l'adresse de l'objet courant **OR,** en augmentant la durée de temps consommé **DCRR** dans la région du temps de la réorganisation **DROR** et recalculant la durée gaspillée dans la région de réorganisation **DGRR** du fait des copies d'objets **OR** en fin de réorganisation.

(60)- Lancement, en l'absence de tout événement de remise à zéro **RAZR=1** survenu entre temps, dès qu'une région de traitement de réorganisation **RTR** identifiée est disponible, de la réorganisation de l'objet **POR ;** Remise à zéro et nouvelle exécution du processus **IDPOR ;** et, le processus **IDPOC** comportant les opérations suivantes

(51) - Etablissement d'un planning rapide de réorganisation **PRR\*** à l'aide de la liste **PRIOREORG** et du temps opérationnel de réorganisation résiduel disponible **TRR** et d'une liste de sélection **SELECT/OR** d'objets à réorganiser **OR** ordonnés par priorités décroissantes optimisées en fonction du gain de la réorganisation de chaque objet **OR,** ledit gain étant défini comme le produit d'un facteur représentatif du taux de désorganisation d'un objet **OR** par le temps de réorganisation de cet objet

(52) - Etablissement d'un planning rapide de copie **PRC** à partir de la liste **SELECT/OR,** puis de la liste **PRIOCOPIE** et dans la limite du temps opérationnel de copie résiduel disponible **TRC,** d'une liste de sélection **SELECT/OC** en mémoire de type LIFO ou pile d'objets **OC** empilés par priorités décroissantes, la priorité la plus haute étant donnée à l'objet dont la copie remonte le plus loin dans le temps, les ajouts de copies d'objets après réorganisation étant effectués en tête de la liste **PRIOCOPIE ;**

(53') - Etablissement d'un rétroplanning de copie avec détermination des durées de copie disponibles en région copie, dépilage de la liste **SELECT/OC** de haut en bas et recherche d'une région copie par adéquation entre la durée copie disponible et la durée copie de l'objet courant à copier **OC** de façon à copier les objets les plus grands possibles et marquage de l'origine de réorganisation ou non de l'objet à copier ; suivi de

- l'identification de la région de traitement **RTC** de l'objet à copier par adéquation entre la durée de traitement disponible dans ladite région avec la durée de traitement nécessaire pour la copie de l'objet courant **OC;** suivie de
- l'inscription de l'objet courant **OC** comme le prochain objet à copier **POC** au planning de la région **RTC** identifiée en valorisant le pointeur **POC** correspondant à l'adresse de l'objet **OC** et en diminuant la durée de traitement disponible du temps de la copie de l'objet **OC** retenu comme **POC ;**

(60')- Lancement, en l'absence de tout évènement de remise à zéro **RAZC=1** survenu entre temps, dès qu'une région de traitement de copie **TRC** identifiée est disponible, de la copie de l'objet **POC;** Remise à zéro et nouvelle exécution du processus **IDPOC.**

Bien entendu sans sortir du cadre de l'invention, il existe dans des variantes de la méthode de l'invention certains cas d'objets à réorganiser **OR** pour lesquels la copie juste après réorganisation n'est pas nécessaire. Dans ces cas et pour ces objets particuliers les phases opérationnelles ci-dessus sont modifiées en conséquence.

En particulier dans une recherche continuelle d'optimisation, la méthode gestion selon l'invention dans une de ses variantes intègre dans les phases finales de processus **IDPOR** d'un objet **OR** une phase de recherche d'un ou plusieurs objets à réorganiser **OR** sans copie **OR** dans la liste **SELECT/OR** ou à défaut dans la liste **PRIOREORG** susceptibles d'être réorganisés dans la région de traitement **RTR** correspondante pendant l'intervalle du temps d'attente de la copie de l'objet OR après réorganisation.

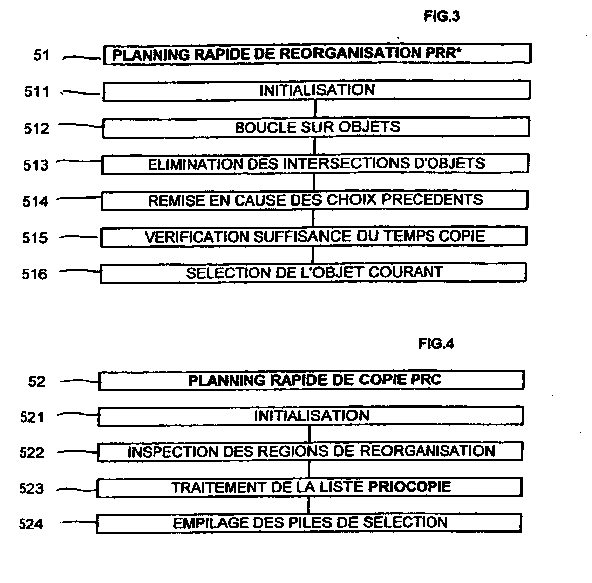

Avantageusement la phase (51) d'Etablissement d'un planning rapide de réorganisation **PRR\*** comporte les opérations suivantes (voir figure 3) :

(511) - Initialisation : dans laquelle sont notamment annulés les indicateurs de sélection des objets **OR,** initialisé le compteur-limiteur de remises en causes, les temps résiduels de copie **TRC** et de réorganisation **TRR** et la durée minimale **E** de réorganisation et copie d'un objet **OR** ;

(512) - Boucle sur objets : dans laquelle notamment pour tout objet réel **OR** de la liste **PRIOREORG** pris dans l'ordre décroissant jusqu'à ce que **TRR < E,** une marque de 'sélection possible' de l'objet est posée;

(513)- Elimination des intersections d'objets : dans laquelle notamment sont éliminés de la 'sélection possible' les objets réels **OR** parties d'espaces de tables également appelés objets globaux déjà sélectionnés en tout ou partie;

(514) - Remise en cause des choix précédents : dans laquelle notamment sont éliminés de la 'sélection possible' les objets **OR** dont le temps total de réorganisation et copie est supérieur au temps de réorganisation résiduel **TTR** et à défaut dans laquelle l'objet courant **OR** et les objets OR déjà sélectionnés dans la liste **SELECT/OR** sont soumis à un processus d'optimisation en fonction du gain de réorganisation avec replacement d'un objet déjà sélectionné par l'objet en cours avec essais, dans la limite du terme du compteur-limiteur, de combinaisons successives tendant à retenir pour être sélectionné au final dans **SELECT/OR** des objets de plus grand gain de réorganisation possible et à les associer aux autres objets **OR** de la 'sélection possible' de façon à ce que le temps total des réorganisations de tous les objets **OR** retenus soit inférieur mais le plus proche possible du temps résiduel de réorganisation **TRR.**

(515) - Vérification de la suffisance du temps copie disponible dans le temps résiduel de copie **TRC** pour chaque objet **OR** en passe d'être finalement sélectionné pour la réorganisation compte tenu de la priorité de réorganisation de l'objet **OR** par rapport aux objets à copier en préalable du fait de leurs priorités copie supérieures.

(516) - Sélection de l'objet courant dans la liste **SELECT/OR:** dans laquelle notamment sont positionnés les indicateurs de l'objet courant et de l'objet global associé, annulés éventuellement les indicateurs du ou des objets **OR** désélectionnés et diminuer **TRR** et **TRC** des temps respectifs de réorganisation et de copie.

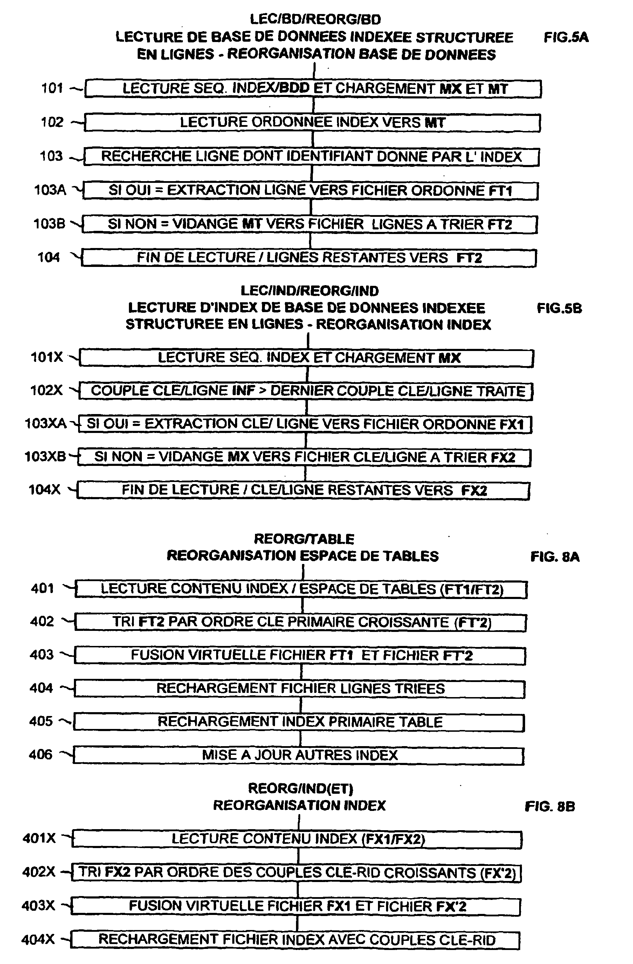

Encore avantageusement, ladite phase (52) d'établissement d'un planning rapide de copie **PRC** comporte les opérations suivantes (voir figure 4) :

(521) - Initialisation : au sortir d'un planning de réorganisation **PRR\*** et dans laquelle sont notamment vidées les piles de sélection de copie **PSC1** et **PSC2,** initialisés le compteur-limiteur de remises en causes, le temps résiduel de copie **TRC** et la durée minimale **EC** de copie d'un objet à copier **OC ;**

(522)- Inspection des régions de réorganisation : Pour toutes les régions, si région active, et si image copie de l'objet en cours de réorganisation à faire et/ou si image copie de tout objet **OR** de la liste **SELECT/OR** pris dans l'ordre des priorités décroissantes à faire: pour tout sous-objet susceptible d'être copié séparément, notamment une partition, soustraction du temps de copie du sous-objet de **TRC** et placement du sous-objet en haut de la première pile **PSC1 ;**

(523)-traitement de la liste des objets à copier **PRIOCOPIE :** dans laquelle notamment pour tout objet à copier **OC** de la liste **PRIOCOPIE** pris dans l'ordre décroissant jusqu'à ce que **TRC < EC** et absent de **PSC1,** soustraction du temps de copie du sous-objet **OC** de **TRC** et placement du sous-objet **OC** en haut de la seconde pile **PSC2 ,**

(524) - Empilage des piles de sélection : dans laquelle la pile **PSC1** est superposée à la pile **PSC2** pour constituer la liste **SELECT/OC.**

Encore avantageusement; ladite phase (53) d'établissement d'un rétroplanning de copie dans le processus **IDPOR** comporte les opérations suivantes :

(531) Initialisation des régions de copie : dans laquelle au sortir d'un planning de réorganisation pour toutes les régions de copie, la durée consommée de la région **DCRC** est mise à zéro,

(532) Détermination du temps de copie à réserver **TCR :** dans laquelle pour tout objet réel de la liste **SELECT/OR** parcourue dans l'ordre des priorités croissantes et pris comme objet à réorganiser courant **OR,**

- le temps à réserver pour copier **TCR** l'objet réel courant **OR** est mis à zéro ;
- Si l'image copie de tout objet **OR** de la liste **SELECT/OR** pris dans l'ordre des priorités croissantes doit être faite: pour tout sous-objet susceptible d'être copié séparément, notamment partition, on recherche une région copie dont la durée consommée **DCRC** est minimale, on ajoute le temps de copie du sous-objet à la durée consommée de la région courante **DCRC** et on valorise le temps à réserver **TCR** pour copie de l'objet courant = **maximum** (du temps à réserver **TCR** pour copie de l'objet courant et de la durée consommée dans la région **DCRC).**

Encore avantageusement, la phase de rétroplanning de réorganisation (54) dans le processus **IDPOR** comporte les opérations suivantes :

(541) - Initialisation : dans laquelle pour toute région de réorganisation,

- Durée de la région **DRR** = Durée de la fenêtre 'batch' **DFB** moins l'heure relative estimée de fin du traitement de réorganisation en cours dans la région **HRFR**
- Durée consommée dans la région **DCRR** = 0
- Durée gaspillée dans la région **DGRR** = 0
- Pointeur premier objet à réorganiser de la région courante = 0

(542) - Détermination du dernier délai de la région de réorganisation **DDRR :** dans laquelle pour tout objet réel **OR** sélectionné de la liste **SELECT/OR** dans l'ordre des priorités croissantes :

Pour chaque région si l'image copie de l'objet courant **OR** à faire, calcul du dernier délai de la région **DDRR** = durée de réorganisation de l'objet courant **DROR** + **max** [temps à réserver pour copie de l'objet courant **TCR,** (durée consommée de la région **DCRR** + durée gaspillée de la région **DGRR)] ;**

- Sinon, calcul du dernier délai de la région **DDRR** = durée consommée de la région **DCRR** + **max** [(durée de réorganisation de l'objet courant **DROR,** durée gaspillée de la région **DGRR)].**

Encore avantageusement la phase d'identification de la région de réorganisation **RTR** (55) comporte les opérations suivantes : Selon le type d'objet courant à réorganiser **OR**

(551) - Recherche de la région de traitement de réorganisation susceptible d'accueillir de façon optimale un objet à réorganiser **OR** sans copie : comportant

- la recherche d'une région dont le dernier délai **DDRR** est minimal, et si dernier délai de la région courante **DDRR** est supérieur à la durée de la région courante **DRR,** la recherche d'une région pour laquelle : [durée de la région courante **DRR** moins le dernier délai de la région courante **DDRR]** est **minimale et positive ou nulle ;** sinon

(552) - Recherche de la région de réorganisation susceptible d'accueillir de façon optimale un objet à réorganiser **OR** avec copie : comportant

- la recherche d'une région telle que : [durée de la région **DRR** moins dernier délai de la région courante **DDRR]** est **minimale en valeur absolue,** et [durée de réorganisation **DROR +** temps de copie objet courant **TCR]** $\leq$ durée de la région **DRR.**

Encore avantageusement la phase d'inscription de l'objet **OR** au planning de la région de réorganisation **RTR** (56) comporte les opérations suivantes :

(561) - Inscription de l'objet courant **OR** comme prochain objet à réorganiser POR: dans laquelle si image copie de l'objet courant **OR** à faire ou durée gaspillée de la région courante = 0, on valorise le **pointeur premier objet à réorganiser POR de la région courante** = **adresse de l'objet courant,**
(562) - mise à jour **DCRR** et **DGRR :** dans laquelle on ajoute la durée de réorganisation de l'objet courant **DROC** à la durée consommée de la région courante **DCRR,** et on valorise la durée gaspillée de la région courante **DGRR** = dernier délai de la région courante **DDRR -** durée consommée de la région courante **DCRR.**

Toujours avantageusement la phase (53') d'établissement d'un rétroplanning de copie dans le processus **IDPOC** comporte les opérations suivantes:

(531') Initialisation des régions de copie : dans laquelle pour toutes les régions,

- la durée de région **DRCOP** est valorisée à la durée fenêtre « batch **»** **DFB** moins l'heure relative estimée de fin de traitement copie en cours **HRFC,**
- la durée consommée de la région **DCRCOP** est mise à zéro,

le pointeur du premier objet à copier **POC** de la région courante est mis à zéro
(532') Dépilage et identification du prochain objet à copier **POC :** Dans la laquelle,

- Pour tout objet de la pile **PSC1/PSC2** parcourue de haut en bas un objet courant à copier **OC** est extrait lorsque le temps de copie de l'objet courant **TCOC** ≤**DRCOP** la plus longue ;
- On cherche pour identifier la région de traitement copie une région dont la durée consommée **DCRC** est minimale; dans l'affirmative si le temps de copie de l'objet courant **TCOC > DRCOP - DCRCOP** on cherche une région pour laquelle **DRCOP - DCRCOP -** TCOC minimale, positive ou nulle,
  Si aucune région ne convient, on choisit une région à copier pour laquelle **DRCOP - DCRCOP - TCOC** est négative et minimale en valeur absolue et pour laquelle **TCOC** ≤ **DRCOP;**
- Si l'objet courant appartient à la seconde pile **PSC2,** soit un objet à copier non issu d'une réorganisation, le pointeur de l'objet **POC** pour la région courante choisie est valorisé à l'adresse de l'objet courant **OC** de façon à inscrire l'objet **POC** au planning de la région de traitement copie **RTC** identifiée ; et
- Pour terminer, on ajoute la durée copie **TCOC** à la durée consommée de la région courante **DCRCOP.**

Selon les diverses variantes de mise en oeuvre de la méthodes de gestion de réorganisations « hors ligne » dans des régions de traitement il est possible de choisir les événements internes au système remettant en cause la sélection des objets **POR** ou **POC** les plus appropriés aux processus de sélection utilisés.

En particulier les événements internes au système **RAZR=1** et **RARC=1** entraînant la remise en cause de la sélection des objets **POR** ou **POC** sont notamment constitués respectivement par la fin d'une tâche de réorganisation dans une région de traitement de réorganisation pour les objets **POR** ou par la fin d'une tâche de copie dans une région de traitement de copie pour les objets **POC,** une copie prioritaire en fin de réorganisation et/ou la libération d'une zone de traitement pour les objets **POR** et **POC.**

L'invention propose également une méthode de gestion des réorganisations adaptée à la réorganisation « hors ligne » et caractérisée en ce qu'elle est associée à une méthode de gestion des réorganisations d'un ensemble de bases de données indexées d'un système d'information adapté à la réorganisation "en ligne" comportant au moins les phases opérationnelles suivantes:

- une phase d'analyse instantanée d'au moins un objet à réorganiser **OR** parmi les objets susceptibles de réorganisation, notamment bases de données, partitions et/ou index, et d'estimation du surcoût associé au niveau de désorganisation de l'objet à réorganiser **OR;**
- une phase d'estimation instantanée du coût de la réorganisation en ligne en fonction de la taille dudit objet à réorganiser **OR** et du taux de désorganisation dudit objet **OR;** et
- une phase de détermination du seuil Ds de désorganisation minimal de l'objet à réorganiser **OR** au dessus duquel seuil la réorganisation « en ligne » peut être lancée pour cet objet **OR** et le, cas échéant, du lancement effectif de cette réorganisation en ligne, le seuil **Ds** correspondant sensiblement au minimum du coût total du surcoût estimé de la désorganisation de l'objet **OR** et du coût estimé de la réorganisation pour l'objet **OR** considéré.

Selon une première variante, la méthode de gestion des réorganisations « on line » est caractérisée en ce que le lancement de !a réorganisation « en ligne » est retardé pour attendre une fenêtre temporelle d'activité réduite de la base de données concernée. Selon une variante particulière de l'invention la méthode de gestion incorpore une phase de calcul de l'heure optimale de lancement d'une réorganisation «en ligne» (on line) en fonction de l'activité réelle ou prévue du système d'information correspondant.

D'une façon plus globale les méthodes des réorganisations « en ligne » et « hors ligne » sont combinées de façon à ce que pour un objet **OR** sélectionné comme prochain objet à réorganiser **POR** la priorité est donnée pour la réorganisation « hors ligne », l'intervention de la réorganisation « en ligne » n'étant requise qu'après dépassement du seuil **Ds.** Il est ainsi possible de soulager la réorganisation « hors ligne » par des réorganisations « en ligne » lorsque ces dernières ne sont pas trop pénalisantes au niveau de la qualité des services en ligne.

L'invention concerne également une méthode de gestion des réorganisations « en ligne » et « hors ligne » dans un ensemble de base de données indexées caractérisée en ce que pour un même objet **POR** la priorité est donnée pour la réorganisation « hors ligne », l'intervention de la réorganisation « en ligne » n'étant requise qu'après dépassement du seuil **Ds** pour l'objet **POR** considéré.

Selon une première version de la méthode de gestion des réorganisations « on line » utilisée pour la réorganisation des bases de données indexées de type espace de tables, la méthode est caractérisée en ce que pour un objet à réorganiser **OR,** le seuil Ds est défini par une approximation donnée par la formule **F5'** suivante:

$$R = Ds^2 \, r \, Co* \, / \, 2.l.c = 1$$

lorsque que **U,** moyenne horaire du nombre de mises à jour sur l'objet **OR,** est faible, et dans laquelle :

**r** désigne le nombre moyen de lignes ou clé-RID par page de l'objet entier,

**l** désigne le nombre d'insertions de lignes (ou de clé-RID pour les index) à l'heure dans l'objet **OR,**

**Co\*** désigne le surcoût horaire lorsque l'objet est totalement désorganisé

**c** désigne un paramètre machine, le rapport du temps d'accès **E/S** par la taille de l'objet **Nbp.**

Selon une variante de la méthode de gestion des réorganisations « on line » précédente et utilisée pour la réorganisation des index, le seuil **DsI** est défini pour un index par une approximation donnée par la formule **F7'** suivante :

$$R = DsI^2 \, r \, (t^*+1)Nbp.V \, / \, [2(V+3)] = 1$$

lorsque que **U,** moyenne horaire du nombre de mises à jour sur l'index, est faible, et dans laquelle :

**Ts** désigne le temps de déplacement de bras, **Tl** le temps de latence (1/2 tour du bras).

**c = (Ts+ 3.Tl)/Nbp** où Ts en **E/S** désigne le temps de déplacement du bras du disque, et **Tl** le temps de latence (1/2 tour du bras) et V = **Ts/Tl.**

**t\*** désigne le taux de relecture de l'objet, c'est à dire le nombre moyen de fois qu'une entrée sera relue.

Selon une autre variante de la méthode de gestion des réorganisations « en ligne » précédente et utilisée pour la réorganisation des bases de données indexées de type espace de tables monotable à n index, caractérisé en ce que le seuil **DsT** est défini pour un espace monotable par une approximation donnée par la formule F13' suivante :

$$R = r.Nbp[DsT^2.L \, (V+1) + V.S(DsT^2 - bi^2) \, (t^*i+1)/(2V+6) = 1$$

lorsque que **U**, moyenne horaire du nombre de mises à jour sur l'espace monotable, est faible, et dans laquelle:

**L** désigne la proportion de lignes accédées par parcours séquentiel sur le nombre de lignes créées,

**S** représente le signe mathématique Sigma (somme des expressions f(xi) pour i index allant de 1 à n),

**bi** représentent les valeurs instantanées de D(taux de désorganisation de l'espace monotable) lors des dernières réorganisations des **n** index, et

**t\*i** représentent les taux d'accès directs au travers de chaque index i.

L'invention concerne également l'application de la méthode de gestion des réorganisations dans un ensemble de bases de données indexées d'un système informatique d'information présentée ci-dessus dans toutes ses variantes à la réorganisation des bases de données indexées de type espace de tables défini dans la description ci-après.

L'invention concerne également les systèmes informatiques de type systèmes d'information comportant un ensemble de bases de données indexées et les moyens spécialement adaptés pour la mise en oeuvre de la méthode de gestion des réorganisations présentée ci-avant, de base de données indexées, notamment de bases de données de type espace de tables et/ou d'index.

D'autres caractéristiques et avantages de la méthode de gestion globale des réorganisations de bases de données indexées et de ses applications à la réorganisation des bases de données indexées notamment du type espace de tables selon la présente invention apparaîtront à !a lecture de !a description qui va suivre en référence aux dessins ci-joints d'un mode de mise en oeuvre préférentiel de l'invention et présenté à titre d'exemple non limitatif.

PRESENTATION SOMMAIRE DES DESSINS

- la figure 1 représente un organigramme correspondant à la méthode de gestion des réorganisations d'un ensemble de bases de données indexées, notamment de type espace de tables, selon l'invention;
- la figure 2 représente un organigramme correspondant à la méthode de gestion des réorganisations et des copies d'un ensemble de bases de données indexées, notamment de type espace de tables, selon l'invention;
- la figure 3 représente un organigramme détaillant les opérations de la phase d'établissement d'un planning rapide de réorganisation de la méthode de la figure 2;
- la figure 4 représente un organigramme détaillant les opérations de la phase d'établissement d'un planning rapide de copie de la méthode de la figure 2 ;

- la figure 5A représente un organigramme correspondant à une méthode de lecture d'une base de données indexée, notamment en vue de la réorganisation de la base de données, utilisable dans le cadre de l'invention;
- la figure 5B représente un organigramme correspondant à une méthode de lecture de l'index de la base de données indexée, notamment en vue de la réorganisation de l'index, utilisable dans le cadre de l'invention;
- la figure 6A représente un organigramme correspondant à une variante partielle de la méthode de la figure 5A appliquée à la lecture et au déchargement de l'index d'une base de données indexée de type espace de tables, notamment en vue de la réorganisation de la base de données indexée, utilisable dans le cadre de l'invention;
- la figure 6B représente un organigramme correspondant à une variante partielle de la méthode de la figure 5B appliquée à la lecture et au déchargement de l'index d'une base de données indexée de type espace de tables, notamment en vue de la réorganisation de l'index de la base de données indexée, utilisable dans le cadre de l'invention;
- la figure 7 représente un organigramme correspondant à une variante partielle de la méthode appliquée à la lecture et au déchargement de la base de données indexée de type espace de tables objet de la figure 6A, utilisable dans le cadre de l'invention;
- la figure 8A représente un organigramme correspondant une méthode de réorganisation d'une base de données indexée de type espace de tables utilisant les méthodes de lecture et de déchargement objet des figures 6A et 7, utilisable dans le cadre de l'invention; et
- la figure 8B représente un organigramme correspondant une méthode de réorganisation de l'index de la base de données indexée de type espace de tables objet de la figure 8A, méthode utilisant la méthode de lecture et de déchargement objet de la figure 6B, utilisable dans le cadre de l'invention.

La description de la méthode de gestion globale de réorganisation d'un ensemble de bases de données indexées qui va suivre, présentée à titre d'exemple non limitatif, se rapporte à une application particulière de l'invention aux bases de données indexées structurées en espaces de tables ('tablespace' en anglais), susceptibles d'atteindre de très grandes tailles (jusqu'à quelques milliards de lignes) et pour lesquelles le maintien d'une bonne organisation, notamment par une réorganisation rapide et efficace, est capital du point de vue performances.

Exemple de bases de données indexées, les bases de données de type espace de table :

Une base de donnée indexée structurée en espace de tables est composée d'un ou plusieurs fichiers formés de blocs de taille unique ou pages numérotées en séquence à partir de zéro. Du point de vue logique on considère qu'il n'existe qu'un seul fichier composé de la succession de chacun des fichiers physiques numérotés 1, 2, etc....

Parmi ces pages on trouve les pages de contrôle et les pages de données adaptées pour contenir des lignes, chaque ligne étant identifiée de façon unique par son RID composé du numéro de page et du numéro d'ordre à l'intérieur de la page. Chaque ligne est composée de champs de données appelées colonnes. Une clé est une liste de colonnes ayant un ordre croissant ou décroissant. A chaque clé est associée un index.

Un espace de tables peut contenir une ou plusieurs tables présentant chacune des colonnes spécifiques. Toutefois les espaces de tables multi-tables peuvent être traités comme les espaces de tables mono-table à condition de traiter les tables et leurs index en séquence.

Les espace de tables peuvent être partitionnés (divisés en plusieurs parties ou partitions). Chaque partition étant alors identique au fichier physique portant son numéro.

A la création de la base de données, il est prévu un espace libre de données et un espace libre d'index constitués chacun de pages vides reparties dans l'espace de tables et dans l'index; le but de cette répartition de pages vides entre certaines pages de données et index est de permettre des ajouts et autres mises à jour de lignes de données ou de clés d'index à proximité des pages correspondantes et de limiter ainsi les désorganisations trop importantes.
On considère qu'un espace de tables est bien organisé lorsque:

- l'espace libre de données (pages vides) est distribué dans l'espace de tables selon les paramètres d'origine ;
- les lignes sont rangées par ordre de RID dans le même ordre que la première clé dite clé 'primaire'.

L'index est composé comme l'espace de tables d'un ou plusieurs fichiers formés de pages. Les pages sont de plusieurs type, en particulier pages de contrôle, pages 'feuilles' et pages de niveau supérieur. Les pages feuilles contiennent des clés et pour chaque clé le ou les RID de la ou des lignes d'espace de tables dont la clé correspondante a la même valeur. Ainsi à chaque ligne d'espace de tables est associé un couple clé-RID de page feuille de l'index.

Chaque page feuille contient un ensemble contigu de couples clé-RID, c'est à dire qu'il n'existe aucun couple extérieur à la page qui soit compris entre deux couples de la page. Les pages feuilles sont ainsi logiquement ordonnées par l'un quelconque de leurs éléments.

En cas de partitions d'espace de tables, il en sera de même pour son index primaire, une partition d'index étant associée à chaque partition de l'espace de tables.

On considère qu'un index est bien organisé lorsque:

- l'espace libre est distribué dans l'espace de tables selon les paramètres d'origine ;
- les pages feuilles sont rangées par numéros dans le même ordre que les clés.

La définition de base de données indexée de type 'espace de tables' donnée ci-dessus restera valable pour la suite de l'exposé.

D'une façon générale la réorganisation unitaire d'une base de données (et de son index) consiste à décharger la base de données, à ranger ses lignes d'information dans un ordre souhaité, par exemple l'ordre alphabétique, puis à recharger les lignes une fois rangées dans la base de données en mettant à jour les index, si possible de façon réorganisée.

Exemple de réorganisation « hors-ligne » de bases de données indexées, notamment de type espace de tables :

Toujours à titre d'exemple non limitatif, on utilise pour la réorganisation unitaire des bases de données indexées structurée en lignes et notamment les bases de type espace de tables un mode de lecture (déchargement) et un mode de réorganisation permettant de réduire sensiblement le temps nécessaire à la lecture ordonnée de la base de données indexée (lecture et éventuelle mise en ordre continue ou discontinue) et/ou à la réorganisation de la base de données indexée.

En particulier on utilise de façon générale comme méthode de lecture de bases de données indexée dans laquelle les données apparaissent sous forme de lignes de données, la méthode **LEC/BD/REORG/BD**: comportant les opérations suivantes (voir figure 5A):

[101] - Lecture simultanée et séquentielle de l'index et de lignes de la base de données, BDD, avec le chargement des index dans une première mémoire tampon MX et le chargement des lignes dans une seconde mémoire tampon MT,

**[102]** · Lecture des index de la mémoire tampon MX vers mémoire tampon MT de façon ordonnée,

[103] · Recherche dans la mémoire MT de la présence d'une ligne dont l'identifiant est donné par la lecture ordonnée de l'index,

[103A] · Dans l'affirmative, extraction de la ligne vers un fichier de lignes ordonnées logiquement FT1,

**[103B]** · Dans la négative, vidange partielle de la mémoire tampon vers un fichier FT2 de lignes à trier avec élimination de la mémoire tampon MT d'au moins la page dont le numéro est le plus faible,

[104] · Poursuite de la lecture jusqu'à la fin de la base de données, les lignes restantes n'ayant pu être extraites de façon ordonnée étant dirigées vers le fichier FT2.

Appliquée à la réorganisation de la base de données, la méthode de lecture **LEC/BD/REORG/BD** permet, après le tri du fichier **FT2** pour donner **FT'2,** de combiner les deux fichiers ordonnés **FT1** et **FT'2** en un fichier virtuel **FTV** servant d'entrée à la phase de rechargement de la réorganisation de la base de données.

Il est à noter que par fichier virtuel on entend un fichier qui n'a pas d'existence réelle, car ce fichier est le produit théorique de la fusion virtuelle de deux de fichiers, mais qui peut être utilisé au rechargement comme un fichier réel dans la mesure où le programme de rechargement lit à la fois sur le fichier **FT1** et à la sortie **FT'2** du tri (elle-même un fichier virtuel généralement nommé « exit de tri ») et opère la fusion ligne à ligne au lieu de lire un seul fichier. L'expression fichier virtuel désigne plus généralement une entité sur laquelle on peut opérer les mêmes fonctions que sur un fichier séquentiel classique (ouverture, lecture ou écriture d'un enregistrement, fermeture) et qui du point de vue de ces fonctions se comporte exactement comme un fichier séquentiel classique.

Ainsi grâce à la génération, en continu et par simple extraction, d'un fichier intermédiaire de lignes ordonnées logiquement **FT1** pendant l'opération de lecture séquentielle, le nombre de lignes à trier présentes en en fin de parcours dans le fichier **FT2** est réduit de façon substantielle d'où un gain de temps sensible tant pour l'opération de lecture de la base de données que pour le traitement complet de la réorganisation de la base de données.

La méthode de lecture de bases de données **LEC/BD/REORG/BD** permet à partir d'une lecture de type séquentielle de la base de données d'obtenir un fichier virtuel ordonné des lignes de données tout en minimisant l'étape de tri effectuée sur un fichier intermédiaire partiel.

De façon analogue on utilise comme méthode de lecture d'index de bases de données indexée dans laquelle les données apparaissent sous forme de lignes de données, la méthode **LEC/IND/REORG/IND** comportant les opérations suivantes (voir figure 5B):

**[101X]** · Lecture séquentielle de l'index avec le chargement des index dans une mémoire tampon **MX,**

**[102X]** - Vérification de la position du couple clé/ligne de plus bas numéro d'ordre (clé/ligne **INF**) présent dans mémoire tampon **MX** par rapport à la position du dernier couple traité, en particulier si le numéro d'ordre du couple clé/ligne **INF** est supérieur au numéro d'ordre du dernier couple traité

**[103XA]** - Dans l'affirmative, extraction du couple clé/ligne **INF** vers un fichier de couples d'index logiquement ordonnés **FX1,**

**[103XB]** - Dans la négative, vidange partielle de la mémoire tampon **MX** vers un fichier **FX2** de couples à trier avec élimination de la mémoire tampon **MT** d'au moins le couple clé/ligne dont le numéro est le plus faible,

**[104X] .** Poursuite de la lecture jusqu'à la fin de la base de données, les couples clé/ligne restant n'ayant pu être extraits de façon ordonnée étant dirigés vers le fichier **FX2.**

Ainsi l'opération de lecture ordonnée de l'index, continue ou discontinue en l'absence de certaines valeurs de clé d'index, permet l'extraction directe d'un fichier d'index logiquement ordonné **FX1** et d'un fichier d'index à trier **FX2.** Après le tri du fichier **FX2** pour donner **FX'2,** les deux fichiers ordonnés **FX1** et **FX'2** sont fusionnés en un fichier virtuel **FXV** servant d'entrée à la phase de rechargement de la réorganisation de l'index.

Dans la pratique on arrive à constituer des fichiers **FT1** contenant plus de 90% des lignes lues. D'autre part la durée d'un tri est plus que proportionnelle à la quantité d'information en entrée, elle se trouve divisée par au moins 10. En ce qui concerne le temps de lecture, celui-ci reste bref car l'opération de lecture est réalisée de façon séquentielle et simultanée sur la base de données et sur l'index.

Selon un premier mode de mise en oeuvre de la méthode de lecture **LEC/BD/REORG/BD** et applicable à une base de données indexée de type 'espace de tables', le processus de lecture et de déchargement de l'index à l'aide la mémoire tampon **MX** est réalisé par la méthode **LEC/IND/REORG/TABLE** comportant les opérations suivantes (voir: figure 6A) :

**[201]** - Autant de fois que nécessaire jusqu'à avoir atteint la fin de l'index et vidé la mémoire tampon **MX,** lecture séquentielle des pages de l'index en ne conservant que les pages d'index contenant au moins une clé, jusqu'à remplir la mémoire tampon ou atteindre la fin de l'index ; cette lecture se faisant dans les emplacements non utilisés de la mémoire tampon ou contenant une page marquée invalide;

**[202]-** Recherche et remplacement des pages invalides dans la mémoire tampon de l'index à partir de la première page de la mémoire tampon **MX,**

**[206A]** · Vérification dans chaque page courante de la mémoire tampon :

- de l'absence d'au moins un couple clé-RID supérieur au dernier couple clé·RID traité en séquence logique (écrit dans le fichier index trié **FX1** ou envoyé en lecture d'espace de tables/base de données); ou
- de l'exactitude de l'expression $PXC \leq PXL - DMA$ où **PXC** représente le numéro dans l'index de la page courante de la mémoire tampon **MX, PXL** le numéro dans l'index de la dernière page d'index lue et **DMA** la différence maximale autorisée entre pages d'index en cours de lecture;

[206B] - Dans l'affirmative d'au moins une des deux propositions, invalidation de la page courante **PXC** et retour à l'opération [201] pour lecture d'une nouvelle page index en séquence;

**[203]** - Recherche de la page valide **PXmin** de la mémoire tampon **MX** qui contient la clé la plus basse **CLE INF** de toute la mémoire ou en cas d'égalité de clé, le RID correspondant le plus bas;

**[204] -** Traitement de la page **PXmin** en séquence logique comportant les opérations suivantes :

**[208A]-** Le cas échéant, lecture par ordre croissant de chacun des couples clé-RID de cette page **PXmin;**

**[208B] -** Envoi de chacun des RID de cette page **PXmin** dans l'ordre croissant des couples clé-RID vers le traitement de lecture de la base de données de type espace de tables;

**[204C] -** Invalidation de la page **PXmin** traitée et retour à l'opération [201] pour lecture d'une nouvelle page index en séquence.

On notera que l'opération **208B** constitue un déchargement simplifié d'index, dans lequel seuls les RID des pages extraites en séquences logiques sont transmis et utilisés pour la réorganisation de l'espace de tables.

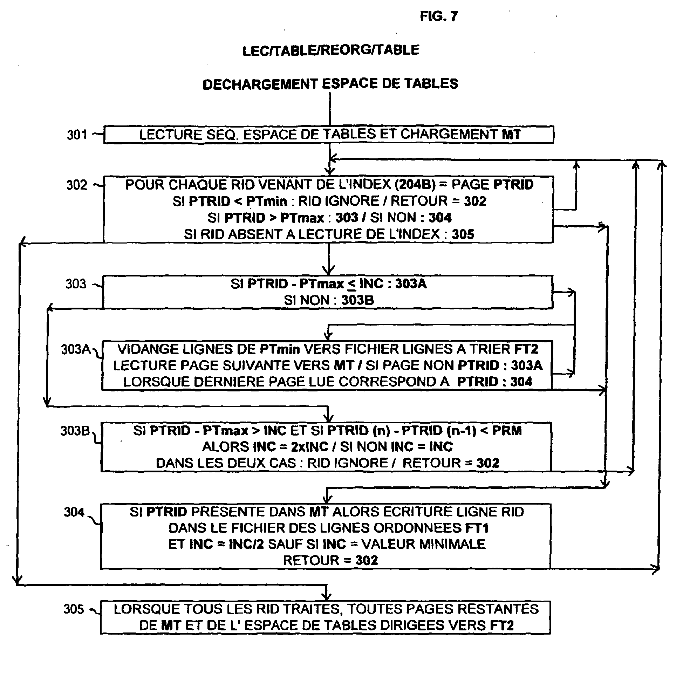

En particulier la méthode de lecture et de déchargement **LEC/TABLE/REORG/TABLE** de l'espace de tables à l'aide la mémoire tampon **MT** est réalisée par les opérations suivantes (voir figure 7):

**[301]** - Autant de fois que nécessaire jusqu'à avoir atteint la fin de l'espace de tables et vidé la mémoire tampon **MT,** lecture séquentielle des pages de l'espace de tables ou de la partition à partir du début en ne conservant que les pages de données contenant au moins une ligne, jusqu'à remplir la mémoire tampon **MT** ou atteindre la fin de l'espace de tables;

**[302]** - Pour chaque RID présent provenant de la lecture de l'index (voir opération 208B):

- si le RID désigne un numéro de page **PTRID** inférieur au minimum **PTmin** des numéros de pages dans la mémoire tampon **MT,** le RID est ignoré parce que la page déjà été traitée; retour au début de l'opération [302];
- si le RID désigne un numéro de page **PTRID** supérieur au maximum des numéros de pages **PTmax** dans la mémoire **MT,** la page n'a pas encore été lue et on effectue [303]; si non on effectue [304] ;
- si le RID est absent on effectue [305] ;

[303] - Si **PTRID - PTmax** ≤ INC, où l'incrément autorisé **INC** représente le nombre maximal de pages de l'espace de tables qui peuvent être lues pour retrouver un RID donné, on effectue [303A] autant de fois que nécessaire jusqu'à obtenir la page portant le numéro de RID ; à défaut on effectue [303B];

[303A]- Vidange du contenu de la page de la mémoire **MT** ayant le plus petit numéro de page **PTmin** en envoyant les lignes correspondantes dans le fichier tri-espace de tables **FT2;** lecture à l'emplacement de **Pmin,** de la page suivante à la page **PTmax** de la mémoire tampon **MT** et on recommence jusqu'à obtenir une page de données contenant au moins une ligne; lorsque la dernière page introduite dans la mémoire **MT** porte bien le numéro de RID, on effectue l'opération [304];

[303B]- Si PTRID - PTmax > INC, et

si **PTRID(n) - PTRID(n-1) < PRM,** où le 'paramètre de proximité' **PRM** représente l'écart maximal des numéros de pages de données que deux RID consécutifs provenant de la lecture d'index ne devraient pas dépasser, sauf en cas de trou dans la séquence, les deux pages **PTRID(n)** et **PTRID(n-1)** sont probablement voisines et on double la valeur de l'incrément autorisé **INC,** à défaut **INC** reste inchangé; dans les deux cas on ignore le RID avec un retour à l'opération [302] ;

[304]- Si le RID désigne une page **PTRID** présente dans la mémoire tampon **MT** (y compris après la lecture [303A]), il suffit pour cela que le numéro de page soit entre les bornes puisque que la mémoire tampon **MT** contient des pages non vides contiguës, on écrit la ligne correspondante sur le fichier des lignes ordonnées **FT1** et on divise l'incrément autorisé **INC** par 2, pour autant que le résultat ne soit pas en dessous de sa valeur minimale ; retour en [302]

[305] - une fois traité tous les RID disponibles, on vide vers le fichier **FT2** toutes les pages restantes de la mémoire tampon **MT** et éventuellement toutes les pages de l'espace de tables encore non lues.

La méthode de lecture et de déchargement ci-dessus **LEC/TABLE/REORG/TABLE** est appliquée de la façon suivante pour la réorganisation des bases de données indexées de type espace de tables.

En particulier on utilise comme méthode de réorganisation unitaire d'une base de données indexée organisée en espace de tables, la méthode **REORG/TABLE** comportant les opérations suivantes (voir figure 8A):

[401] - Lecture séquentielle et simultanée du contenu de l'index et du contenu de l'espace de tables et création des fichiers de lignes de données **FT1** et **FT2;**

[402]-Si nécessaire, tri du fichier **FT2** par ordre de clé primaire croissante et éventuellement par ordre de table croissante s'il y a plusieurs tables;

[403] - Fusion virtuelle des fichiers de lignes **FT1** et **FT'2**;

[404]- Rechargement du ou des fichiers contenant l'espace de tables avec les lignes ainsi ordonnées ou triées en respectant les paramètres d'espace libre ;

[405] - Rechargement de l'index primaire de chaque table dans le même ordre en prenant en compte le nouvel emplacement (RID) de chaque ligne;

[406] - Mise à jour des autres index soit en modifiant les RID soit en les rechargeant après tri des informations de clé et de RID.

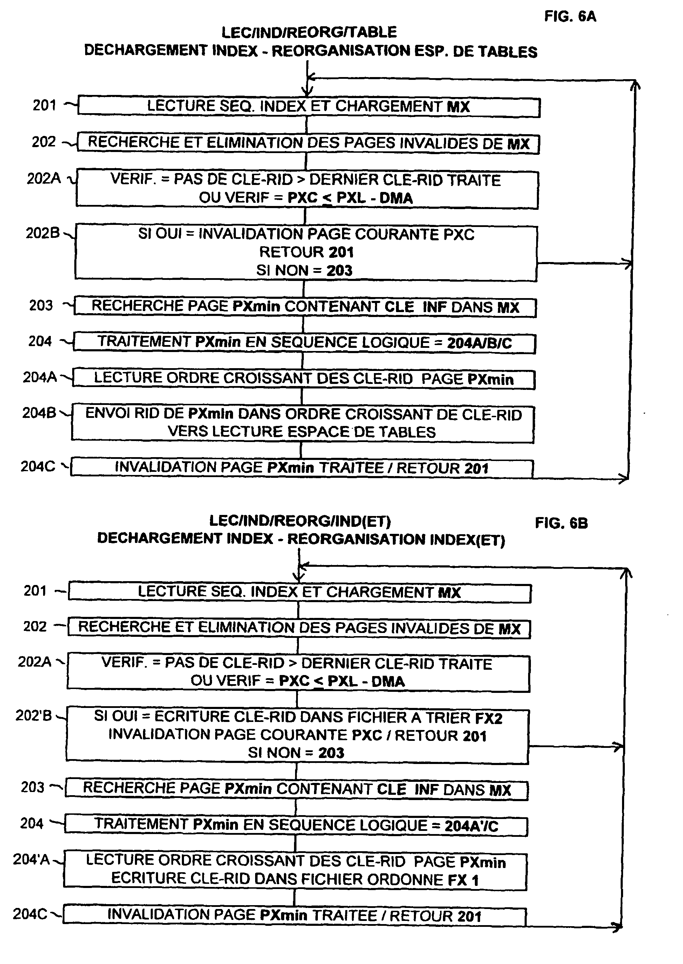

En ce qui concerne la réorganisation de l'index ou d'une partition d'index de la base de données indexée, celle-ci est susceptible, entre autres, de mettre en oeuvre (en variante de la méthode de lecture et de déchargement d'index illustrée à la figure 6A) la méthode de lecture et déchargement d'index de base de données indexée de type espace de tables à l'aide la mémoire tampon **MX** et réalisée par la méthode **LEC/IND/REORG/IND(ET)** comportant les opérations suivantes (voir figure 6B) :

[201] - Autant de fois que nécessaire jusqu'à avoir atteint la fin de l'index et vidé la mémoire tampon **MX,** lecture séquentielle des pages de l'index en ne conservant que les pages d'index contenant au moins une clé, jusqu'à remplir la mémoire tampon ou atteindre la fin de l'index ; cette lecture se faisant dans les emplacements non utilisés de la mémoire tampon ou contenant une page marquée invalide;

[202]- Recherche et remplacement des pages invalides dans la mémoire tampon de l'index à partir de la première page de la mémoire tampon **MX,**

[206A] - Vérification dans chaque page courante de la mémoire tampon :

- de l'absence d'au moins un couple clé-RID supérieur au dernier couple clé-RID traité en séquence logique (écrit dans le fichier index trié **FX1** ou envoyé en lecture d'espace de tables/base de données); ou
- de l'exactitude de l'expression **PXC** $\leq$ **PXL- DMA** où **PXC** représente le numéro dans l'index de la page courante de la mémoire tampon **MX, PXL** le numéro dans l'index de la dernière page d'index lue et **DMA** la différence maximale autorisée entre pages d'index en cours de lecture;

(202'B) - Dans l'affirmative d'au moins une des deux propositions, écriture des couples clés - RID dans le fichier tri-index **FX2**, invalidation de la page courante **PXC** et retour à l'opération (201) pour lecture d'une nouvelle page index en séquence; à défaut on exécute (203) ;

[203] - Recherche de la page valide **PXmin** de la mémoire tampon **MX** qui contient la clé la plus basse de toute la mémoire **MX** ou en cas d'égalité de clé, le RID correspondant le plus bas;

[204] - Traitement de la page **PXmin** en séquence logique comportant les opérations suivantes :

[204'A] - Lecture par ordre croissant de chacun des couples clé-RID de cette page **PXmin** et écriture directe de ces couples clé·RID dans le fichier index ordonné **FX1;**

[204C] - Invalidation de la page **PXmin** traitée et retour à l'opération (201) pour lecture d'une nouvelle page index en séquence.

Ainsi le déchargement de l'index selon cette dernière méthode conduit à la création d'un fichier virtuel **FXV** ordonné des couples clé-RID et la méthode **REORG/IND(ET)** de réorganisation de l'index de la base de données indexée et organisée en espace de tables comporte alors les opérations suivantes (voir figure 8B):

[401X] - Lecture du contenu de l'index et création des fichiers de couples clé·RID **FX1** et **FX2;**

[402X]- Si nécessaire, tri du fichier **FX2** par ordre de couples clé-RID croissants pour donner **FX'2;**

[403X]- Fusion virtuelle des fichiers **FX1** et **FX'2;**

[404X] - Rechargement du ou des fichiers contenant l'index avec les couples clé·RID ainsi ordonnés ou triés en respectant les paramètres d'espace libre.

Il est à remarquer que l'absence de l'opération de tri [402] et/ou [402X] résulte du fait que la lecture des lignes de l'espace de tables et/ou des pages d'index a pu être faite directement dans l'ordre, ce qui advient lorsque la base de données n'est pas trop désorganisée.

Ainsi l'utilisation de la lecture séquentielle qui permet de lire un grand nombre de pages en une seule opération (les unités de disques du système possédant une fonction de lecture en masse de blocs contigus) accélère de façon significative les opérations de réorganisation unitaires des bases de données indexées, notamment les bases de données indexées de type espace de tables.

Il est à noter pour terminer ce point de réorganisation unitaire que si les deux méthodes de réorganisation de la base de données **REORG/TABLE** et de réorganisation de l'index **REORG/IND(ET)** peuvent être mises en oeuvre conjointement, il apparaît qu'en pratique ces deux méthodes sont codées séparément et mises en oeuvre comme des coroutines. Cette caractéristique est importante car elle donne plus de souplesse dans la préparation des plannings de réorganisation de l'ensemble des bases de données indexées notamment de type espace de table.

Après avoir présenté les grandes lignes de la réorganisation unitaire des bases de données indexées structurées en espaces de tables et de leurs index, il importe de revenir à la stratégie globale de la réorganisation de I ensemble des bases de données du système d'information.

La gestion des réorganisations « en ligne »

La Stratégie

La stratégie globale intègre les réorganisations « en ligne » et « hors ligne ». Pour chaque objet du système informatique d'information on détermine le seuil de désorganisation à partir duquel une réorganisation « en ligne » est rentable. Si ce seuil est atteint sans qu'il est été possible de réorganiser l'objet « hors ligne » (manque de disponibilité dans la fenêtre « batch ») la réorganisation « en ligne » est lancée dès que l'activité de mise à jour est suffisamment faible pour que cette réorganisation soit valable, Cette réorganisation « en ligne » se fait en une seule opération sur une copie de l'objet en service. Les mises à jour éventuelles apparues pendant l'opération de réorganisation sont sauvegardées sur un fichier intermédiaire traité en fin de réorganisation (les pages modifiées étant repérées par l'heure de la modification), le processus étant répété pour les nouvelles mises à jour éventuelles jusqu'à épuisement. L'objet (la base de données) une fois réorganisé et mis à jour peut alors être remis en service.

En ce qui concerne les espaces de tables, c'est l'utilisation des parcours séquentiels d'index (en anglais index scans) par l'index primaire (index déterminant le critère de tri de la réorganisation) qui détermine la réorganisation des espaces de tables. En effet un espace de tables utilisé seulement en accès direct n'a pas besoin d'être réorganisé car les cartographies d'espace (en anglais space maps), seules utilisées pour déterminer la possibilité d'une insertion, sont suffisamment peu nombreuses pour être conserver dans le parc de mémoires tampons (en anglais buffer pool).

En ce qui concerne les index, l'accès direct (par pointeurs verticaux) à l'index est utilisé aussi bien en lecture qu'en mise à jour (c.à.d. modification du champ de données sauf indication contraire). Son temps d'Entrée/Sortie est déterminé par le fait que les pages représentent les deux derniers niveaux et qui dans la plus part du temps doivent être lues physiquement, sont ou non proches l'une de l'autre sur le disque. C'est le temps de positionnement pour la lecture de la page « feuille » qui détermine la différence entre un index bien ou mal organisé.

Le parcours séquentiel (« index scan » utilisant des pointeurs horizontaux) ne représente qu'un coût marginal par rapport à la lecture concomitante de l'espace des tables, tout en ayant le même critère de performance que l'accès direct puisque si deux pages sont proches d'une troisième elles sont relativement proches l'une de l'autre. Le parcours séquentiel n'intervient donc pas dans la détermination de la nécessité d'une réorganisation.

Les Données utilisées

Il résulte de ce qui précède que les données à prendre en compte sont celles qui influent sur les performances des applications et sur le coût en termes de ressource de la réorganisation. Ces données sont de deux ordres ayant leurs origines soit dans les caractéristiques de l'objet à réorganiser, soit dans les caractéristiques des unités du système d'information (traitement et utilitaires):

i) les caractéristiques de l'objet à prendre en compte sont celles de déterminent le volume est l'état de l'objet :

**S** = le nombre de **CI** (bloc physique ou page) de 4 Ko de l'objet, index compris en cas d'espace de table,
**NTL** = le nombre total de lignes (RID si index), ou le nombre moyen par **CI,**
**D=** le taux de désorganisation, c'est à dire :

Pour un espace de tables :

**DT** = le pourcentage de lignes situées loin de la page qui contenait à l'origine la clé précédente au sens de l'index primaire ;

Pour un index :

**DI** = le pourcentage de pages feuilles situées loin de la page non feuille qui pointe dessus.

Pour calculer le nombre de lignes ou de RID on divise la taille utile du CI multiplié par le taux de remplissage estimé, par la taille typique de l'entrée.

- La taille utile d'un CI est voisine de 4 K pour un espace de tables et dépend de type de l'index et du nombre de sous pages et de la longueur des clés pour un index de type 1.
- Le taux de remplissage estimé de 0,85 pour un espace de tables et de 0,75 pour un index.
- La taille typique est la moyenne géométrique (racine nième du produit de n nombres) entre la taille maximum et la taille minimum **(tmg$^2$=tmax.tmin).** Pour un index multiple la taille du RID est le minimum, la taille d'une entrée unique le maximum. Pour un espace de tables ajouter 8 (préfixe + ID) à la taille de la ligne (à diviser par 3 en cas de compression).

ii) Les caractéristiques des unités à prendre en compte sont celles qui influent sur le temps d'Entrée/Sortie des traitements et utilitaires :

- le temps de positionnement moyen **Ts;**
- le temps de latence **Tl,** c'est çà dire le temps nécessaire pour faire un ½ tour ;
- le nombre de blocs de 4K par piste de mémoire sur disque.

Est également à prendre en compte le profil applicatif (c'est à le nombre moyen d'un événement de l'application par unité de temps, par exemple l'heure).

Pour un espace de tables, l'information utilisée sera le nombre moyen de lignes lues par « index scan » (parcours séquentiel de l'index) par heure. En fait remarquer qu'il n'est réellement utile de réorganiser un espace de tables que s'il y a des lectures en « index scans ».

Enfin on s'intéresse à la charge instantanée lorsque l'on cherche à déterminer l'opportunité de lancer une réorganisation « en ligne » à un instant donné. Jusqu'à présent on utilise le nombre moyen de mise à jour par objet et par heure. Il serait opportun de travailler sur des prévisions à court terme de cette charge en utilisant des profils de journée d'exploitation.

Le Coût de la réorganisation :

Le coût d'une réorganisation en ligne, exprimé en temps d'Entré/Sortie est donné par la formule **F1** suivante :

$$C = S.(c + d.D) / (1 - e.q.U)$$

dans laquelle :

**S** est le nombre de pages ou taille de l'objet, index inclus ;

**D** est le taux de désorganisation ;

**c,d,e** sont des constantes de la machine (système informatique) ;

**q = 1** si l'objet est un index,

sinon **q = nombre d'index +1 ;**

**U** est la moyenne horaire du nombre de mises à jour sur l'objet, les mises à jour étant pour l'essentiel des modifications de champs dans des lignes existantes (sans véritable effet de désorganisation).

On notera que la durée d'une réorganisation en ligne peut être très longue (plusieurs heures pour une première phase de réorganisation en continu de durée to) entraînant la mise en mémoire provisoire, pendant la première phase de réorganisation, d'un premier paquet des mises à jour de l'objet. A la fin de cette première phase de durée to (temps passé de réorganisation Tr=to) intervient une deuxième phase de la réorganisation plus courte (t1 < to) que la première pour traiter ces premières mises à jour, d'où l'apparition en fin de deuxième phase (avec Tr=to+t1) d'un second paquet de mises à jour plus petit que le premier, et ainsi de suite jusqu'à extinction des mises jour. Il en résulte que le temps total final de la réorganisation en ligne Tf fait intervenir un facteur k <1 fonction de U moyenne horaire du nombre de mises à jour sur l'objet.

Au départ de la réorganisation **Tr** = 0

Pour **Tr=to, C= Co = S.(c+d.D)**

Pour Tr=to + t1, C= Co + k.Co = Co.(1+k) où k < 1

Pour Tr=to +t1+ t2, C= Co + k.Co + k.k.Co = Co.(1+k+k$^2$)

**Finalement en fin de réorganisation Tr = Tf, avec:**

$$Tr=Tf=to+ .. + tn + , C= Co + k.Co + k^2.Co + .. +k^n.Co+$$

$$\text{Soit un coût final } C= Co.(1+k+k^2+ ...+k^{n}+.)= Co/ (1 - k)$$

où l'on retrouve la formule **F1** si l'on pose **k= e.q.U**

De la formule **F1** on tire le coût moyen horaire de réorganisation si **t** représente le nombre d'heures séparant deux réorganisations :

$$Cm = [S.(c + d.D) / (1 - e.q.U)] / t \text{ soit } F1'$$

Le Coût de ne pas réorganiser :

Le surcoût de ne pas réorganiser par heure de traitement vaut : **C\* = Co\*.D, où Co\*** est le surcoût horaire quand l'objet est totalement désorganisé.

D'une façon générale on considère que la désorganisation d'une base de données de type espace de tables résulte, quasi exclusivement des insertions de données dans la base (nouvelles lignes créées), soit :

$$D = i/S.r,$$

où

$i$ désigne le nombre d'insertions depuis la dernière réorganisation,
$S$ désigne la taille de l'objet entier en pages,
$r$ est le nombre moyen de lignes par page de l'entier,

Si l'on suppose le taux horaire d'insertion constant = 1

$$D = I.t/S.r => C^* = Co^*.I.t/S.r$$

où

$I$ désigne le nombre d'insertions à l'heure, et
$t$ le temps écoulé depuis la dernière réorganisation.

Le surcoût de ne pas avoir réorganisé depuis t heures est $G = $ **Somme de** $Co^*.I.t.dt /S.r = \frac{1}{2} Co^*.I.t^2/S.r$ soit

$$G = \tfrac{1}{2} Co^*.D.t$$

où **Somme de** désigne le signe mathématique de la fonction intégrale
Le surcoût moyen horaire de ne pas avoir réorganiser vaut donc : $Cm^* = \frac{1}{2} .Co^*.D$ formule **F2**

Le moment optimal de la réorganisation :

Le coût moyen horaire total de la non réorganisation vaut :$Cmt = Cm + Cm^*$ Il importe de réorganiser lorsque $Cmt = Cm + Cm^*$ est minimal. Or

$$Cm = [S.(c + d.D) / (1 - e.q.U)] / t \text{ soit avec } S = I.t/D$$

$$Cm = I.(c + d.D) / (1 - e.q.U).r.D \text{ formule } F1"$$

$$Cmt = Cm + Cm^* = \tfrac{1}{2}.Co^*.D+[I.(c + d.D) / (1 - e.q.U).r.D]$$

soit la formule **F3**
Cette fonction du type $a.x + b + c/x$ passe par un minimum lorsque $a -(c/x^2)= 0$ soit $x^2 = c/a,$ d'où pour la valeur de seuil **Ds** solution de l'équation suivante :

$$Ds^2 = 2 I.c / (1 - e.q.U) r Co^* \quad \text{formule } F4$$

Alternativement on montre que la fonction $Cmt=Cm+Cm^*$ admet un minimum lorsque les termes en **D** et en **1/D** sont égaux $(a.x = c/x),$ soit : $I.C / [(1- e.q.U).r.D] = \frac{1}{2} .Co^*. D$
D'où on retrouve la formule **F4.**
Il y a lieu de réorganiser lorsque $D^2$ dépasse cette valeur $Ds^2$, soit quand :

$$D^2 > 2 I.c / (1 - e.q.U) r Co^*$$

ou, sous une autre forme, quand

$$R' = D^2 \text{ r Co*.}(1 - e.q.U) \text{ / 2.l.c} > 1$$

Ou quand **R' = R (1 - e.q.U) >1 avec**

$$R = D^2 \text{ r Co* / 2.l.c ,}$$

soit la formule **F5**.

Sachant que **e.q.U** doit être le plus faible possible, la réorganisation en ligne interviendra pendant que **U** (moyenne horaire du nombre de mise à jour sur l'objet) est faible à partir du moment où **R >1.**

Ainsi le taux de seuil Ds est donné par la formule **F5'** suivante: $R = Ds^2 \text{ r Co* /2.l.c} = 1$

**i) Cas de l'Index**

Si l'objet est un Index, chaque insertion coûte n lectures et **1** écriture si **n** est le nombre de niveaux d'index et chaque relecture coûte **n** lectures. En supposant 3 niveaux d'index le temps d'accès correspondant aux deux derniers niveaux sera :

- **Ts + 2. Tl,** si l'index est réorganisé
- **2Ts + 2 Tl,** si l'index est désorganisé

**Ts** désignant le temps de déplacement de bras, **Tl** le temps de latence (1/2 tour du bras). En cas d'index désorganisé le surcoût en temps d'accès par transaction est de **Ts.**

Si **t\*** est le taux de relecture de l'objet, c'est à dire le nombre moyen de fois qu'une entrée sera relue. Il est alors possible de connaître le nombre de transactions en fonction de I (nombre d'insertions à l'heure) soit : **(t\*+ 1) I**.

Il en résulte que le surcoût horaire à ne pas réorganiser quand l'objet est totalement désorganisé **Co\* est Co\* = (t\*+ 1) I.Ts** formule **F6**

On peut évaluer c (temps d'accès en E/S par la taille) en supposant dans le cas le plus défavorable que l'utilitaire de réorganisation « en ligne » lit une piste à la fois puis perd son positionnement, donc en négligeant les écritures.

$$c=(Ts + 3Tl)/Nbp$$

où **Nbp** est le nombre de pages de l'objet.

En posant **Ts/T1 = V** qui est une caractéristique de l'unité de traitement on obtient

$$R= D^2 \text{ r (t*+1)Nbp.V / [2(V+3)] formule F7}$$

Ainsi le taux de seuil pour l'index **Dsl** est donné par la formule **F7'** suivante : **R=**

$$Dsl^2 \text{ r (t*+1)Nbp.V / [2(V+3)] = 1}$$

A titre d'exemple numérique non limitatif, on choisit ;

    **r=** 200 (clé de longueur 10 octets)
    **Nbp :** 12 (3390)
    V = 1.76 (3390-2)
    t\* = 1 (une seule relecture)

**On obtient R = $D^2$ 200.2.12.1,76/ 2.4,76 = $D^2$ 8400/9,52 soit**

$$R = 887.D^2$$

Il y aura lieu de réorganiser à partir de R > 1 **(lorsque le taux U peut être considéré comme négligeable),** soit pour $D^2 > 1/887$ ou D > 0,0335, soit à partir d'un taux de seuil de désorganisation de l'index **Ds = 3,35 %.**

### ii) Cas de l'espace de tables

Si l'objet est un espace de tables, une lecture séquentielle d'index (index scan) engendrera un surcoût de désorganisation par ligne déplacée de Ts + TI.
Il en résulte un coût de désorganisation

$$Co^* = L.I.(Ts + TI)$$

où L est la proportion des lignes accédées par index scan par rapport aux lignes créées.
Par ailleurs du fait que les index sont réorganisés simultanément, il faut tenir compte du coût associé aux accès directs à travers ces index,
soit $Co^*i = (t^*i + 1).li.Ts$
d'où le coût total moyen horaire à ne pas désorganiser

$$Cm^* = \frac{1}{2}.L.I.D.(Ts+TI) + \frac{1}{2}[S\ Co^*i.Di^2./D^2].D$$

Soit

$$Cm^* = \frac{1}{2}.L.I.D.(Ts+TI) + \frac{1}{2}\ Ts.\ S\ li.Di^2.(t^*i + 1)/D$$

formule **F9**
Il est à noter :

· que li = I dans le cas d'un espace de table monotable;
- que dans le cas général on peut supposer que **li = ki.I** où **ki** désigne le cardinal relatif de la table associée à l'index i (et représentatif de la dimension relative de cette table). Cela revient à ignorer les mises à jour entraînant une modification de clé et à supposer que les tables ont des durées moyennes de vie de lignes comparables.
- que les **t*i** représentent le taux d'accès direct au travers de chaque index donc que, pour une table donnée, **S t*i** représente le coût d'accès à cette table.

Supposons certaines réorganisations d'index faites, dans chaque intervalle ne contenant pas de réorganisation d'index, Di est une fonction linéaire du nombre d'insertions I donc de D.

$$Di = ai.D - bi,\ \text{où}\ ai = li.S.r\ /\ (I.Si.ri) = ki\ /\ ki = 1$$

d'où **Di = D-bi**

$$Cm^* = \frac{1}{2}.L.I.D.(Ts+TI) + \frac{1}{2}\ Ts.\ S\ li.(D-bi)^2.(t^*i + 1)/D$$

$$Cm^* = \frac{1}{2}.L.I.D.(Ts+TI) + \frac{1}{2}\ Ts.\ S\ li.D.(t^*i + 1)$$

$$- Ts.\ S\ li.bi.(t^*i + 1) + \frac{1}{2}\ S.\ li.bi^2.(t^*i + 1)/D$$

avec **Cm = I.(c + d.D) / (1- e.q.U).r.D** (coût moyen horaire pour réorganiser l'objet)

De façon analogue à ce qui a déjà été présenté ci-avant la fonction **Cmt = Cm + Cm\*** admet un minimum local lorsque les termes en **D** et en **1/D** sont égaux soit :

$$D^2.[L.l.(Ts+Tl)+Ts. S \ li.(t^*i + 1)]=2l.c/(1 - e.q.U).r + Ts. S \ li. D^2.(t^*i + 1)$$

$$D^2.L.l.(Ts+Tl)+Ts. S \ li(D^2-bi^2)(t^*i +1)=2l.c/(1-e.q.U).r$$

En utilisant comme ci-devant **c = (Ts + 3.Tl) / Nbp** et en substituant bi = D - Di on obtient

$$R=r.Nbp[D^2.L \ (V+1) + V. S \ ki(2DDi-Di^2) \ (t^*i+1)]/ (2V+6)$$
**Formule F12**

Ou

$$R= r.Nbp[D^2.L \ (V+1) + V. S \ ki(D^2-bi^2) \ (t^*i+1)]/ (2V+6)$$
**Formule 12'**

Pour une base de données monotable on a **ki= 1**, la formule devient

$$R= r.Nbp[D^2.L \ (V+1) + V. S \ (D^2-bi^2) \ (t^*i+1)]/ (2V+6)$$
**Formule F13**

Ainsi le taux de seuil **DsT** est donné par la formule **F13'** suivante: **F13'** suivante :

$$R=r.Nbp[DsT^2.L \ (V+1) + V. S \ (DsT^2-bi^2) \ (t^*i+1)] /(2V+6) = 1$$

A titre d'exemple numérique non limitatif, on choisit pour un espace de table monotable à 2 index:

r= 15 (ligne de longueur 200 octets ; index 15% de la taille de l'espace de table)
Nbp : 12 (3390)
V = 1,76 (3390-2)
L = 5 (chaque ligne fait l'objet de 5 parcours séquentiels dans sa vie)
r1 = 200 (clé de longueur 10 octets)
r2 = 230 (clé de longueur 8 octets)
t\*1 = 1 (une relecture directe)
t\*2 = 2 (2 relectures directes)

En procédant comme présenté ci-avant, il apparaît que le premier index **I1 (R1 = 887.DI1$^2$)** doit être réorganisé à partir de **DsI1= 0,0355 = 3,35%** et que le second index **I2 (R2 = 1531.DI2$^2$)** doit être réorganisé à partir de **DsI2 = 0.0255 = 2,55%**.
La base de données étant monotable on a **ki= 1.** La formule F12' se simplifie pour s'écrire :

$$R= (15.12)/(2.(4,76))[(D^2.5.(2,76))+ (1,76.2(D^2-b1^2)) + (1,76.3(D^2-b2^2)) \ \text{soit}$$

$$R=180/9,52 \ [(13,8.D^2 + 3,52.D^2 + 5,28.D^2) - (3,52.b1^2 + 5,28.b2^2)]$$

Soit $R=[427.DsT^2 - 66,5.b1^2 - 100.b2^2]/10.000 = 1$, formule **F14,** si les valeurs **DsT, b1** et **b2** sont directement **exprimées en % (pourcent).**

Il est clair de la formule **F14** que la valeur de seuil de réorganisation de l'espace de table **DsT** sera supérieure à la limite Dinf solution de l'équation

$$Dinf^2 = 10.000/427 = 23,4 \text{ , soit } Dinf = 4,8 \%.$$

Après une réorganisation de l'espace de table et de ses deux index, tous les taux de désorganisation sont à zéro avec **DT = DI1 = DI2= 0.**

La première réorganisation d'indexinterviendra pour **Dsl2 = 2,55%** (à un instant où la base de données et le premier index auront le même taux DT = **DI1= 2,55%** (**< Dinf**), les taux étant proportionnels aux nombres d'insertion de nouvelles lignes (ou RID pour les index).

La seconde réorganisation d'index interviendra pour **Dsl1 = 3,35%** (à un instant où la base de données aura le même taux **DT = 3,35% (< Dinf)).**

En supposant pour simplifier que les index puissent être réorganisés dès que le taux ou seul limite est atteint, on peut examiner chaque intervalle défini entre deux réorganisations successives d'index et calculer par la formule F13 la valeur dans cet intervalle du taux limite pour l'espace de table (les valeurs de **b1** et de **b2** étant données par **la valeur instantanée de la désorganisation de l'espace table Ds lors des deux dernières réorganisations d'index) et vérifier que cette valeur limite appartient bien à l'intervalle considéré ;** à défaut l'intervalle considéré et la valeur limite calculée ne seront pas retenus.

On étudiera donc la suite d'intervalles suivante :

$$[0:Dsl2],[Dsl2:Dsl1],[Dsl1:2.Dsl2],[2.Dsl2:2.Dsl1],$$

etc

où 2.Dsl2 et 2.Dsl1 correspondent respectivement à la seconde réorganisation du second et du premier index.

En introduisant les valeurs numériques la suite d'intervalles peut s'écrire :

$$[0:2,55],[2,55:3,35],[3,35:5.1],[5,1:6,7],$$

etc

Compte tenu de la valeur de **Dinf=4,8%,** il y a lieu d'étudier l'éventualité d'une réorganisation de l'espace table dans l'intervalle **[3,35:5,1], avec b1= 3,35 et b2=2,55 (valeur de Ds lors de des deux premières réorganisation d'index - première de I1 et première de I2)**

De la formule **F14,** on obtient **DsT²=11380/487 =26,5 et DsT= 5,15%**

Cette valeur n'est pas acceptable car elle se situe en dehors de l'intervalle considéré. Il en résulte que la réorganisation de l'espace table ne pourra intervenir qu'après la seconde réorganisation du second index **I** pour laquelle **DsT** prendra la valeur **2x 2,55= 5,1.**

En reprenant cette procédure pour l'intervalle **[5,1:6,7], avec b1= 3,35 et b2= 5,1,** obtient **DsT²=13231/487= 31 et DsT= 5,56%.**

Si on prend **U=0** la réorganisation de l'espace table et de ses deux index est souhaitable à partir d'un taux de désorganisation de **5,56%** survenant dans l'intervalle considéré à un instant précédant bien la seconde réorganisation du premier index.

Il est à noter en variante qu'il est intéressant d'appliquer également le critère de **rentabilité** présenté ci-avant à la réorganisation « hors ligne » (hl) dans la mesure où des données existent. Pour ce faire, il y a lieu de remplacer dans la formule **F1** le coefficient c(el) (temps d'Entré/Sortie en fonction de la taille de l'objet) par un coefficient correspondant à la réorganisation « hors ligne », par exemple du type c(hl) = K.c(el) où K = Rapport du temps d'exécution de la réorganisation (hl) de l'objet sur le temps d'exécution de la réorganisation (el) du même objet dans des conditions moyennes d'exploitation de la base de données indexée de type espace de table correspondante.

Il est ainsi possible de déterminer si une réorganisation « hors ligne » est ou non utile. Les priorités existantes basées sur les taux de désorganisation sont également remplacées par des priorités basées sur la rentabilité, un objet plus lu qu'un autre étant prioritaire pour la réorganisation à taux égal de désorganisation.

La gestion globale des réorganisations et copies « hors ligne » :

La réorganisation d'un fichier « hors ligne » est consommatrice de temps machine qu'il est en général souhaitable de minimiser pour réduire le coût total de l'opération.

Pour ce faire l'invention propose également une méthode de gestion ou d'ordonnancement préparée d'avance de l'exécution en temps réel de programmes utilitaires de réorganisation (et/ou d'images copie) de manière à utiliser au mieux les ressources du système informatique d'information dont la fenêtre « batch » (fenêtre de maintenance).

La réussite et l'efficacité d'une telle méthode repose sur la rapidité que ce soit la rapidité à préparer et à mettre à jour un plan d'activité ou planning des tâches à exécuter et/ou la rapidité à lancer l'exécution des programmes présélectionnés.

Avant d'exposer la méthode de gestion ou d'ordonnancement selon l'invention, il importe de présenter brièvement l'organisation et le fonctionnement d'un système informatique d'information comportant un ensemble de fichiers ou bases de données indexées répartis en divers objets réels constitués d'espace de tables, de partitions d'espaces de tables et d'index.

Le système d'information :

Les capacités « machine » du système d'information sont divisées en régions de traitement distinctes pilotées de façon unitaire par une région de contrôle. A chaque région de traitement sont affectées un certain nombre de tâches ordonnées et sont allouées les ressources nécessaires en mémoires virtuelles et périphériques (disques durs, imprimantes, mémoires sur supports externes etc...). Par souci d'efficacité en exécution et en allocation de ressources matérielles et/ou logicielles on affecte si possible à chaque région de traitement des taches de même type, telles que par exemple pour des tâches généralement exécutables dans la fenêtre « batch » des réorganisations de fichiers ou bases de données (demandant beaucoup d'espace de disque) ou des copies images de fichiers (demandant des périphériques de sortie externe, lecteurs de bandes magnétiques, lecteurs/graveurs de CD-ROM, etc...).

A côté des réorganisations de fichiers tels que bases de données, la prise de copies des fichiers modifiés constitue un impératif de sécurité dans le domaine de l'exploitation de systèmes informatiques. On distingue généralement trois types de copie, la copie en continue ou copie « journal » (en anglais « log »), la copie incrémentale qui ne prend que les modifications apportées aux fichiers et la copie totale ou copie image.

En ce qui concerne les bases de données, les systèmes d'exploitation comportent assez souvent un dispositif logiciel de verrouillage interdisant la remise en service de la base de donnée avant la prise d'une copie image. Ceci crée une interaction entre les plannings de réorganisation et de copie.

Les plannings

Les plannings de réorganisation et de copie s'effectuent à partir de listes de priorités d'objets à réorganiser ou à copier qui seront traitées dans des régions de traitement différentes réservées soit à la réorganisation soit à la copie.

La méthode d'ordonnancement consiste à générer à l'avance les objets réels susceptibles de réorganisation au lieu de faire des combinaisons d'objets en temps réel. Le nombre d'objets en est plus grand pour les objets partitionnés, mais les priorités et par conséquent l'ordre logique d'enchaînement des réorganisations sont calculés initialement et rarement mis en cause.

De ce fait les objets à réorganiser peuvent être chaînés par priorité décroissante, même si certains sont mutuellement exclusifs.

La copie utilise d'autres régions et peut travailler sur les objets élémentaires. La liste des objets à copier est donc distincte de celle des objets à réorganiser avec un lien éventuel pour établir si un objet à copier est aussi à réorganiser ou fait partie d'un objet à réorganiser.

Le processus d'ordonnancement ou de création de plannings peut se résumer de la façon suivante que se soit pour les copies ou les réorganisations :

- détermination ou présélection des objets à traiter en **priorité** par la réalisation d'un **planning rapide**.
- tentative de création d'une liste d'ordre d'exécution des traitements par placements en « retro-planning » des objets présélectionnés par priorités croissantes dans des régions de traitements disponibles, ce qui permet de s'assurer de l'heure maximum de démarrage d'un traitement. Ainsi le dernier objet sélectionné dans une région avec réussite pour compléter la liste devient **le prochain objet à traiter POC ou POR**. A défaut une nouvelle tentative de création de liste sera effectuée sur d'autres hypothèses de placements ou d'affectations de régions de traitement.

Ce processus est renouvelé à chaque fin de traitement correspondant (copie ou réorganisation) en tenant compte de l'état réel des objets à cet instant.

L'intérêt de l'opération de « retro-planning » ou planning inversé est de permettre à des gros objets non nécessairement prioritaires d'être traités avant qu'il ne soit trop tard (le temps de traitement encore disponible dans la fenêtre « batch » des régions de traitements libres devenant insuffisant).

Dans la réalité, les temps d'exécution sont variables et il y a lieu de prendre une marge de sécurité concernant les temps d'exécution (Kc = 1,20 pour les copies et Kr = 1,50 pour la réorganisation).

En pratique chaque fois d'une région destinée à la réorganisation devient libre, l'algorithme de planning de réorganisation recherche l'objet réel dont la priorité est maximale (planning rapide), le présélectionne et poursuit les tentatives d'affectations sur le même principe en examinant les conséquences sur sa sélection initiale (premier objet à réorganiser). En particulier :

- si l'objet en phase d'affectation est une partition contiguë à une partition d'un même espace de table déjà sélectionnée en premier, cette nouvelle partition sera ajoutée à la sélection initiale à titre d'objets liés dans la mesure où le nombre maximum de partitions sélectionnées pour être traitées ensemble n'a pas encore été atteint (toutes les partitions contiguës sélectionnées seront réorganisées en même temps) ;
- si l'objet en phase d'affectation est l'espace de table dont l'objet de la sélection initiale est un index, l'espace de table (et ses index) remplacera l'index de la sélection initiale et les éventuelles sélections des autres index seront annulés (les index d'un espace de table sont toujours réorganisés avec celui-ci).

Le processus sera partiellement réexécuté à chaque modification de l'objet sélectionné en premier (sélection initiale). De ce fait si de nombreux espaces tables du système d'information sont partitionnés, le nombre de remise en cause peut devenir important.

De façon analogue chaque fois d'une région destinée à la copie devient libre, l'algorithme de planning de copie recherche l'objet élémentaire dont la priorité est maximale (planning rapide), et refait un planning de réorganisation pour vérifier si cet objet est prévu ou non pour une réorganisation dans la fenêtre « batch ». Dans l'affirmative l'objet est enlevé provisoirement du planning des copies.

Par ailleurs, les priorités sont comparées entre les listes 'réorganisation' et les listes 'copie' ; des images copies plus prioritaires sont susceptibles d'empêcher une réorganisation du seul fait que celle-ci génère une copie et vice versa.

Le planning rapide

Le planning rapide consiste à déterminer les objets à traiter en limitant le temps global (la charge) à la somme des durées disponibles dans les régions de traitement.

Le planning rapide de la copie consiste à prendre les objets dans l'ordre décroissant des priorités il est donc aussi simple à réaliser qu'un tri d'objet. Il permet de donner une évaluation rapide du temps de fenêtre résiduel en fonction de la priorité. Il peut être ajusté en fonction des objets ajoutés par le planning rapide de réorganisation.

Le planning rapide de réorganisation prend en compte les liens entre objets réels :

- si un objet est contenu dans un autre, on planifie le contenant ;
- si deux objets ont une partition commune sans que l'un contienne l'autre, on planifie celui qui à la plus haute priorité.

Le planning rapide de réorganisation travaille également dans l'ordre décroissant mais il est capable de remettre en question l'élimination de gros objets en fin de fenêtres.

La rapidité des plannings rapides tient à ce qu'ils sont limités dans leurs retours en arrière et ne remettent pas en cause les priorités des objets.

La boucle la plus intérieure est celle qui cumule les temps de copie en testant si un objet est à la fois copié et réorganisé. Il est possible d'introduire un curseur sur l'objet à copier, sachant que le parcours complet n'est nécessaire que si des incompatibilités ou remise en causes ont été détectées.

Les priorités

Les priorités relatives de copies et réorganisation sont prises en compte de manière suivante :

Pour les réorganisations nécessitant une image copie, on vérifie qu'elle est possible (planning rapide) en tentant d'insérer l'objet (s'il n'y est pas déjà) au planning provisoire de copie avec sa priorité de réorganisation.

Ainsi si ce sont les régions de copie qui limitent le nombre d'objets, cette limite se fera à des priorités voisines tant pour la réorganisation des objets nécessitant une image copie que pour la copie des autres objets.

Par contre si ce sont les régions de réorganisation qui limitent le nombre d'objets, des copies d'objets beaucoup moins prioritaires peuvent avoir lieu.

Les spécifications de la méthode de gestion et d'ordonnancement de l'exécution de logiciels utilitaires de réorganisation de bases de données indexées.

Les Données

*Les objets élémentaires*

Les objets élémentaires sont les plus petits objets susceptibles d'un traitement (réorganisation et/ou copie) et pour lesquels on est capable de mesure un taux de désorganisation.

Ces objets sont utilisés pour l'image copie et comme intermédiaires pour générer des objets de réorganisation.

Les objets élémentaires pour lesquels une image copie est à faire sont chaînés (liste PRIOCOPIE) entre eux par priorités décroissantes et tailles croissantes (la priorité la plus haute étant donnée à l'objet dont la dernière copie remonte le plus loin dans le temps). Les ajouts après réorganisation se font en effet en tête de la liste **PRIOCOPIE.**

Tous les objets élémentaires faisant l'objet d'une copie (y compris, ultérieurement, après leur réorganisation) comportent un pointeur de pile dans l'ordre des priorités croissantes qui est valorisé par le planning de copie.

*Les objets réels*

Les objets réels sont ceux qui peuvent être réorganisés sans entraîner la réorganisation d'autres objets (ex ; espaces de tables + index non pris isolément). Les objets réels sont créés à partir d'objets élémentaires (espaces de tables, index et partitions).

La **priorité** de chaque objet réel est le barycentre des taux de désorganisation des composants avec leurs tailles pour coefficients. On rappelle que le taux de désorganisation d'un objet est donné par le rapport nombre d'insertions (lignes ou RID) sur la taille de l'objet. Les objets réels sont rangés dans la liste des priorités de réorganisation (liste **PRIOREORG)** par priorités décroissantes.

La priorité étant définie comme le rapport **gain / coûts,** le gain d'un objet est calculé comme le produit de sa priorité par le temps de sa réorganisation.

Les objets réels sont chaînés avant-arrière afin de permettre le parcours dans les deux sens et les opérations de suppression et de changement de priorité qui ont lieu chaque fois qu'une réorganisation est lancée.

Le planning rapide utilise également une liste de suppression (liste **SUPP**) permettant de différer la suppression d'objets jusqu'à la confirmation de la nécessité de ces suppressions par la sélection de l'objet courant incompatible avec les objets supprimés.

Il est possible d'introduire une sous-chaîne d'objets sélectionnés (ou ayant fait l'objet de tentatives de sélection) afin d'éviter, lors de la phase de remise en cause d'avoir à examiner de nombreuses combinaisons de partitions incompatibles avec les choix antérieurs.

*L'objet partitionné*

Pour un espace de table contenant **n** partitions il y $2^n$-1 objets réels possibles pour la réorganisation, ce qui est irréaliste. On se limite aux combinaisons de partitions contiguës dans l'ordre des priorités soient à ½ **n.(n+1)** objets. Si le nombre maximum de partitions réorganisées simultanément est **p<n**, le nombre d'objet réels se réduit à ½ **p.(2n-p+1).**

Par ailleurs il est nécessaire de pouvoir répondre rapidement aux questions suivantes :

    i) - un objet est-il contenu dans un autre ?
    ii) - deux objets ont-ils une partition commune ?

Pour faciliter la réponse à ces questions on associe à chaque objet un tableau de bits (en anglais **bitmap**) marqué à 1 pour chaque partition de l'objet et on procède à des comparaisons des « bitmaps ».

*Objets globaux*

Les objets globaux sont les espaces de tables. Il sont destinés à contenir les informations relatives à la **partie planifiée** :

Les informations temporaires utilisées par le planning rapide sont :

    un pointeur vers une liste de ses sous-objets réels sélectionnés, une valeur non nulle indiquant qu'une partie de l'objet est à réorganiser ;

· un indicateur de réorganisation de l'ensemble de l'espace de tables ;
· un indicateur de copie d'une partie de l'espace de table ;
· une « bitmap » des réorganisations des partitions de l'espace de tables
· une « bitmap » des réorganisations des partitions d'index.

Il y a un pointeur de chaque objet élémentaire ou réel sur l'objet global correspondant.

Enfin les objets réels sélectionnés d'un même espace de table sont chaînés entre eux par le planning rapide dans la liste de sélection (liste SELECT/OR) de l'objet global.

*Régions de traitement*

Chaque région de traitement est affectée soit à la copie soit à la réorganisation. La recherche du prochain objet à réorganiser ou copier a lieu quand une région est libérée par la fin de la réorganisation ou la copie précédente.

Le planning consiste donc à valoriser un pointeur de la région de traitement vers le prochain objet à traiter.

Afin de permettre l'anticipation, on conserve pour chaque région l'heure relative estimée de fin du traitement en cours dans la région, laquelle est initialement nulle.

Les Traitements :

Les traitements ci-après sont données **à titre d'exemple non limitatif** d'un mode d'exploitation de la mise en oeuvre de la méthode de gestions des réorganisations et des copies d'un ensemble de bases de données indexées selon l'invention. Sans sortir du cadre de l'invention, ces traitements peuvent faire l'objet de variantes et de modifications diverses pour remplir des fonctions techniquement identiques ou équivalentes.

**A Planning rapide**

On rappelle que le planning rapide a pour seul but de déterminer les objets pouvant être réorganisés dans la durée résiduelle de la fenêtre « batch » et non de calculer l'heure de début des réorganisations. Les seules informations utilisables sont l'indicateur de sélection de chaque objet réel et les indicateurs d'affectation (partie planifiée et pointeurs).

Le **planning rapide de réorganisation PRR\*** comporte les six phases opérationnelles suivantes :

**Initialisation**

**Boucle sur objets**

**Elimination des intersections d'objets**

**Remise en cause des choix précédents**

**Vérification de la suffisance du temps copie**

**Sélection de l'objet courant**

**La phase opérationnelle d'Initialisation comporte les opérations suivantes :**

**-** Pour tout objet réel de la liste, annuler l'indicateur de sélection **IndS/OR** ;

**-** Pour tout objet global OG de la liste, annuler le pointeur de liste de sélection **PointLS/OG** et **annuler** la partie planifiée de l'objet **PPO/OG**;

**-** **Initialiser** le limiteur de remises en cause à 10.000 ;

**-** **Initialiser E** = temps minimum de traitement = minimum de (durée unitaire de réorganisation + copie des objets réels à réorganiser **OR)** ;

**-** **Initialiser Temps résiduel de copie TRC** = temps restant après exécution des copies en cours et des copies liées aux réorganisations en cours ;

**-** **Initialiser Temps résiduel de réorganisation TRR** = temps restant après exécution des réorganisations ;

**-** **Initialiser :** Prochain Objet à Copier **POC** = premier objet de la liste finale (en réalité une liste virtuelle car seul le premier objet de cette liste importe).

**Nota :**

1) Cette phase d'Initialisation débutant le processus de **PRR\*** est notamment lancée à chaque fin d'une tâche de réorganisation (réorg + copie) dans une région de traitement correspondante.
De la même façon à chaque fin de tâche de réorganisation les listes de priorités **PRIOREORG** pour les objets réels et **PRIOCOPIE** pour les objets élémentaires sont remises à jour.
2) Au tout départ des réorganisations on a :

**TRC = Durée fenêtre « batch » x Nb de régions de copie**, **TRR = Durée fenêtre « batch » x Nb de régions de réorganisation.**

**La phase opérationnelle de Boucle sur objets comporte les opérations suivantes :**
Pour tout objet réel de la liste **PRIOREORG** jusqu'à ce que **TRR < E** :

- **Marquer** la sélection possible
- **Annuler** le pointeur de la liste **SUPP**
- **Initialiser** Temps Provisoire de Copie **TPC = TRC**
- **Initialiser** Temps de Réorganisation **TR** = Durée de réorganisation de l'objet courant **OR**

**La phase opérationnelle d'Elimination des intersections d'objets comporte les opérations suivantes :**
Pour tous les objets globaux associés à l'objet courant **OR, Faire** :

Si le pointeur de la liste de sélection **SELECT/OR** de l'objet global associé à l'objet courant est non nul (ce qui indique qu'il y a déjà au moins un objet réel sélectionné),
**Faire :** Si la partie planifiée de l'objet global **OG** est contenue dans la partie planifiée de l'objet courant **OR :**

**Faire** pour tout objet réel B de la liste de sélection :

Si B marqué sélectionné <u>alors :</u>

i) **Ajouter** le temps additionnel de copie de **B** au **TPC**
ii) **Soustraire** la durée de réorganisation de **B** du temps de réorganisation **TR**
iii) **Placer B** dans la liste de suppression **SUPP**

<u>sinon</u>
Si la partie planifiée de l'objet global **OG** a une intersection non vide avec la partie planifiée de l'objet courant :

**Marquer** sélection de l'objet courant **OR impossible**

**La phase opérationnelle de Remise en cause des choix précédents comporte les opérations suivantes :**
Si sélection possible
Si durée de réorganisation + copie de l'objet courant **OR** > durée résiduelle dans la fenêtre « batch » de dans la région disponible, <u>alors</u>
**Marquer** sélection de l'objet courant **impossible**
**Sinon** (durée réorg + copie < durée résiduelle « batch »)
Si le temps de réorganisation (durée de réorganisation de l'objet courant) > durée résiduelle de réorganisation
**Initialiser :** gain résiduel = gain de l'objet courant
**Initialiser** temps restant à gagner = durée de réorganisation de l'objet courant - durée résiduelle de réorganisation
**Faire** pour tout objet réel **B** (déjà sélectionné) de la liste **SELECT/OR** en commençant par le précédent de l'objet courant **OR** et dans l'ordre de priorités croissantes tant que le limiteur des remises en cause >0 et que le temps restant à gagner ≤ 0 :

Si **B** est sélectionné, sans être sous-objet de l'objet courant, et si **gain B < gain résiduel (= gain de l'objet courant OR)**

**Soustraire** le gain de **B** du gain résiduel

**Soustraire** la durée de réorganisation de B du temps restant à gagner

**Ajouter** le temps additionnel de copie de B au temps provisoire de copie

**Placer B** dans la liste de suppression **SUPP**

**Décrémenter** le limiteur de remises en cause

Si le temps à gagner est >0

**Marquer** sélection de l'objet courant **impossible**

Sinon sélection possible soit parce que le temps gagner après l'élimination de B est ≤ 0, soit par ce que temps de réorganisation (durée de réorganisation de l'objet courant) < durée résiduelle de réorganisation.

**La phase opérationnelle de Vérification de la suffisance du temps copie comporte les opérations suivantes :**

Si sélection possible

**Initialiser** : Temps additionnel de copie de l'objet courant = temps de copie de l'objet courant

Si copie à faire pour l'objet courant OR,

**Faire** pour tout objet de la liste des objets restant à copier (liste **PRIOCOPIE)** tant que la priorité de l'objet à copier > à la priorité de l'objet à réorganiser

**Soustraire** le temps de copie de l'objet à copier du temps provisoire de copie

Mais si l'objet à copier est un sous-objet de l'objet courant à réorganiser

**Soustraire** le temps de copie de l'objet à copier du temps provisoire de copie (= temps résiduel de copie)

Si le temps additionnel de copie de l'objet courant > temps provisoire de copie

**Marquer** sélection de l'objet courant **impossible**

**La phase opérationnelle de Sélection de l'objet courant comporte les opérations suivantes :**

Si sélection possible

**Positionner** l'indicateur de sélection **IndS** de l'objet courant ;

**Positionner** l'indicateur d'affectation de l'objet global associé à l'objet courant ;

**Noter** la partie planifiée **PPO** de l'objet global associé à l'objet courant **OR;**

**Valoriser :** pointeur (suite) de sélection de l'objet courant **OR** = pointeur liste de sélection **PointLS** de l'objet global **OG ;**

**Valoriser :** pointeur liste de sélection **PointLS** de l'objet global = adresse de l'objet courant **OR** (l'objet courant est ajouté la liste de sélection **SELECT/OR**);

**Soustraire** le temps additionnel de copie de l'objet courant du temps résiduel de copie **TRC ;**

**Soustraire** la durée de réorganisation de l'objet courant **OR** du temps résiduel de réorganisation **TRR ;**

Si le pointeur de liste de suppression est non nul

**Faire** pour tout objet réel B de la liste de suppression **SUPP:**

Si B est marqué sélectionné

**Annuler** l'indicateur de sélection de B

**Ajouter** la durée de réorganisation de B au temps résiduel de réorganisation **TRR.**

**Nota :** il n'est pas utile d'enlever B de la liste de sélection car seuls les objets réels **OR** définitivement sélectionnés et **marqués par l'indicateur de sélection** seront considérés comme tels et examinés par la suite.

**B Prochain Objet à Copier**

La recherche du prochain objet à copier est effectuée chaque fois qu'une région est libérée par une image copie terminée ou qu'une région est disponible et qu'un nouvel objet a été introduit suite à une réorganisation. Les objets doivent être triés par priorités décroissantes et tailles croissantes, les objets provenant des réorganisations étant placés en tête de liste.

Le planning s'effectue du moins prioritaire au plus prioritaire et il est possible qu'un gros objet (longue copie) déborde de la région de copie qui lui a été attribuée. Cette situation est acceptable dans la mesure où l'on s'est assuré que l'objet tenait dans la région du point de vue Temps Résiduel de Copie et du fait qu'une technique valable de planification consisterait à enlever de cette région un objet moins prioritaire déjà sélectionné et de le placer dans une autre région, ce qui ne changerait pas la sélection pour cette région.

Le pointeur prochain objet à copier est valorisé pour chaque région, mais pour la raison citée précédemment, il est recommandé de refaire le planning à chaque fois, même initialement quand toutes les régions sont disponibles.

Enfin il est possible que le planning copie choisisse un objet qui n'appartienne pas (encore) à la liste de copie parce sa réorganisation n'est pas terminée. Dans ce cas on se met en attente (région disponible).

**Le traitement Prochain Objet à Copier comporte les deux phases opérationnelles suivantes :**

**Sélection des objets à copier**
**Rétroplanning de copie**
**La phase opérationnelle de Sélection des objets à copier**
**comporte les opérations suivantes :**
Faire un planning rapide de réorganisation **PPR\*;**
**Initialiser** les piles de sélection de copie à vide ;
**Initialiser** : temps résiduel de copie **TRC** = temps total de fenêtre « batch » restant disponible dans les régions « copie » après exécution des copies en cours ;
**Initialiser EC** = minimum (durée unitaire de copie des objets à réorganiser **OR)**
**Faire** pour toutes les régions de réorganisation,
Si région active
Si image copie de l'objet en cours de réorganisation à faire,
**Faire** pour tout sous-objet pouvant être copié séparément (partition)
**Soustraire** le temps de copie du sous-objet de la durée résiduelle de copie
**Placer** le sous-objet courant en haut de la première pile de sélection de copie.
**Faire** pour tout objet réel sélectionné de la liste des objets **OR** à réorganiser **SELECT/OR** dans l'ordre des priorités décroissantes :

Si image copie de l'objet courant **OR** à faire,
**Faire** pour tout sous-objet pouvant être copié séparément (partition)
**Soustraire** le temps de copie du sous-objet de la durée résiduelle de copie
**Placer** le sous-objet courant en haut de la première pile de sélection de copie.
**Faire** pour tout objet de la liste des objets à copier **OC** dans l'ordre des priorités décroissantes, tant que la durée résiduelle de copie **TRC > EC**
Si le temps de copie de l'objet **OC** ≤ durée résiduelle de copie **TRC,**
Si l'objet à copier **OC** n'est pas déjà dans la première pile (l'objet OC est un sous-objet ; vérification possible par test de la partie réorganisée de l'objet global en cas de partition),
**Soustraire** le temps de copie du sous-objet de la durée résiduelle de copie
**Placer** le sous-objet courant en haut de la seconde pile de sélection de copie.

**Placer** la première pile de sélection de copie sur la seconde (constituant ainsi la liste **SELECT/COPIE).**
**La phase opérationnelle de Rétroplanning de copie comporte les opérations suivantes :**

**Faire** pour toute région de copie :
Durée de la région = Durée de la fenêtre - heure relative estimée de fin de traitement en cours dans la région
Durée consommée région = 0
**Initialiser** le premier pointeur objet à copier de la région courante à 0.

Faire de haut en bas pour tout objet de la pile de sélection de copie :

Si temps de copie de l'objet courant **OC** ≤ durée de la région la plus longue ;
**Rechercher** une région dont la durée consommée est minimale ;
Si temps de copie de l'objet **OC** > durée de la région courante - durée consommée
**Rechercher** une région pour laquelle : durée de la région - durée consommée de la région-temps de copie de l'objet courant soit minimal et positive ou nulle,
Si aucune région ne convient
**Rechercher** une région pour laquelle : durée de la région - durée consommée de la région -temps de copie de l'objet courant soit maximale (c.à.d minimale en valeur absolue) et le temps de copie de l'objet courant ≤ durée de la région,
Si l'objet courant **OC** appartient à la seconde pile,
**Valoriser** :pointeur premier objet à copier **POC** de la région courante = adresse de l'objet courant **OC,**
**Ajouter** la durée de copie de **OC** à la durée consommée de la région courante. **C Prochain Objet à Réorganiser**

La recherche du prochain objet à réorganiser est effectuée chaque de fois qu'une région est libérée par une réorganisation terminée. Préalablement les priorités ont dû être calculées ou corrigées et les objets réels triés dans l'ordre des priorités décroissantes.
Comme pour la copie, le planning s'effectue du moins prioritaire au plus prioritaire. On commence par planifier les copies engendrées par les réorganisations, ce qui permet de calculer une heure limite de fin de réorganisation pour chaque objet devant être copié.

Le temps disponible de chaque région de réorganisation est divisé en trois parties :

1 - la durée consommée effectivement par les réorganisations planifiées
2 - la durée gaspillée par le temps réservé à la copie après réorganisation
3 - la durée résiduelle allant du début à la première réorganisation

Le processus tente de remplir la durée gaspillée par des réorganisations d'objets ne nécessitant pas de copie.

Quand un objet à réorganiser est sélectionné, il est retiré de la liste ainsi que ses index (si applicable) et tous les autres objets qui ont des partitions communes avec cet objet. Les priorités des autres objets pouvant partager un index avec celui-ci sont également recalculées (pour tenir compte de l'impact de la réorganisation de l'index) et ces objets sont replacés aux bons endroits dans la liste des objets réels à réorganiser.

**Le traitement Prochain Objet à Réorganiser comporte les quatre phases opérationnelles suivantes :**

**Rétroplanning de copie**
**Rétroplanning de réorganisation**
**Identification de la région de traitement**
**Inscription de l'objet au planning**

**La phase opérationnelle de Rétroplanning de copie comporte les opérations suivantes :**

**Faire** un planning rapide
**Faire** pour toute région de copie :

Durée consommée de la région = 0

**Faire** pour tout objet réel **OR** sélectionné de la liste des réorganisations **SELECT/OR** (dans l'ordre des priorités croissantes)
**Initialiser :'temps à réserver pour copie de l'objet courant '= 0**
Si image copie de l'objet courant **OR** à faire,
**Faire** pour tout sous-objet pouvant être copié séparément (partition),
**Rechercher** une région dont la durée consommée est minimale, ci-après région courante
**Ajouter** le temps de copie du sous-objet à la durée consommée de la région courante,
**Valoriser** 'temps à réserver pour copie de l'objet courant' = **max** (temps à réserver pour copie de l'objet courant **OR**, durée consommée de la région courante)

**La phase opérationnelle de Rétroplanning de réorganisation comporte les opérations suivantes :**

**Faire** pour toute région de réorganisation :

Durée de la région = Durée de la fenêtre - heure relative estimée de fin du traitement en cours dans la région.

Durée consommée dans la région = 0
Durée gaspillée dans la région = 0
Pointeur premier objet à réorganiser de la région courante = 0

**Faire** pour tout objet réel **OR** sélectionné de la liste **SELECT/OR** dans l'ordre des priorités croissantes :

**Faire** pour chaque région
Si l'image copie de l'objet courant **OR** à faire,
**Calculer** dernier délai de la région = durée de réorganisation de l'objet courant + **max** de [temps à réserver pour copie de l'objet courant, (durée consommée de la région + durée gaspillée de la région)]
Sinon,
Calculer le dernier délai de la région = durée consommée de la région + **max** de[(durée de réorganisation de l'objet courant, durée gaspillé de la région)]

**La phase opérationnelle de Identification de la région de traitement comporte les opérations suivantes :**

**Rechercher** une région dont le délai est minimal,

Si dernier délai de la région courante > durée de la région courante,

**Rechercher** une région pour laquelle : [durée de la région courante dernier délai de la région courante] est minimale et positive ou nulle,

Sinon, si aucune région ne convient,

**Rechercher** une région telle que : [valeur absolue de (durée de région - dernier délai de la région courante)] est minimale, et [durée de réorganisation + copie objet courant] ≤ durée de la région.

**La phase opérationnelle de Inscription de l'objet au planning comporte les opérations suivantes :**

Si image copie de l'objet courant OR à faire ou durée gaspillée de la région courante = 0,

**Valoriser: pointeur premier objet à réorganiser POR de la région courante = adresse de l'objet courant OR,**

**Ajouter** la durée de réorganisation de l'objet courant **OR** à la durée consommée de la région courante,

**Valoriser :** durée gaspillée de la région courante = dernier délai de la région courante - durée consommée de la région courante.

Lorsque l'une des deux régions de traitement identifiées concernées (réorganisation ou copie) devient disponible, le système lancera, en l'absence de tout événement de remise à zéro **RAZR=1** ou **RAZC=1** survenu entre temps pour le traitement concerné, soit une réorganisation de l'objet **POR** (prochain objet à réorganiser) correspondant, soit une copie de l'objet **POC** correspondant (prochain objet à copier).

Une fois le traitement lancé le processus d'identification **IDPOR** et/ou **IDPOC** reprendra, les listes **PRIOREORG** et **PRIOCOPIE** étant mises à jour en continue, jusqu'à épuisement du temps de réorganisation et/ou de copie imparti aux diverses régions de réorganisation et de copie correspondantes dans la fenêtre « Batch ».

Bien entendu la méthode de gestion des réorganisations et de copies dans un ensembles de bases de données indexées d'un système d'information selon l'invention n'est pas limitée au mode de mise en oeuvre décrit ci-dessus et couvre d'autres variantes et modifications qui pourraient être appréciées par l'homme de métier tout en restant dans le cadre des revendications présentées ci-après.

En particulier la méthode de gestion selon l'invention, utilisée pour à la réorganisation « hors ligne » (off line) des bases de données est également applicable à la réorganisation des bases de données « en temps réel » ou « en ligne » (on line) selon une méthode mixte, la réorganisation « hors ligne » et la réorganisation « en ligne » n'étant pas exclusive l'une de l'autre.

**Revendications**

**1.** Méthode de gestion des réorganisations dans un ensemble de bases de données indexées d'un système informatique d'information adaptée à la réorganisation « hors ligne » dans au moins une région de traitement de réorganisation du système, **caractérisée en ce qu'**elle comporte les phases opérationnelles suivantes :

(10) - Création et maintien par mise à jour en continu d'une liste **PRIOREORG** des objets à réorganiser par priorité décroissante fonction de l'état de désorganisation des objets à réorganiser;

(20) - Exécution du processus **IDPOR** d'identification du premier ou prochain objet à réorganiser **POR** avec, à chaque événement **RAZR=1** interne au système pour lequel la sélection du premier ou prochain objet à réorganiser doit être remise en cause, interruption et remise à zéro et nouvelle exécution du processus **IDPOR,** lequel processus comportant les étapes suivantes :

(21) - Etablissement d'un planning rapide de réorganisation **PRR** à l'aide de la liste PRIOREORG et du temps opérationnel résiduel disponible **TRR** dans l'ensemble des régions de réorganisation et d'une liste de sélection **SELECT/OR** d'objets à réorganiser **OR** ordonnés par priorités décroissantes optimisées en fonction du gain de la réorganisation de chaque objet OR, ledit gain étant défini comme le produit d'un facteur représentatif du taux de désorganisation d'un objet **OR** par le temps de réorganisation de cet objet;

(22) - Etablissement d'un rétroplanning de réorganisation dans lequel pour tout objet courant à réorganiser **OR** extrait de la liste **SELECT/OR** par priorité croissante pour favoriser le traitement avancé des objets de plus grandes tailles possibles, on calcule pour chaque région de réorganisation le dernier délai de la région **DDRR,** représentant dans la fenêtre « batch » allouée à la réorganisation « hors ligne » le temps minimal nécessaire à la réorganisation de l'objet courant **OR,** égal dans le cas présent à la durée de temps consommé **DCRR** plus le temps de réorganisation de l'objet courant **DROR;**

(23) - Identification de la région de traitement **RTR** de l'objet courant **OR** par adéquation optimisée entre la durée de traitement disponible dans ladite région **DRR** avec la durée de traitement **DROR** nécessaire pour la réorganisation de l'objet **POR avec DRR - DDRR minimal ≥ 0** ;

(24) - Inscription de l'objet courant **OR** comme prochain objet à réorganiser **POR** au planning de la région identifiée en valorisant le pointeur **POR** correspondant à l'adresse de l'objet courant **OR** et en augmentant la durée de temps consommé **DCRR** dans la région du temps de la réorganisation **DROR** ;

(30) - Lancement de la réorganisation de l'objet **POR** dès que la région de traitement de réorganisation **RTR** identifiée est libérée en l'absence de tout événement **RAZR=1** survenu entre temps ; Remise à zéro et nouvelle exécution du processus **IDPOR.**

2. Méthode de gestion selon la revendication 1, **caractérisée en ce que** l'ordre optimal des réorganisations est coordonné avec l'ordre des copies de sauvegarde d'objets du système d'information en tenant compte des réorganisations en cours ou juste effectuées.

3. Méthode de gestion selon la revendication 2, **caractérisée en ce que** l'ordre des copies de sauvegarde est modifié par, l'exécution en première priorité, pour au moins un objet à réorganiser **OR**, de la copie dudit objet **OR** au plus tôt en fin de traitement de réorganisation.

4. Méthode de gestion des réorganisations d'un ensemble de bases de données indexées d'un système d'information adaptée à la réorganisation « hors ligne » dans au moins une région de traitement de réorganisation selon l'une des revendications 1 à 3, **caractérisée en ce qu'**elle intègre l'organisation des copies dans au moins une région de traitement de copie et comporte les phases opérationnelles suivantes: (40) - Création et maintien par mise à jour en continu

- de la liste **PRIOREORG** des objets à réorganiser par priorité décroissante fonction de l'état de désorganisation des objets à réorganiser ; et
- d'une liste **PRIOCOPIE** des objets à copier par priorité décroissante fonction de l'ancienneté des dernières copies des objets à copier.

(50) - Surveillance en continu de l'apparition dans le système d'information de tout événement :

- **RAZR=1** pour lequel la sélection du premier ou prochain objet à réorganiser **POR** doit être remise en cause, notamment une fin d'une tâche de réorganisation dans une région de traitement de réorganisation et/ou la libération d'une zone de traitement pour la réorganisation ou la copie; et/ou
- **RAZC=1** pour lequel la sélection du premier ou prochain objet à copier **POC** doit être remise en cause, notamment une fin d'une tâche de copie dans une région de traitement de copie, une copie prioritaire en fin de réorganisation et/ou la libération d'une zone de traitement pour la réorganisation ou la copie, avec

pour tout événement **RAZR=1,** lancement de l'exécution du processus **IDPOR** d'identification du premier objet à réorganiser **POR** ou, si !e processus **IDPOR** est en cours d'exécution, interruption et nouveau lancement du processus **IDPOR ;** et/ou

pour tout événement **RAZC=1,** lancement de l'exécution du processus **IDPOC** d'identification du premier objet à copier **POC** ou, si le processus **IDPOC** est en cours d'exécution, interruption et nouveau lancement du processus **IDPOC ;**

- le processus **IDPOR** comportant alors les opérations suivantes :

(51) - Etablissement d'un planning rapide de réorganisation **PRR\*** à l'aide de la liste **PRIOREORG** et du temps opérationnel de réorganisation résiduel disponible **TRR** dans l'ensemble des régions de réorganisation et d'une liste de sélection **SELECT/OR** d'objets à réorganiser **OR** ordonnés par priorités décroissantes optimisées en fonction du gain de la réorganisation de chaque objet **OR**, ledit gain étant défini comme le produit d'un facteur représentatif du taux de désorganisation d'un objet **OR** par le temps de réorganisation de cet objet;

(52) - Etablissement d'un planning rapide de copie **PRC** à partir de la liste **SELECT/OR,** puis de la liste **PRIOCOPIE** et dans la limite du temps opérationnel de copie résiduel disponible **TRC** dans l'ensemble des régions de copie, d'une liste de sélection **SELECT/OC** en mémoire de type LIFO ou pile pour d'objets à copier **OC** empilés par priorités décroissantes, la priorité la plus haute étant donnée à l'objet dont la copie remonte le plus loin dans le temps, les ajouts de copies d'objets après réorganisation étant effectués en tête de la liste **PRIOCOPIE;**

(53) - Etablissement d'un rétroplanning de copie dans lequel pour tout objet courant à réorganiser extrait de la liste **SELECT/OR** par priorité croissante, on calcule pour chaque région de copie le temps à réserver **TCR** pour la copie de l'objet **OR** après réorganisation ;

(54) - Etablissement d'un rétroplanning de réorganisation dans lequel pour tout objet courant à réorganiser **OR** extrait de la liste **SELECT/OR** par priorité croissante pour favoriser le traitement avancé des objets de plus grandes tailles possibles, on calcule pour chaque région de réorganisation le dernier délai de la région **DDRR,** représentant dans la fenêtre « batch » allouée à la réorganisation « hors ligne » le délai minimal nécessaire à la réorganisation de l'objet **OR**, selon une formulation distincte si une copie de l'objet **OR** en fin de réorganisation doit être faite ou non;

(55) - Identification de la région de traitement **RTR** de l'objet courant **OR** par adéquation optimisée entre la durée de traitement disponible dans ladite région **DRR** avec la durée de traitement **DROR** nécessaire pour la réorganisation de l'objet courant **OR** avec **DRR - DDRR minimal** $\geq$ 0 sans copie à faire ou avec **valeur absolue de DRR - DDRR minimale et DROR+DCOR** $\leq$ **DRR** si copie à faire;

(56) - Inscription de l'objet courant **OR** comme prochain objet à réorganiser **POR** au planning de la région identifiée en valorisant le pointeur **POR** correspondant à l'adresse de l'objet **OR**, en augmentant la durée de temps consommé **DCRR** dans la région du temps de la réorganisation **DROR** et recalculant la durée gaspillée dans la région de réorganisation DGRR du fait des copies d'objets **OR** en fin de réorganisation ;

60)- Lancement, en l'absence de tout événement de remise à zéro **RAZR=1** survenu entre temps, dès qu'une région de traitement de réorganisation **RTR** identifiée est disponible, de la réorganisation de l'objet **POR ;** Remise à zéro et nouvelle exécution du processus **IDPOR ;** et

- le processus **IDPOC** comportant les opérations suivantes :

(51) - Etablissement d'un planning rapide de réorganisation **PRR\*** à l'aide de la liste **PRIOREORG** et du temps opérationnel de réorganisation résiduel disponible **TRR** et d'une liste de sélection **SELECT/OR** d'objets à réorganiser **OR** ordonnés par priorités décroissantes optimisées en fonction du gain de la réorganisation de chaque objet **OR,** ledit gain étant défini comme le produit d'un facteur représentatif du taux de désorganisation d'un objet **OR** par le temps de réorganisation de cet objet;

(52) - Etablissement d'un planning rapide de copie **PRC** à partir de la liste **SELECT/OR,** puis de la liste **PRIOCOPIE** et dans la limite du temps opérationnel de copie résiduel disponible **TRC,** d'une liste de sélection **SELECT/OC** en mémoire de type LIFO ou pile d'objets à copier **OC** empilés par priorités décroissantes, la priorité la plus haute étant donnée à l'objet dont la copie remonte le plus loin dans le temps, les ajouts de copies d'objets après réorganisation étant effectués en tête de la liste **PRIOCOPIE ;**

(53')- Etablissement d'un rétroplanning de copie avec détermination des durées de copie disponibles en région copie, dépilage de la liste **SELECT/OC** de haut en bas et recherche d'une région copie par adéquation entre la durée copie disponible et la durée copie de l'objet courant à copier **OC** de façon à copier les objets les plus grands possibles et marquage de l'origine de réorganisation où non de l'objet à copier ; suivi de

- l'identification de la région de traitement **RTC** de l'objet à copier par adéquation entre la durée de traitement disponible dans ladite région avec la durée de traitement nécessaire pour la copie de l'objet courant **OC;** suivie de

- l'inscription de l'objet courant **OC** comme le prochain objet à copier **POC** au planning de la région **RTC** identifiée en valorisant le pointeur **POC** correspondant à l'adresse de l'objet **OC** et en diminuant la durée de traitement disponible du temps de la copie de l'objet **OC** retenu comme **POC ;**

(60')- Lancement, en l'absence de tout événement de remise à zéro **RAZC=1** survenu entre temps, dès qu'une région de traitement de copie **TRC** identifiée est disponible de la copie de l'objet **POC;** Remise à zéro et nouvelle exécution du processus **IDPOC.**

5. Méthode de gestion selon la revendication 4, **caractérisée en ce qu'**elle intègre dans les phases finales de processus **IDPOR** d'un objet **OR** une phase de recherche d'un ou plusieurs objets à réorganiser **OR** sans copie **OR** dans la liste **SELECT/OR** ou à défaut dans la liste **PRIOREORG** susceptibles d'être réorganisés dans la région de traitement **RTR** correspondante pendant l'intervalle du temps d'attente de la copie de l'objet **OR** après réorganisation.

6. Méthode de gestion selon l'une des revendications 4 et 5, **caractérisée en ce que** ladite phase (51) d'établissement d'un planning rapide de réorganisation **PRR\*** comporte les opérations suivantes :

(511) - Initialisation : dans laquelle sont notamment annulés les indicateurs de sélection des objets **OR,** initialisé le compteur-limiteur de remises en causes, les temps résiduels de copie **TRC** et de réorganisation **TRR** et la durée minimale **E** de réorganisation et copie d'un objet **OR;**

(512) - Boucle sur objets : dans laquelle notamment pour tout objet réel **OR** de la liste **PRIOREORG** pris dans l'ordre décroissant jusqu'à ce que **TRR** < **E,** une marque de 'sélection possible' de l'objet est posée;

(513)- Elimination des intersections d'objets : dans laquelle notamment sont éliminés de la 'sélection possible' les objets réels **OR** parties d'espaces de tables également appelés objets globaux déjà sélectionnés en tout ou partie;

(514) - Remise en cause des choix précédents : dans laquelle notamment sont éliminés de la sélection possible' les objets **OR** dont le temps total de réorganisation et copie est supérieur au temps de réorganisation résiduel **TRR** et à défaut dans laquelle l'objet courant OR et les objets OR déjà sélectionnés dans la liste **SELECT/OR** sont soumis à un processus d'optimisation en fonction du gain de réorganisation avec replacement d'un objet déjà sélectionné par l'objet en cours avec essais, dans la limite du terme du compteur-limiteur, de combinaisons successives tendant à retenir pour être sélectionné au final dans **SELECT/OR** des objets de plus grand gain de réorganisation possible et à les associer aux autres objets **OR** de la 'sélection possible' de façon à ce que le temps total des réorganisations de tous les objets **OR** retenus soit inférieur mais le plus proche possible du temps résiduel de réorganisation **TRR.**

(515) - Vérification de la suffisance du temps copie disponible dans le temps résiduel de copie **TRC** pour chaque objet **OR** en passe d'être finalement sélectionné pour la réorganisation compte tenu de la priorité de réorganisation de l'objet **OR** par rapport aux objets à copier en préalable du fait de leurs priorités copie supérieures.

(516) - Sélection de l'objet courant **OR** dans la liste **SELECT/OR :** dans laquelle notamment sont positionnés les indicateurs de l'objet courant **OR** et de l'objet global associé, annulés éventuellement les indicateurs du ou des objets **OR** désélectionnés et diminuer **TRR** et **TRC** des temps respectifs de réorganisation et de copie.

**7.** Méthode de gestion selon l'une des revendications 4 à 6 **caractérisée en ce que** ladite phase (52) d'établissement d'un planning rapide de copie **PRC** comporte les opérations suivantes:

(521) - Initialisation : au sortir d'un planning de réorganisation **PRR\*** et dans laquelle sont notamment vidées les piles de sélection de copie **PSC1** et **PSC2,** initialisés le compteur-limiteur de remises en causes, le temps résiduel de copie **TRC** et la durée minimale **EC** de copie d'un objet à copier **OC ;**

(522) - Inspection des régions de réorganisation : Pour toutes les régions, si région active, et si image copie de l'objet en cours de réorganisation à faire et/ou si image copie de tout objet **OR** de la liste **SELECT/OR** pris dans l'ordre des priorités décroissantes à faire: pour tout sous-objet susceptible d'être copié séparément, notamment une partition, soustraction du temps de copie du sous-objet de **TRC** et placement du sous-objet en haut de la première pile **PSC1 ;**

(523) - traitement de la liste des objets à copier **PRIOCOPIE :** dans laquelle notamment pour tout objet à copier **OC** de la liste **PRIOCOPIE** pris dans l'ordre décroissant jusqu'à ce que **TRC < EC** et absent de **PSC1,** soustraction du temps de copie du sous-objet **OC** de **TRC** et placement du sous-objet OC en haut de la seconde pile **PSC2,**

(524)-Empilage des piles de selection dans laquelle la pile **PSC1** est superposée à la pile **PSC2** pour constituer la liste **SELECT/OC**.

**8.** Méthode de gestion selon la revendication 7 **caractérisée en ce que** ladite phase (53) d'établissement d'un rétroplanning de copie dans le processus **IDPOR** comporte les opérations suivantes:

(531) Initialisation des régions de copie dans laquelle au sortir d'un planning de réorganisation pour toutes les régions de copie, la durée consommée de la région **DCRC** est mise à zéro,

(532) Détermination du temps de copie à réserver **TCR :** dans laquelle pour tout objet réel de la liste **SELECT/OR** parcourue dans l'ordre des priorités croissantes pris comme objet courant à réorganiser **OR,**

- le temps à réserver pour copier **TCR** l'objet réel courant **OR** est mis à zéro;
- Si l'image copie de tout objet **OR** de la liste **SELECT/OR** pris dans l'ordre des priorités croissantes doit être faite: pour tout sous-objet susceptible d'être copié séparément, notamment partition, on recherche une région copie dont la durée consommée **DCRC** est minimale, on ajoute le temps de copie du sous-objet à la durée consommée de la région courante **DCRC** et on valorise le temps à réserver **TCR** pour copie de l'objet courant = **maximum** entre le temps à réserver **TCR** pour copie de l'objet courant et durée consommée dans la région **DCRC.**

**9.** Méthode de gestion selon la revendication 8, **caractérisée en ce que** ladite phase de rétroplanning de réorganisation (54) dans le processus **IDPOR** comporte les opérations suivantes :

(541) -Initialisation : dans laquelle pour toute région de réorganisation,

- Durée de la région **DRR** = Durée de la fenêtre 'batch' **DFB** moins heure relative estimée de fin du traitement de réorganisation en cours dans la région **HRFR**
- Durée consommée dans la région **DCRR** = 0
- Durée gaspillée dans la région **DGRR** = 0
- Pointeur premier objet à réorganiser de la région courante = 0

(542) - Détermination du dernier délai de la région de réorganisation **DDRR :** dans laquelle pour tout objet réel **OR** sélectionné de la liste **SELECT/OR** dans l'ordre des priorités croissantes :

Pour chaque région si l'image copie de l'objet courant **OR** à faire, calcul du dernier délai de la région **DDRR** = durée de réorganisation de l'objet courant **DROR** + **maximum** entre le temps à réserver pour copie de l'objet courant **TCR** et le total de la durée consommée de la région **DCRR** + la durée gaspillée de la région **DGRR ;**

- Sinon, calcul du dernier délai de la région **DDRR** = durée consommée de la région **DCRR** + **maximum** entre la durée de réorganisation de l'objet courant **DROR** et la durée gaspillée de la région **DGRR.**

10. Méthode de gestion selon la revendication 9, **caractérisée en ce que** ladite phase d'identification de la région de réorganisation **RTR** (55) comporte les opérations suivantes :

Selon le type d'objet courant à réorganiser **OR**

(551) - Recherche de la région de traitement de réorganisation susceptible d'accueillir de façon optimale un objet à réorganiser **OR** sans copie : comportant

- la recherche d'une région dont le dernier délai DDRR est minimal, et si dernier délai de la région courante **DDRR** est **supérieur** à la durée de la région courante **DRR,** la recherche d'une région pour laquelle : la valeur de la durée de la région courante **DRR** moins le dernier délai de la région courante **DDRR** est **minimale et positive ou nulle ;** sinon

(552) - la recherche de la région de réorganisation susceptible d'accueillir de façon optimale un objet à réorganiser **OR** avec copie : comportant

- Recherche d'une région telle que : la valeur de la durée de la région **DRR** moins dernier délai de la région courante **DDRR** est **minimale en valeur absolue,** et la valeur de la durée de réorganisation **DROR** plus le temps de copie objet courant **TCR** est inférieur ou égal à la durée de la région **DRR.**

11. Méthode de gestion selon la revendication 10, **caractérisée en ce que** ladite phase d'inscription de l'objet **OR** au planning de la région de réorganisation **RTR** (56) comporte les opérations suivantes :

(561)- Inscription de l'objet **OR** comme prochain objet à réorganiser **POR :** dans laquelle si l'image copie de l'objet courant à faire ou durée gaspillée de la région courante égale zéro, on valorise le pointeur premier objet à réorganiser **POR de la région courante à l'adresse de l'objet** courant **OR,**
(562) - mise à jour **DCRR** et **DGRR :** dans laquelle on ajoute la durée de réorganisation de l'objet courant **DROC** à la durée consommée de la région courante **DCRR,** et on valorise la durée gaspillée de la région courante **DGRR** à la valeur du dernier délai de la région courante **DDRR** moins la durée consommée de la région courante **DCRR.**

12. Méthode de gestion selon l'une des revendications 4 à 7 **caractérisée en ce que** ladite phase (53') d'établissement d'un rétroplanning de copie dans le processus **IDPOC** comporte les opérations suivantes:

(531') Initialisation des régions de copie : dans laquelle pour toutes les régions,

- la durée de région **DRCOP** est valorisée à la durée fenêtre « batch **»** DFB moins l'heure relative estimée de fin de traitement copie en cours **HRFC,**
- la durée consommée de la région **DCRCOP** est mise à zéro,
- le pointeur du premier objet à copier **POC** de la région courante est mis à zéro

(532') Dépilage et identification du prochain objet à copier **POC**: Dans la laquelle, Pour tout objet de la pile **PSC1/PSC2** parcourue de haut en bas un objet courant à copier **OC** est extrait lorsque le temps de copie de l'objet courant **TCOC est inférieur ou égal à la longue DRCOP;**

On cherche pour identifier la région de traitement copie une région dont la durée consommée **DCRCOP** est minimale ; dans l'affirmative si le temps de copie de l'objet courant **TCOC** est supérieur à **DRCOP** moins **DCRCOP** on cherche une région pour laquelle **DRCOP** moins **DCRCOP** moins **TCOC** est minimale, positive ou nulle,
Si aucune région ne convient, on choisit une région à copier pour laquelle **DRCOP** moins **DCRCOP** moins **TCOC** est négative et minimale en valeur absolue et pour laquelle **TCOC** est inférieur ou égal à **DRCOP ;**
Si l'objet courant appartient à la seconde pile **PSC2,** soit un objet à copier non issu d'une réorganisation, le pointeur de l'objet **POC** pour la région courante choisie est valorisé à l'adresse de l'objet courant **OC** de façon à inscrire l'objet **POC** au planning de la région de traitement copie **RTC** identifiée ; et
Pour terminer, on ajoute la durée copie **TCOC** à la durée consommée de la région courante **DCRCOP.**

**13.** Méthode de gestion selon l'une de revendications précédentes, **caractérisée en ce que** lesdits événements internes au système **RAZR=1** et **RARC=1** entraînant la remise en cause de la sélection des objets **POR** ou **POC** sont notamment constitués respectivement par la fin d'une tâche de réorganisation dans une région de traitement de réorganisation pour les objets **POR** ou par la fin d'une tâche de copie dans une région de traitement de copie pour les objets **POC,** une copie prioritaire en fin de réorganisation et/ou la libération d'une zone de traitement pour les objets **POR** et **POC.**

**14.** Méthode de gestion selon l'une des revendications précédentes, **caractérisée en ce qu'**elle est associée à une méthode de gestion des réorganisations d'un ensemble de bases de données indexées d'un système informatique d'information adaptée à la réorganisation « en ligne » comportant au moins les phases opérationnelles suivantes:

- une phase d'analyse instantanée d'au moins un objet à réorganiser **OR** parmi les objets susceptibles de réorganisation, notamment bases de données, partitions et/ou index à réorganiser, et d'estimation du surcoût associé au niveau de désorganisation de l'objet à réorganiser **OR;**
- une phase d'estimation instantanée du coût de la réorganisation en ligne en fonction de la taille dudit objet à réorganiser **OR** et du taux de désorganisation dudit objet à réorganiser **OR ;** et
- une phase de détermination du seuil **Ds** de désorganisation minimal de l'objet à réorganiser **OR** au dessus duquel seuil la réorganisation « en ligne » peut être lancée pour cet objet **OR** et le cas échéant du lancement effectif de cette réorganisation en ligne, le seuil **Ds** correspondant sensiblement au minimum du coût total du surcoût estimé de la désorganisation et du coût estimé de la réorganisation pour l'ôbjet **OR** considéré.

**15.** Méthode de gestion selon la revendication 14, **caractérisée en ce que** le lancement de la réorganisation « en ligne » est retardé pour attendre une fenêtre temporelle d'activité réduite de la base de données concernée.

**16.** Méthode de gestion selon la revendication 14, **caractérisée en ce que** pour un objet à réorganiser **OR** sélectionné comme premier objet à réorganiser **POR** la priorité est donnée pour la réorganisation « hors ligne », l'intervention de la réorganisation « en ligne » n'étant requise qu'après dépassement du seuil **Ds** pour l'objet **POR** considéré.

**17.** Méthode de gestion selon l'une des revendications 14 à 16 et utilisée pour la réorganisation des bases de données indexées de type espace de tables, la méthode étant **caractérisée en ce que** pour un objet à réorganiser **OR,** le seuil **Ds** est défini par une approximation donnée par la formule **F5'** suivante :

$$R = Ds^2 \, r \, Co^* / 2.l.c = 1$$

lorsque que **U** moyenne horaire du nombre de mises à jour sur l'objet **OR** est faible, et dans laquelle :

**r** désigne le nombre moyen de lignes ou clé-RID par page de l'objet entier,
**l** désigne le nombre d'insertions de lignes, ou de clé-RID pour les index, à l'heure dans l'objet **OR,**
**Co\*** désigne le surcoût horaire lorsque l'objet est totalement désorganisé
**c** désigne un paramètre machine, le rapport du temps d'accès **E/S** par !a taille de l'objet **Nbp.**

**18.** Méthode de gestion selon la revendication 17 et utilisée pour la réorganisation des index, **caractérisé en ce que** pour un **index,** le seuil **Dsl** est défini par une approximation donnée par la formule **F7'**suivante :

$$R= DsI^2\ r\ (t^*+1)Nbp.V\ /\ [2(V+3)] = 1$$

lorsque que **U** moyenne horaire du nombre de mises à jour sur l'index est faible, et dans laquelle:

**Ts** désigne le temps de déplacement de bras, **TI** le temps de latence (1/2 tour du bras).
**c = (Ts+ 3.TI)/Nbp** où **Ts** en **E/S** désigne le temps de déplacement du bras du disque, et **TI** le temps de latence, 1/2 tour du bras, et **V = Ts/TI.**
**t\*** désigne le taux de relecture de l'objet, c'est à dire le nombre moyen de fois qu'une entrée sera relue.

**19.** Méthode de gestion selon la revendication 17 et utilisée pour la réorganisation des bases de données indexées de type **espace** de tables monotable à **n** index, **caractérisé en ce que** le seuil **DsT** est défini pour un **espace monotable** par une approximation donnée par la formule **F13** suivante:

$$R= r.Nbp[DsT^2.L\ (V+1) + V.\ S\ (DsT^2.bi^2)\ (t^*i+1)]/ (2V+6) = 1$$

lorsque que **U,** moyenne horaire du nombre de mises à jour sur l'espace monotable est faible, et dans laquelle :

**L** désigne la proportion de lignes accédées par parcours séquentiel sur le nombre de lignes créées,
S représente le signe mathématique Sigma, somme des expressions f(xi) pour **i** index allant de **1** à n,
**bi** représentent les valeurs instantanées de D, taux de désorganisation de l'espace monotable, lors des dernières réorganisations des **n** index, et
**t\*i** représentent les taux d'accès directs au travers de chaque index **i.**

**20.** Méthode de gestion des réorganisations dans un ensemble de bases de données indexées d'un système informatique d'information selon l'une des revendications précédentes, **caractérisée en ce qu'**elle est appliquée à la réorganisation de bases de données indexées de type espace de tables.

**21.** Système informatique de type système d'information **caractérisé en ce qu'**il comporte un ensemble de bases de données indexées et les moyens matériels et logiciels spécialement adaptés pour la mise en oeuvre de la méthode de gestion des réorganisations de base de données indexées selon l'une des revendications précédentes, notamment de bases de données de type espace de tables et/ou d'index.

## Claims

**1.** Method of managing reorganizations in a set of indexed databases of an information data processing system adapted to "offline" reorganization in at least one reorganization processing region of the system, **characterized in that** it comprises the following operational phases:

(10) - Creating and maintaining by continuously updating a list PRIOREORG of objects to be organized in decreasing priority order as a function of the level of disorganization of the objects to be reorganized;
(20) - Executing a process IDPOR of identifying the first or next object to be reorganized POR with, at each event RAZR = 1 internal to the system for which the selection of the first or next object to be reorganized must be reviewed, interrupting, resetting and re-executing the process IDPOR, which comprises the following steps:
(21) - Establishing a rapid reorganization schedule PRR with the aid of the list PRIOREORG and the remaining operational time TRR available in all of the reorganization regions and a selection list SELECT/OR of objects OR to be reorganized in decreasing priority order optimized as a function of the benefit from the reorganization of each object OR, said benefit being defined as the product of a factor representative of the level of disorganization of an object OR by the time to reorganize that object;
(22) - Establishing a retro-active reorganization schedule in which, for any current object OR to be reorganized extracted from the list SELECT/OR in increasing priority order to promote the processing in advance of any objects of larger sizes, there is calculated for each reorganization region the last time DDRR of the region, representing in the "Batch" window allocated to "offline" reorganization the minimum time necessary for reorganizing the current object OR, equal in the present instance to the time consumed DCRR plus the time DROR to reorganize the current object;

(23) - Identifying the processing region RTR of the current object OR by optimized matching of the processing time DRR available in said region with the processing time DROR necessary for reorganizing the object POR with DRR - DDRR minimum $\geq 0$;

(24) - Entering the current object OR as the next object to be reorganized POR in the schedule of the identified region by setting the pointer POR corresponding to the address of the current object OR and increasing the consumed time DCRR in the region by the reorganization time DROR;

(30) - Launching the reorganization of the object POR as soon as the identified reorganization processing region RTR is released in the absence of any event RAZR = 1 occurring in the meantime; resetting and re-execution of the process IDPOR.

2. Management method according to claim 1, **characterized in that** the optimum reorganization order is coordinated with the order of back-up copying of objects of the information system taking account of reorganizations in progress or just effected.

3. Management method according to claim 2, **characterized in that** the back-up copying order is modified by executing with the highest priority, for at least one object OR to be reorganized, the copying of said object OR as soon as possible at the end of reorganization processing.

4. Method according to any of claims 1 to 3 of managing reorganizations of a set of indexed databases of an information system adapted to "offline" reorganization in at least one reorganization processing region, **characterized in that** the method integrates the organization of copying in at least one copying processing region and comprises the following operational phases:

(40) - Creating and maintaining by continuously updating:

- a list PRIOREORG of objects to be reorganized in decreasing priority order as a function of the level of disorganization of the objects to be reorganized; and
- a list PRIOCOPIE of objects to be copied in decreasing priority order as a function of the age of the last copies of the objects to be copied;

(50) - Continuously monitoring the occurrence in the information system of any event:

- RAZR = 1 for which the selection of the first or next object to be reorganized POR must be reviewed, in particular a reorganization task ending in a reorganization processing region and/or the release of a processing area for reorganization or copying; and/or
- RAZC = 1 for which the selection of the first or next object to copy POC must be reviewed, in particular at the end of a copying task in a copying processing region, priority copying at the end of reorganization and/or the release of a processing area for reorganization or copying, with
for any event RAZR = 1, launching the execution of the process IDPOR of identifying the first object to be reorganized POR or, if the process IDPOR is being executed, interrupting and relaunching the process IDPOR; and/or
for an event RAZC = 1, launching execution of the process IDPOC of identifying the first object to be copied POC or, if the process IDPOC is being executed, interrupting and relaunching the process IDPOC;
- the process IDPOR comprising then the following operations;

(51) - Establishing a rapid reorganization schedule PRR* with the aid of the list PRIOREORG and the remaining reorganization operational time TRR available in all of the reorganization regions and a selection list SELECT/OR of objects OR to be reorganized in decreasing priority order optimized as a function of the benefit from the reorganization of each object OR, said benefit being defined as the product of a factor representative of the level of disorganization of an object OR by the time to reorganize that object;

(52) - Establishing a rapid copying schedule PRC from the list SELECT/OR, and then establishing, from the list PRIOCOPIE and within the limit of the remaining copying operational time TRC available in all of the copying regions, a selection list SELECT/OC in LIFO or stack memory for objects OC to be copied stacked in decreasing priority order, the highest priority being given to the object whose latest copy is the longest standing, insertions after reorganization being effected at the top of the PRIOCOPIE list.

(53) - Setting up a retro-active copying schedule in which, for any current object to be reorganized extracted from the list SELECT/OR in increasing priority order, the time TCR to be reserved for copying the object OR after reorganization is calculated for each copying region;

(54) - Setting up a retro-active reorganization schedule in which, for any current object OR to be reorganized extracted from the list SELECT/OR in increasing priority order to promote the processing in advance of objects of the greatest possible sizes, the last time DDRR of the region is calculated for each reorganization region, representing in the "Batch" window allocated to "offline" reorganization the minimum time necessary for reorganizing the object OR, in accordance with a different formulation according to whether a copy of the object OR being reorganized must be made or not;

(55) - Identifying the processing region RTR of the current object OR by optimized matching of the processing time DRR available in said region with the processing time DROR necessary for reorganizing the current object OR with DRR - DDRR minimum ≥ 0 if no copying is to be done or with minimum absolute value of DRR - DDRRand DROR + DCOR ≤ DRR if copying is to be done;

(56) - Entering the current object OR as the next object to be reorganized POR in the schedule of the region identified by setting the pointer POR corresponding to the address of the object OR, increasing the consumed time DCRR in the region by the reorganization time DROR and recalculating the time DGRR wasted in the reorganization region because of copying the objects OR at the end of reorganization;

(60) - Launching the reorganization of the object POR immediately an identified reorganization processing region RTR is available and if there is no reset event RAZR = 1 in the meantime; resetting and re-executing the process IDPOR; and

- the process IDPOC comprising the following operations:

(51) - Establishing a rapid reorganization schedule PRR* with the aid of the list PRIOREORG and the remaining reorganization operational time TRR available and a selection list SELECT/OR of objects OR to be reorganized in decreasing priority order optimized as a function of the benefit from the reorganization of each object OR, said benefit being defined as the product of a factor representative of the level of disorganization of an object OR by the time to reorganize that object;

(52) - Establishing a rapid copying schedule PRC from the list SELECT/OR, and then establishing, from the list PRIOCOPIE and within the limit of the remaining copying operational time TRC available in all the copying regions, a selection list SELECT/OC in LIFO or stack memory for objects OC to be copied stacked in decreasing priority order, the highest priority being given to the object whose latest copy is the longest standing insertions after reorganization being effected at the top of the PRIOCOPIE list.

(53') - Establishing a retro-active copying schedule with determination of the available copying times in the copying region, unstacking of the list SELECT/OC from top to bottom and searching for a copying region by matching the available copying time and the copying time of the current object OC to be copied so as to copy the largest possible objects, and marking the source of the reorganization or non-reorganization of the object to be copied; followed by

- identifying the processing region RTC of the object to be copied by matching the processing time available in said region with the processing time necessary for copying the current object OC; followed by
- entering the current object OC as the next object to be copied POC in the schedule of the identified region RTC by setting the pointer POC corresponding to the address of the object OC and reducing the available processing time by the time to copy the object OC retained as POC;

(60') - Launching the copying of the object POC immediately a copying processing region TRC identified is available and if there is no reset event RAZC = 1 in the meantime; resetting and re-executing the process IDPOC.

5. Management method according to claim 4, **characterized in that** it integrates into the final phases of the process IDPOR for an object OR a phase of searching for one or more objects OR to be reorganized without copying OR in the list SELECT/OR or by default in the list PRIOREORG liable to be reorganized in the corresponding processing region RTR during the time waiting for copying of the object OR after reorganization.

6. Management method according to either claim 4 or claim 5, **characterized in that** said phase (51) of establishing a rapid reorganization schedule PRR* comprises the following operations:

(511) - Initialization: wherein the selection indicators of the objects OR are eliminated and the review counterlimiter, the remaining copying time TRC, the remaining reorganization time TRR and the minimum time E for reorganizing and copying an object OR are initialized;

(512) - Loop on objects: wherein a 'selection possible' mark is applied for any real object OR from the list PRIOREORG processed in decreasing order until TRR < E;

(513) - Eliminating intersections of objects: real objects OR from table spaces also known as global objects already selected in whole or in part are eliminated from the 'selection possible' mark;

(514) - Reviewing preceding choices: wherein objects OR whose total reorganization and copying time is greater than the remaining reorganization time TRR are eliminated from the 'selection possible' mark, and by default the current object OR and the objects OR already selected in the list SELECT/OR are subjected to a process of optimization as a function of the reorganization benefit with replacement of an object already selected by the current object with tests, within the limit of the term of the counter-limiter, of successive combinations tending to retain to be finally selected in the SELECT/OR list of objects with the greatest possible reorganization benefit and associating them with the other objects OR of the 'possible selection' mark so that the total time for reorganizing all of the objects OR retained is less than but as close as possible to the remaining reorganization time TRR;

(515) - Verifying the sufficiency of the available copying time in the remaining copying time TRC for each object OR currently being finally selected for reorganization, taking account of the reorganization priority of the object OR relative to objects to be copied before it because of their higher copying priorities;

(516) - Selecting the current object OR in the list SELECT/OR; wherein the indicators of the current object OR and of the associated global object are set, where applicable the indicators of the deselected object or objects OR are eliminated, and TRR and TRC are decreased by the reorganization and copying times, respectively.

**7.** Management method according to any of claims 4 to 6 **characterized in that** said phase (52) of establishing a rapid copying schedule PRC comprises the following operations:

(521) - Initialization: wherein on exiting a reorganization schedule PRR* the copy selection stacks PSC1 and PSC2 are emptied and the review counter-limiter, the remaining copying time TRC and the minimum time EC to copy an object OC to be copied are initialized;

(522) - Inspecting reorganization regions: wherein for all the regions,
if the region is active, and if image copying of the object being reorganized is to be done and/or if image copying of any object OR from the list SELECT/OR taken in decreasing priority order is to be done: for any sub-object liable to be copied separately, in particular a partition, the copying time of the sub-object of TRC is subtracted and the sub-object is placed at the top of the first stack PSC1;

(523) - Processing the list PRIOCOPIE of objects to be copied: for any object OC to be copied from the list PRIOCOPIE taken in decreasing order until TRC < EC and absent from PSC1, the copying time of the sub-object OC is subtracted from TRC and the sub-object OC is placed at the top of the second stack PSC2,

(524) - Stacking selection stacks: the stack PSC1 is placed on top of the stack PSC2 to constitute the list SELECT/OC.

**8.** Management method according to claim 7 **characterized in that** said phase (53) of establishing a retro-active copying schedule in the process IDPOR comprises the following operations:

(531) Initializing the copying regions: wherein on exiting a reorganization schedule for all the copying regions, the consumed time DCRC of the region is set to zero;

(532) Determining the copying time TCR to be reserved: wherein for any real object from the list SELECT/OR scanned in increasing priority order and then taken as the current object OR to be reorganized:

- the time TCR to be reserved for copying the current real object OR is set to zero;
- if image copying of any object OR from the list SELECT/OR in increasing priority order is to be done: for any sub-object liable to be copied separately, in particular partition, a search is made for a copying region whose consumed time DCRC is minimal, the copying time of the sub-object is added to the consumed time DCRC of the current region and the time TCR to be reserved for copying the current object (= maximum of the time TCR to be reserved for copying the current object and the consumed time DCRC in the region) is set.

**9.** Management method according to claim 8, **characterized in that** said retro-active reorganization scheduling phase (54) in the process IDPOR comprises the following operations:

(541) - initialization; wherein for any reorganization region:

- Time DRR of the region = Time DFB of the 'Batch' window less the estimated relative time HRFR of the end of reorganization processing in progress in the region

- Time consumed in the region DCRR = 0
- Time wasted in the region DGRR = 0
- Pointer to the first object to reorganize in the current region = 0

(542) - Determining the last time DDRR of the reorganization region: wherein for any real object OR selected from the list SELECT/OR in increasing priority order:

For each region, if image copying of the current object OR is to be done, calculating the last time of the region DDRR = reorganization time DROP of the current object + maximum of the time TCR to be reserved for copying the current object and the total consumed time DCRR of the region + the wasted time DGRR of the region;

- If not, calculating the last time DDRR of the region = consumed time DCRR of the region + maximum of the reorganization time DROR of the current object and the wasted time DGRR of the region.

10. Management method according to claim 9, **characterized in that** said phase of identifying the reorganization region RTR (55) comprises the following operations:

According to the type of current object OR to be reorganized:

(551) - Searching for the reorganization processing region liable to accommodate optimally an object OR to be reorganized without copying, comprising:

- searching for a region whose last time DDRR is minimal, and if the last time DDRR of the current region is greater than the time DRR of the current region, searching for a region for which the time DRR of the current region minus the last time DDRR of the current region is minimal and positive or zero; if not

(552) - Searching for the reorganization region liable to accommodate optimally an object OR to be reorganized with copying, comprising:

- Searching for a region such that the absolute value of the time DRR of the region minus the last time DDRR of the current region is minimal and the reorganization time DROR plus the time TCR to copy the current object is less than or equal to the time DRR of the region.

11. Management method according to claim 10, **characterized in that** said phase of writing the object OR into the schedule of the reorganization region RTR (56) comprises the following operations:

(561) - Writing the object OR as the next object to be reorganized POR: if image copying of the current object is to be done or the wasted time of the current region is equal to zero, the first object to be reorganized pointer POR of the current region is set to the address of the current object OR,

(562) - Updating DCRR and DGRR: wherein the reorganization time DROC of the current object is added to the consumed time DCRR of the current region and the wasted time DGRR of the current region is set to the last time DDRR of the current region minus the consumed time DCRR of the current region.

12. Management method according to any of claims 4 to 7 **characterized in that** said phase (53') of establishing a retro-active copying schedule in the process IDPOC comprises the following operations:

(531') - Initializing the copying regions: wherein for all regions:

- the region time DRCOP is set to the "Batch" window time DFB less the estimated relative time HRFC of the end of the current copying processing,
- the consumed time DCRCOP of the region is set to zero,
- the pointer POC of the first object to be copied of the current region is set to zero,

(532') Unstacking and identifying the next object to be copied POC: wherein for any object from the stack PSC1/PSC2 scanned from top to bottom a current object OC to be copied is extracted when the copying time TCOC of the current object is less than or equal to the longest DRCOP;

To identify the copying processing region, searching for a region whose consumed time DCRCOP is minimal; in the event of a result in the affirmative, if the copying time TCOC of the current object is greater than DRCOP minus DCRCOP a region is searched for in which DRCOP minus DCRCOP minus TCOC is minimal, positive or zero,

If no region is suitable, a region to copy is chosen for which the absolute value of DRCOP minus DCRCOP minus TCOC is negative and minimal and for which TCOC is less than or equal to DRCOP;

If the current object belongs to the second stack PSC2, i.e. an object to be copied that does not result from a reorganization, the pointer POC of the object for the chosen current region is set to the address of the current object OC to write the object POC into the schedule of the identified copying processing region RTC; and

To terminate, the copying time TCOC is added to the consumed time DCRCOP of the current region.

13. Management method according to any preceding claim, **characterized in that** said events RAZR = 1 and RARC = 1 internal to the system leading to reviewing the selection of the objects POR or POC are respectively the end of a reorganization task in a reorganization processing region for the objects POR or the end of a copying task in a copying processing region for the objects POC, priority copying at the end of reorganization, and/or releasing of a processing area for the objects POR and POC.

14. Method of managing according to any preceding claims, **characterized in that** it is associated to a method of managing reorganization of a set of indexed databases of an information data processing system adapted to the "online" reorganization comprising at least the following operational phases:

   - a phase of instantaneous analysis of at least one object OR to be reorganized from among the objects liable to be reorganized, in particular databases, partitions and/or indexes to be reorganized, and estimation of the overcost associated with the level of disorganization of the object OR to be reorganized;
   - a phase of instantaneous estimation of the cost of online reorganization as a function of the size of said object OR to be reorganized and of the level of disorganization of said object OR to be reorganized; and
   - a phase of determination of the minimum disorganization threshold Ds of the object OR to be reorganized above which threshold "online" reorganization may be launched for that object OR and where applicable the effective launching of that online reorganization, the threshold Ds corresponding substantially to the minimum of the total of the estimated overcost of disorganization and the estimated cost of reorganization for the object OR concerned.

15. Method according to claim 14, **characterized in that** launching "online" reorganization is delayed pending a time window of reduced activity of the database concerned.

16. Method according to claim 14, **characterized in that** for an object OR to be reorganized selected as the first object POR to be reorganized priority is given to "offline" reorganization, "online" reorganization being required only after the threshold Ds is crossed for the object POR concerned.

17. Method according to any of claims 14 to 16 used for the reorganization of indexed table space databases, the method being **characterized in that** for an object OR to be reorganized, the threshold Ds is defined, when U the hourly mean number of updates to the object OR is low, by an approximation given by the following formula F5':

$$R = Ds^2 r\, Co^* / 2.l.c = 1$$

in which:

   r designates the mean number of rows or key-RID per page of the entire object,
   l designates the number of row or key-RID insertions for the indexes at the time in the object OR,
   Co* designates the hourly overcost when the object is totally disorganized, and
   c designates a machine parameter, the ratio of the access time E/S to the size Nbp of the object.

18. Method according to claim 17 used for the reorganization of indexes, **characterized in that**, for an index, the threshold Dsl is defined, when U the hourly mean number of updates to the index is low, by an approximation given by the following formula F7':

$$R = Dsl^2 r(t^*+1)Nbp.V / [2(V+3)] = 1$$

in which:

$$V = Ts/Tl,$$

Ts designates the arm displacement time, Tl designates the latency time (1/2 arm turn), c = (Ts+ 3-Tl)/Nbp, and t* designates the rate of rereading of the object, i.e. the mean number of times that an entry will be reread.

19. Method according to claim 17 used for the reorganization of indexed monotable space databases with n indexes, **characterized in that** the threshold DsT is defined for a monotable space, when U, the hourly mean number of updates to the monotable space, is low, by an approximation given by the following formula F13':

$$R = r.Nbp[DsT^2.L\ (V + 1) + V.S(DsT^2 - bi^2)\ (t^*i + 1)]/(2V + 6) = 1$$

in which:

L designates the proportion of rows accessed per sequential scan to the number of rows created,
S represents the mathematical symbol $\Sigma_1$ denoting the sum of the expressions f(xi) for values of the index i from 1 to n,
bi represents the instantaneous values of D, the level of reorganization of the monotable space, at the time of the last reorganizations of the n indexes, and
t*i represents the rate of direct access via each index i.

20. Method according to any preceding claim of managing reorganization in a set of indexed databases of an information data processing system, **characterized in that** it is applied to reorganizing indexed table space databases.

21. Information system type data processing system **characterized in that** it comprises a set of indexed databases and hardware and software means particularly adapted to implement the method according to any preceding claim of managing reorganization of indexed databases, in particular table space and/or indexed databases.


**Patentansprüche**

1. Verfahren zur Umorganisationsverwaltung in einer Menge indizierter Datenbanken eines Computerinformationssystems, das zur "Offline-Umorganisation" in mindestens einem Umorganisations-Verarbeitungsbereich des Systems angepasst ist, **dadurch gekennzeichnet, dass** es die folgenden Betriebsphasen umfasst:

(10) - Erzeugung einer Liste PRIOREORG der Objekte, die umzuorganisieren sind, nach absteigender Priorität abhängig vom Zustand der Desorganisation der Objekte, die umzuorganisieren sind, und ihre Erhaltung durch fortlaufende Aktualisierung;
(20) - Ausführung eines Prozesses IDPOR zur Identifikation des ersten oder nächsten Objekts POR, das umzuorganisieren ist, mit Unterbrechung und Nullstellung und erneuter Ausführung des Prozesses IDPOR bei jedem systeminternen Ereignis RAZR=1, für das die Auswahl des ersten oder nächsten Objekts, das umzuorganisieren ist, wieder in Frage gestellt werden muss, wobei der Prozess die folgenden Schritte umfasst:
(21) - Erstellung einer Umorganisations-Sclmellplanung PRR anhand der Liste PRIOREORG und der verfügbaren Restbetriebszeit TRR in sämtlichen Umorganisationsbereichen und einer Auswahlliste SELECT/OR von Objekten OR, die umzuorganisieren sind, geordnet nach absteigenden Prioritäten, die in Abhängigkeit vom Gewinn der Umorganisation von jedem Objekt OR optimiert sind, wobei der Gewinn als das Produkt eines Faktors, der den Desorganisationsgrad eines Objekts OR darstellt, mal die Umorganisationszeit dieses Objekts bestimmt ist;
(22) - Erstellung einer Umorganisations-Rückwärtspianung, in der für jedes laufende Objekt OR, das umzuorganisieren ist, das nach aufsteigender Priorität aus der Liste SELECT/OR abgerufen wird, um die vorgezogene Verarbeitung von Objekten mit größtmöglichen Größen zu begünstigen, für jeden Umorganisationsbereich die letzte Zeitbegrenzung DDRR des Bereichs berechnet wird, die im "Batch-Fenster", das der "Offline-Umorganisation" zugewiesen ist, die Mindestzeit darstellt, die für die Umorganisation des laufenden Objekts OR erforderlich ist, die im vorliegenden Fall gleich ist mit der verbrauchten Zeitdauer DCRR plus die Umorganisationszeit DROR des laufenden Objekts;

(23) - Identifikation des Verarbeitungsbereichs RTR des laufenden Objekts OR durch optimierte Übereinstimmung der Verarbeitungsdauer DRR, die im Bereich verfügbar ist, mit der Verarbeitungsdauer DROR, die für die Umorganisation des Objekts POR erforderlich ist, wobei DRR - DDRR mindestens $\geq 0$;

(24) - Eintragung des laufenden Objekts OR als nächstes Objekt POR, das umzuorganisieren ist, in die Planung des identifizierten Bereichs durch Setzen des entsprechenden Pointers POR auf die Adresse des laufenden Objekts OR und durch Erhöhen der Zeitdauer DCRR, die im Bereich verbraucht wird, um die Umorganisationszeit DROR;

(30) - Starten der Umorganisation des Objekts POR, sobald der identifizierte Umorganisations-Verarbeitungsbereich RTR in Abwesenheit jeglicher in der Zwischenzeit eingetretener Ereignisse RAZR=1 freigegeben wird; Nullstellung und erneute Ausführung des Prozesses IDPOR.

2. Verwaltungsverfahren nach Anspruch 1, **dadurch gekennzeichnet, dass** die optimale Reihenfolge der Umorganisationen mit der Reihenfolge der Sicherungskopien von Objekten des Informationssystems unter Berücksichtigung der laufenden oder soeben ausgeführten Umorganisationen koordiniert wird.

3. Verwaltungsverfahren nach Anspruch 2, **dadurch gekennzeichnet, dass** die Reihenfolge der Sicherungskopien frühestens am Ende der Umorganisationsverarbeitung für mindestens ein Objekt OR, das umzuorganisieren ist, durch die Ausführung der Kopie des Objekts OR in erster Priorität geändert wird.

4. Verfahren zur Umorganisationsverwaltung in einer Menge indizierter Datenbanken eines Informationssystems, das zur "Offline-Umorganisation" in mindestens einem Umorganisations-Verarbeitungsbereich angepasst ist, nach einem der Ansprüche 1 bis 3, **dadurch gekennzeichnet, dass** es die Organisation der Kopien in mindestens einem Kopieverarbeitungsbereich einschließt und die folgenden Betriebsphasen umfasst:

(40) - Erzeugung und Erhaltung durch fortlaufende Aktualisierung:

- der Liste PRIOREORG der Objekte, die umzuorganisieren sind, nach absteigender Priorität abhängig vom Zustand der Desorganisation der Objekte, die umzuorganisieren sind; und
- einer Liste PRIOCOPIE der Objekte, die zu kopieren sind, nach absteigender Priorität abhängig vom Alter der letzten Kopien der Objekte, die zu kopieren sind.

(50) - Fortlaufende Überwachung des Auftretens von sämtlichen der folgenden Ereignisse im Informationssystem:

- RAZR=1, für das die Auswahl des ersten oder nächsten Objekts POR, das umzuorganisieren ist, wieder in Frage gestellt werden muss, insbesondere eine Beendigung einer Umorganisationstask in einem Umorganisations-Verarbeitungsbereich und/oder die Freigabe eines Verarbeitungsbereichs zur Umorganisation oder Kopie; und/oder
- RAZC=1, für das die Auswahl des ersten oder des nächsten Objekts POC, das zu kopieren ist, wieder in Frage gestellt werden muss, insbesondere eine Beendigung einer Kopietask in einem Kopieverarbeitungsbereich, eine prioritäre Kopie am Ende der Umorganisation und/oder die Freigabe eines Verarbeitungsbereichs für die Umorganisation oder die Kopie, wobei

für jedes Ereignis RAZR=1, Starten der Ausführung des Prozesses IDPOR zur Identifikation des ersten Objekts POR, das umzuorganisieren ist, oder, wenn der Prozess IDPOR in Ausführung ist, Unterbrechung und Neustart des Prozesses IDPOR; und/oder

für jedes Ereignis RAZC=1, Starten der Ausführung des Prozesses IDPOC zur Identifikation des ersten Objekts POC, das zu kopieren ist, oder, wenn der Prozess IDPOC in Ausführung ist, Unterbrechung und Neustart des Prozesses IDPOC;

- wobei der Prozess IDPOR dann die folgenden Betriebsabläufe umfasst:

(51) - Erstellung einer Umorganisations-Schnellplanung PRR* anhand der Liste PRIOREORG und der verfügbaren restlichen Umorganisations-Betriebszeit TRR, die in sämtlichen Umorganisationsbereichen verfügbar ist, und einer Auswahlliste SELECT/OR von Objekten OR, die umzuorganisieren sind, geordnet nach absteigenden Prioritäten, die in Abhängigkeit vom Gewinn der Umorganisation von jedem Objekt OR optimiert sind, wobei der Gewinn als das Produkt eines Faktors, der den Desorganisationsgrad eines Objekts OR darstellt, mal die Umorganisationszeit dieses Objekts bestimmt ist;

(52) - Erstellung einer Kopieschnellplanung PRC ausgehend von der Liste SELECT/OR und dann von der Liste PRIOCOPIE und im Rahmen der restlichen Kopiebetriebszeit TRC, die in sämtlichen Kopiebereichen verfügbar ist, einer Auswahlliste SELECT/OC im Speicher des LIFO- oder Stapelspeichertyps für Objekte OC, die zu kopieren sind, die nach absteigenden Prioritäten gestapelt sind, wobei die höchste Priorität dem Objekt gegeben wird, dessen Kopie zeitlich am weitesten zurückliegt, da die Zufügungen von Kopien von Objekten nach der Umorganisation vorne auf der Liste PRIOCOPIE vorgenommen werden;

(53) - Erstellung einer Kopierückwärtsplanung, in der für jedes laufende Objekt, das umzuorganisieren ist, das nach aufsteigender Priorität aus der Liste SELECT/OR abgerufen wird, für jeden Kopiebereich die Zeit TCR berechnet wird, die für die Kopie des Objekts OR nach der Umorganisation zu reservieren ist;

(54) - Erstellung einer Umorganisations-Rückwärtsplanung, in der für jedes laufende Objekt OR, das umzuorganisieren ist, das nach aufsteigender Priorität von der Liste SELECT/OR abgerufen wird, um die vorgezogene Verarbeitung von Objekten mit größtmöglichen Größen zu begünstigen, für jeden Umorganisationsbereich die letzte Zeitbegrenzung DDRR des Bereichs, die im "Batch-Fenster", das der "Offline-Umorganisation" zugewiesen ist, die Mindestzeitbegrenzung darstellt, die für die Umorganisation des Objekts OR erforderlich ist, nach einer Formel berechnet wird, die unterschiedlich ist, je nachdem, ob am Ende der Umorganisation eine Kopie des Objekts OR gemacht werden muss oder nicht;

(55) - Identifikation des Verarbeitungsbereichs RTR des laufenden Objekts OR durch optimierte Übereinstimmung der Verarbeitungsdauer, die in dem Bereich DRR verfügbar ist, mit der Verarbeitungsdauer DROR, die für die Umorganisation des laufenden Objekts OR erforderlich ist, wobei DRR - DDRR mindestens $\geq 0$, wenn keine Kopie zu machen ist, oder mit minimalem Absolutwert von DRR - DDRR und DROR+DCOR $\leq$ DRR, wenn eine Kopie zu machen ist;

(56) - Eintragung des laufenden Objekts OR als nächstes Objekt POR, das umzuorganisieren ist, in die Planung des identifizierten Bereichs durch Setzen des entsprechenden Pointers POR auf die Adresse des Objekts OR, durch Erhöhen der Zeitdauer DCRR, die im Bereich von der Umorganisationszeit DROR verbraucht wurde, und durch Neuberechnen der Zeit DGRR, die im Umorganisationsbereich aufgrund des Kopierens von Objekten OR am Ende der Umorganisation verschwendet wurde;

(60) - Starten der Umorganisation des Objekts POR, sobald der identifizierte Umorganisations-Verarbeitungsbereich RTR in Abwesenheit jeglicher in der Zwischenzeit eingetretener Ereignisse RAZR=1 verfügbar ist; Nullstellung und erneute Ausführung des Prozesses IDPOR; und

- wobei der Prozess IDPOC die folgenden Betriebsabläufe umfasst:

(51) - Erstellung einer Umorganisations-Schnellplanung PRR* anhand der Liste PRIOREORG und der verfügbaren restlichen Umorganisations-Betriebszeit TRR und einer Auswahlliste SELECT/OR von Objekten OR, die umzuorganisieren sind, geordnet nach absteigenden Prioritäten, die in Abhängigkeit vom Gewinn der Umorganisation von jedem Objekt OR optimiert sind, wobei der Gewinn als das Produkt eines Faktors, der den Desorganisationsgrad eines Objekts OR darstellt, mal die Umorganisationszeit dieses Objekts bestimmt ist;

(52) - Erstellung einer Kopieschnellplanung PRC ausgehend von der Liste SELECT/OR und dann von der Liste PRIOCOPIE und im Rahmen der verfügbaren restlichen Kopiebetriebszeit TRC, einer Auswahlliste SELECT/OC im Speicher des LIFO- oder Stapelspeichertyps für Objekte OC, die zu kopieren sind, die nach absteigenden Prioritäten gestapelt sind, wobei die höchste Priorität dem Objekt gegeben wird, dessen Kopie zeitlich am weitesten zurückliegt, da die Zufügungen von Kopien von Objekten nach der Umorganisation vorne auf der Liste PRIOCOPIE vorgenommen werden;

(53') - Erstellung einer Kopierückwärtsplanung mit Bestimmung der Kopiedauern, die im Kopiebereich verfügbar sind, Entstapelung der Liste SELECT/OC von oben nach unten und Suche eines Kopiebereichs durch Übereinstimmung der verfügbaren Kopiedauer und der Kopiedauer des laufenden Objekts OC, das zu kopieren ist, derart, dass die größtmöglichen Objekte kopiert werden, und Markierung des Ursprungs der Umorganisation und nicht des Objekts, das zu kopieren ist; gefolgt von

- der Identifikation des Verarbeitungsbereichs RTC des Objekts, das zu kopieren ist, durch Übereinstimmung der Verarbeitungsdauer, die im Bereich verfügbar ist, und der Verarbeitungsdauer, die für die Kopie des laufenden Objekts OC erforderlich ist; gefolgt von

- der Eintragung des laufenden Objekts OC als nächstes Objekt POC, das zu kopieren ist, in die Planung des identifizierten Bereichs RTC durch Setzen des entsprechenden Pointers POC auf die Adresse des Objekts OC und durch Vermindern der verfügbaren Verarbeitungsdauer um die Kopiezeit des Objekts OC, das als POC vorgemerkt wurde;

(60') - In Abwesenheit jeglicher in der Zwischenzeit eingetretener Nullstellungsereignissc RAZC=1 Starten der Kopie des Objekts POC, sobald ein identifizierter Kopieverarbeitungsbereich TRC verfügbar ist; Nullstellung und erneute Ausführung des Verfahrens IDPOC.

5. Verwaltungsverfahren nach Anspruch 4, **dadurch gekennzeichnet, dass** es in die Endphasen des Prozesses IDPOR eines Objekts OR eine Phase der Suche von einem oder mehreren Objekten OR, die ohne Kopie OR umzuorganisieren sind, in der Liste SELECT/OR oder stattdessen in der Liste PRIOREORG einbezieht, , die imstande sind, im entsprechenden Verarbeitungsbereich RTR während des Intervalls der Wartezeit der Kopie des Objekts OR nach der Umorganisation umorganisiert zu werden.

6. Verwaltungsverfahren nach einem der Ansprüche 4 und 5, **dadurch gekennzeichnet, dass** die Phase (51) der Erstellung einer Umorganisations-Schnellplanung PRR* die folgenden Betriebsabläufe umfasst:

(511) - Initialisierung: in der insbesondere die Auswahlmarkierungen der Objekte OR annulliert werden, der Zähler-Begrenzer der Wiederinfragestellungen, die Restzeiten für Kopie TRC und Umorganisation TRR und die Mindestdauer E der Umorganisation und Kopie eines Objekts OR initialisiert werden;
(512) - Objektschleife: in der insbesondere für jedes reelle Objekt OR der Liste PRIOREORG, das in absteigender Reihenfolge genommen wird, bis TRR < E, eine Markierung "Auswahl möglich" des Objekts angebracht wird;
(513) - Beseitigung der Objektüberschneidungen: in der insbesondere die reellen Objekte OR von der "möglichen Auswahl" beseitigt werden, die Teil von Tabellenplätzen sind, die auch globale Objekte genannt werden, die bereits vollständig oder teilweise ausgewählt wurden;
(514) - Wiederinfragestellung der vorhergehenden Entscheidungen: in der insbesondere die Objekte OR von der "möglichen Auswahl" beseitigt werden, deren Gesamtumorganisations- und Kopiezeit länger ist als die restliche Umorganisationszeit TRR und in der stattdessen das laufende Objekt OR und die Objekte OR, die bereits in der Liste SELECT/OR ausgewählt wurden, einem Optimierungsprozess in Abhängigkeit vom Umorganisationsgewinn unterzogen werden, mit Ersetzen eines Objekts, das bereits ausgewählt wurde, durch das laufende Objekt, mit Tests von aufeinanderfolgenden Kombinationen, im Rahmen des Endes des Zähler-Begrenzers, die dazu tendieren, Objekte mit größtmöglichem Umorganisationsgewinn vorzumerken, um am Ende in SELECT/OR ausgewählt zu werden, und sie mit den anderen Objekten OR der "möglichen Auswahl" zu verbinden, derart, dass die Gesamtzeit der Umorganisationen von allen vorgemerkten Objekten OR kleiner als die restliche Umorganisationszeit TRR ist, aber möglichst nahe daran liegt.
(515) - Überprüfung des Genügens der Kopiezeit, die in der Restkopiezeit TRC für jedes Objekt OR verfügbar ist, das in der Lage ist, am Ende für die Umorganisation ausgewählt zu werden, unter Berücksichtigung der Umorganisationspriorität des Objekts OR in Bezug auf die Objekte, die aufgrund ihrer höheren Kopieprioritäten vorher zu kopieren sind.
(516) - Auswahl des laufenden Objekts OR in der Liste SELECT/OR: in der insbesondere die Markierungen des laufenden Objekts OR und des verbundenen globalen Objekts angebracht sind, wobei möglicherweise die Markierungen des oder der Objekte OR, deren Auswahl aufgehoben wurde, annulliert werden, und Vermindern von TRR und TRC um die entsprechenden Umorganisations- und Kopiezeiten.

7. Verwaltungsverfahren nach einem der Ansprüche 4 bis 6, **dadurch gekennzeichnet, dass** die Phase (52) der Erstellung einer Kopieschnellplanung PRC die folgenden Betriebsabläufe umfasst:

(521) - Initialisierung: am Ende einer Umorganisationsplanung PRR* und in der insbesondere die Kopieauswahlstapel PSC1 und PSC2 entleert werden, werden der Zähler-Begrenzer der Wiederinfragestellungen, die restliche Kopierestzeit TRC und die Kopiemindestzeit EC eines Objekts OC, das zu kopieren ist, initialisiert;
(522) - Überprüfung der Umorganisationsbereiche: Für alle Bereiche, wenn der Bereich aktiv ist, und wenn die Imagekopie des Objekts, das in Umorganisation ist, vorzunehmen ist und/oder wenn die Imagekopie von jedem Objekt OR der Liste SELECT/OR, die in der Reihenfolge der absteigenden Prioritäten entnommen wird, vorzunehmen ist: für jedes Unterobjekt, das imstande ist, getrennt kopiert zu werden, insbesondere eine Partition, Subtraktion der Kopiezeit des Unterobjekts von TRC und Anordnung des Unterobjekts oben auf dem ersten Stapel PSC 1;
(523) - Verarbeitung der Liste PRIOCOPIE der Objekte, die zu kopieren sind: in der insbesondere für jedes Objekt OC der Liste PRIOCOPIE, das zu kopieren ist, das in absteigender Reihenfolge entnommen wurde, bis TRC < EC und ohne PSC1, Subtraktion der Kopiezeit des Unterobjekts OC von TRC und Anordnung des Unterobjekts OC oben auf dem zweiten Stapel PSC2,
(524) - Stapeln der Auswahlstapel, bei dem der Stapel PSC1 über dem Stapel PSC2 geschichtet wird, um die Liste SELECT/OC zu bilden.

8. Verwaltungsverfahren nach Anspruch 7, **dadurch gekennzeichnet, dass** die Phase (53) der Erstellung einer Kopierückwärtsplanung im Prozess IDPOR die folgenden Betriebsabläufe umfasst:

(531) Initialisierung der Kopiebereiche, in der am Ende einer Umorganisationsplanung für alle Kopiebereiche die verbrauchte Dauer DCRC des Bereichs nullgestellt wird,

(532) Bestimmung der Kopiezeit TCR, die zu reservieren ist: in der für jedes reelle Objekt der Liste SELECT/OR, die in der Reihenfolge der aufsteigenden Prioritäten abgesucht wird, das laufende Objekt OR, das umzuorganisieren ist, ausgewählt wird,

- die Zeit TCR, die zum Kopieren des laufenden reellen Objekts OR zu reservieren ist, wird nullgestellt;
- Wenn die Imagekopie von sämtlichen Objekten OR der Liste SELECT/OR, die in der Reihenfolge der aufsteigenden Prioritäten genommen wird, vorgenommen werden muss: für jedes Unterobjekt, das imstande ist, getrennt kopiert zu werden, insbesondere eine Partition, wird ein Kopiebereich gesucht, dessen verbrauchte Dauer DCRC minimal ist, es wird die Kopiezeit des Unterobjekts zur verbrauchten Dauer DCRC des laufenden Bereichs hinzugefügt und die Zeit TCR, die für die Kopie des laufenden Objekts zu reservieren ist, wird zwischen der Zeit TCR, die für die Kopie des laufenden Objekts zu reservieren ist, und der verbrauchten Dauer DCRC im Bereich = Maximum gesetzt.

**9.** Verwaltungsverfahren nach Anspruch 8, **dadurch gekennzeichnet, dass** die Phase der Umorganisations-Rückwärtsplanung (54) im Prozess IDPOR die folgenden Betriebsabläufe umfasst:

(541) - Initialisierung: in der für jeden Umorganisationsbereich:

- Dauer DRR des Bereichs = Dauer DFB des "Batch-Fensters" minus entsprechende Zeit HRFR des geschätzten Endes der Verarbeitung der laufenden Umorganisation im Bereich
- Dauer DCRR, die im Bereich verbraucht wurde = 0
- Dauer DGRR, die im Bereich verschwendet wurde = 0
- Pointer erstes Objekt des laufenden Bereichs, das umzuorganisieren ist, = 0

(542) - Bestimmung der letzten Zeitbegrenzung DDRR im Umorganisationsbereich: in der für jedes reelle Objekt OR, das von der Liste SELECT/OR in der Reihenfolge der aufsteigenden Prioritäten ausgewählt wurde:
Für jeden Bereich, wenn die Imagekopie des laufenden Objekts OR vorzunehmen ist, Berechnung der letzten Zeitbegrenzung DDRR des Bereichs = Dauer DROR der Umorganisation des laufenden Objekts + Maximum von der Zeit TCR, die für die Kopie des laufenden Objekts zu reservieren ist, und der gesamten verbrauchten Dauer DCRR des Bereichs + die verschwendete Dauer DGRR des Bereichs;

- Ansonsten Berechnung der letzten Zeitbegrenzung DDRR des Bereichs = Dauer DCRR, die im Bereich verbraucht wurde + Maximum von der Dauer DROR der Unlorganisation des laufenden Objekts und der Dauer DGRR, die im Bereich verschwendet wurde.

**10.** Verwaltungsverfahren nach Anspruch 9, **dadurch gekennzeichnet, dass** die Phase der Identifikation des Umorganisationsbereichs RTR (55) die folgenden Betriebsabläufe um fasst:

Abhängig vom Typ des laufenden Objekts OR, das umzuorganisieren ist:

(551) - Suche des Umorganisationsverarbeitungsbereichs, der imstande ist, ein Objekt OR, das ohne Kopie umzuorganisieren ist, auf optimale Weise aufzunehmen: die Folgendes umfasst:

- Suche eines Bereichs, dessen letzte Zeitbegrenzung DDRR minimal ist, und wenn die letzte Zeitbegrenzung DDRR des laufenden Bereichs größer ist als die Dauer DRR des laufenden Bereichs, Suche eines Bereichs, für den: die Dauer DRR des laufenden Bereichs minus die letzte Zeitbegrenzung DDRR des laufenden Bereichs minimal und positiv oder null ist; ansonsten

(552) - Suche des Umorganisationsbereichs, der imstande ist, ein Objekt OR, das mit Kopie umzuorganisieren ist, aufzunehmen: was Folgendes umfasst:

- Suche eines Bereichs, derart, dass: der Wert der Dauer DRR des Bereichs minus letzte Zeitbegrenzung DDRR des laufenden Bereichs hinsichtlich des Absolutwefls minimal ist, und der Wert der Dauer DROR der Umorganisation plus die Zeit TCR der Kopie des laufenden Objekts kleiner oder gleich der Dauer DRR des Bereichs ist.

**11.** Verwaltungsverfahren nach Anspruch 10, **dadurch gekennzeichnet, dass** die Phase der Eintragung des Objekts OR in die Planung des Umorganisationsbereichs RTR (56) die folgenden Betriebsabläufe umfasst:

(561) - Eintragung des Objekts OR als nächstes Objekt POR, das umzuorganisieren ist: in der, wenn die Imagekopie des laufenden Objekts, die vorzunehmen ist, oder die verschwendete Dauer des laufenden Bereichs gleich null ist, der Pointer des ersten Objekts POR des laufenden Bereichs, das umzuorganisieren ist, auf die Adresse des laufenden Objekts OR gesetzt wird,

(562) - Aktualisierung von DCRR und DGRR: in der die Dauer DROC der Umorganisation des laufenden Objekts zur Dauer DCRR hinzugefügt wird, die im laufenden Bereich verbraucht wurde, und die verschwendete Dauer DGRR des laufenden Bereichs auf den Wert der letzten Zeitbegrenzung DDRR des laufenden Bereichs minus die Dauer DCRR, die im laufenden Bereich verbraucht wurde, gesetzt wird.

**12.** Verwaltungsverfahren nach einem der Ansprüche 4 bis 7, **dadurch gekennzeichnet, dass** die Phase (53') der Erstellung der Kopierückwärtsplanung im Prozess IDPOC die folgenden Betriebsabläufe umfasst:

(531') Initialisierung der Kopiebereiche: in der für alle Bereiche:

- die Dauer DRCOP des Bereichs auf die Dauer DFB des "Batch-Fensters" minus die entsprechende geschätzte Endzeit HRFC der Verarbeitung der laufenden Kopie gesetzt wird,
- die verbrauchte Zeit DCRCOP des Bereichs nullgestellt wird,
- der Pointer POC des ersten Objekts des laufenden Bereichs, das zu kopieren ist, nullgestellt wird,

(532') Entstapelung und Identifikation des nächsten Objekts POC, das zu kopieren ist, in der:

Für jedes Objekt des Stapels PSC1/PSC2, der von oben nach unten abgesucht wird, ein laufendes Objekt OC das zu kopieren ist, abgerufen wird, wenn die Kopiezeit TCOC des laufenden Objekts kleiner oder gleich der Dauer DRCOP ist;

Zum Identifizieren des Kopieverarbeitungsbereichs ein Bereich gesucht wird, dessen verbrauchte Dauer DCRCOP minimal ist; wenn es zutrifft, dass die Kopiezeit TCOC des laufenden Objekts größer ist als DRCOP minus DCRCOP, wird ein Bereich gesucht, für den DRCOP minus DCRCOP minus TCOC minimal, positiv oder null ist,

Wenn kein Bereich geeignet ist, wird ein Bereich, der zu kopieren ist, ausgesucht, für den DRCOP minus DCRCOP minus TCOC negativ und hinsichtlich des Absolutwerts minimal ist, und für den TCOC kleiner oder gleich DRCOP ist;

Wenn das laufende Objekt zum zweiten Stapel PSC2 gehört, das heißt ein Objekt, das zu kopieren ist, das nicht von einer Umorganisation stammt, wird der Pointer des Objekts POC für den ausgewählten laufenden Bereich auf die Adresse des laufenden Objekts OC gesetzt, derart, dass das Objekt POC in die Planung des identifizierten Kopieverarbeitungsbereichs RTC eingetragen wird; und

Zum Schluss wird die Kopiedauer TCOC zur verbrauchten Dauer DCRCOP des laufenden Bereichs hinzugefügt.

**13.** Verwaltungsverfahren nach einem der vorhergehenden Ansprüche, **dadurch gekennzeichnet, dass** die systeminternen Ereignisse RAZR=1 und RARC=1, die zur Wiederinfragestellung der Auswahl der Objekte POR oder POC führt, insbesondere durch das Ende einer Umorganisationstask in einem Umorganisations-Verarbeitungsbereich für die Objekte POR beziehungsweise durch das Ende einer Kopietask in einem Kopieverarbeitungsbereich für die Objekte POC, eine prioritäre Kopie am Ende der Umorganisation und/oder die Freigabe eines Verarbeitungsbereichs für die Objekte POR und POC gebildet werden.

**14.** Verwaltungsverfahren nach einem der vorhergehenden Ansprüche, **dadurch gekennzeichnet, dass** es mit einem Verfahren zur Umorganisationsverwaltung in einer Menge indizierter Datenbanken eines Computerinformationssystems verbunden ist, das zur "Online-Umorganisation" angepasst ist, das mindestens die folgenden Betriebsphasen umfasst:

- eine Phase der Sofortanalyse von mindestens einem Objekt OR, das umzuorganisieren ist, unter den Objekten, die zur Umorganisation imstande sind, insbesondere Datenbanken, Partitionen und/oder Indizes, die umzuorganisieren sind, und zur Schätzung des Mehraufwands, der mit dem Desorganisationsgrad des Objekts OR, das umzuorganisieren ist, verbunden ist;

- eine Phase der Sofortanalyse des Aufwands der Online-Umorganisation in Abhängigkeit von der Größe des Objekts OR, das umzuorganisieren ist, und vom Desorganisationsgrad des Objekts OR, das umzuorganisieren ist; und

- eine Phase der Bestimmung der Schwelle Ds der Mindestdesorganisation des Objekts OR, das umzuorganisieren ist, wobei die "Online-Umorganisation" oberhalb von dieser Schwelle für dieses Objekt OR gestartet werden kann, und gegebenenfalls tatsächlicher Start dieser Online-Umorganisation, wobei die Schwelle Ds im Wesentlichen dem Minimum vom Gesamtaufwand des geschätzten Mehraufwands der Desorganisation und dem geschätzten Aufwand der Umorganisation für das betrachtete Objekt OR entspricht.

**15.** Verwaltungsverfahren nach Anspruch 14, **dadurch gekennzeichnet, dass** der Start der "Online-Umorganisation" verzögert wird, um auf ein Zeitfenster mit verringerter Tätigkeit der betreffenden Datenbank zu warten.

**16.** Verwaltungsverfahren nach Anspruch 14, **dadurch gekennzeichnet, dass** für ein Objekt OR, das umzuorganisieren ist, das als das erste Objekt POR ausgewählt wurde, das umzuorganisieren ist, die Priorität der "Offline-Umorganisation" gegeben wird, wobei der Einsatz der "Online-Umorganisation" nur nach der Überschreitung der Schwelle Ds für das betrachtete Objekt POR erforderlich ist.

**17.** Verwaltungsverfahren nach einem der Ansprüche 14 bis 16 und das zur Umorganisation von indizierten Datenbanken des Tabellenplatztyps verwendet wird, wobei das Verfahren **dadurch gekennzeichnet ist, dass** die Schwelle Ds für ein Objekt OR, das umzuorganisieren ist, durch eine Näherung bestimmt ist, die durch die nachfolgende Formel F5' gegeben ist:

$$R = Ds^2 \ r \ Co^* \ / \ 2.1.c = 1$$

wenn der stündliche Durchschnitt U der Anzahl der Aktualisierungen auf dem Objekt OR niedrig ist, und in der:

r die durchschnittliche Anzahl der Zeilen oder RID-Schlüssel pro Seite des gesamten Objekts bezeichnet,
l die Anzahl von Einfügungen der Zeilen oder RID-Schlüssel für die Indizes pro Stunde im Objekt OR bezeichnet,
Co* den stündlichen Mehraufwand bezeichnet, wenn das Objekt vollständig desorganisiert ist
c einen Rechnerparameter, das Verhältnis der Zugriffszeit E/S zur Größe des Objekts Nbp, bezeichnet.

**18.** Verwaltungsverfahren nach Anspruch 17 und das zur Umorganisation der Indizes verwendet wird, **dadurch gekennzeichnet, dass** die Schwelle Dsl für einen Index durch eine Näherung bestimmt ist, die durch die folgende Formel F7' gegeben ist:

$$R = Dsl^2 \ r(t^*+1)Nbp.V/[2(V+3)]=1$$

wenn der stündliche Durchschnitt U der Anzahl der Aktualisierungen auf dem Index niedrig ist, und in der:

Ts die Bewegungszeit des Zugriffsarms, TI die Latenzzeit (1/2 Umdrehung des Zugriffsarms) ist.
c = (Ts+3.TI)/Nbp, wo Ts in E/S die Bewegungszeit des Zugriffsarms der Platte und TI die Latenzzeit, 1/2 Umdrehung des Zugriffsarms, und V = Ts/TI bezeichnet
t* die Rate, bei der das Objekt erneut gelesen wird, das heißt, die durchschnittliche Anzahl von Malen, die ein Eintrag erneut gelesen wird, bezeichnet.

**19.** Verwaltungsverfahren nach Anspruch 17 und das zur Umorganisation von indizierten Datenbanken des Einzeltabellen-Tabellenplatztyps mit n Indizes verwendet wird, **dadurch gekennzeichnet, dass** die Schwelle DsT für einen Einzeltabellenplatz durch eine Näherung bestimmt ist, die durch die folgende Formel F13' gegeben ist:

$$R = r.Nbp[DsT^2 \ .L(V+1) + V.S(DsT^2 - bi^2) \ (t^*i+1)]/(2V+6) = 1$$

wenn der stündliche Durchschnitt U der Anzahl der Aktualisierungen auf dem Einzeltabellenplatz niedrig ist, und in der:

L das Verhältnis der Zeilen, auf die für jedes sequentielle Absuchen zugegriffen wird, zur Anzahl der erzeugten Zeilen bezeichnet,

S das mathematische Zeichen Sigma, die Summe der Ausdrücke f(xi) für i Index, der von 1 bis n geht, darstellt, bi die momentanen Werte von D, dem Desorganisationsgrad des Einzeltabellenplatzes bei der letzten Umorganisation der n Indizes darstellen, und

t*i die Direktzugriffsrate über jeden der Indizes i darstellt.

20. Verfahren zur Umorganisationsverwaltung in einer Menge indizierter Datenbanken eines Computerinformationssystems nach einem der vorhergehenden Ansprüche, **dadurch gekennzeichnet, dass** es auf die Umorganisation von indizierten Datenbanken des Tabellenplatztyps angewandt wird.

21. Informatiksystem des Informationssystemtyps, **dadurch gekennzeichnet, dass** es eine Menge indizierter Datenbanken und die Hardware- und Softwaremittel umfasst, die eigens auf die Ausführung des Verfahrens zur Umorganisationsverwaltung von indizierten Datenbanken nach einem der vorhergehenden Ansprüche angepasst sind, insbesondere Datenbanken des Tabellenplatz- und/oder Indexplatztyps.

**FIG.1**

| GESTION REORGANISATION (HORS LIGNE) |
|---|

10 — | MAINTENIR LISTE DE PRIORITE DES OBJETS **OR** |

20 — | EXEC **IDPOR** ET POUR EVENEMENT **RAZR**=1 INTERROMPRE ET RE.EXEC PROCESSUS **IDPOR** |

| IDPOR |

21 — | ETABLIR PLANNING RAPIDE DE REORGANISATION **PRR** AVEC LISTE DE SELECTION OBJETS **OR** | RAZR=1

22 — | RETROPLANNING DE REORGANISATION | RAZR=1

23 — | IDENTIFICATION DE LA REGION DE TRAITEMENT | RAZR=1

24 — | INSCRIPTION **POR** AU PLANNING REGION IDENT. | RAZR=1

30 — | LANCEMENT REORGANISATION **POR** |

FIG.2

| GESTION DE REORG./COPIE (HORS LIGNE) |

40 — | MAINTENIR LISTE DE PRIORITE DES OBJETS OR |
| MAINTENIR LISTE DE PRIORITE DES OBJETS OC |

50 — SURVEILLANCE RAZR=1 ET RAZC=1
RAZC=1                                    RAZR=1

| IDPOR |

51 — | ETABLIR PLANNING RAPIDE DE REORGANISATION PRR* AVEC LISTE DE SELECTION OBJETS OR |  RAZR=1

52 — | ETABLIR PLANNING RAPIDE DE COPIE AVEC LISTE DE SELECTION OBJETS OC |  RAZR=1

53 — | RETROPLANNING DE COPIE OC/OR |  RAZR=1

54 — | RETROPLANNING DE REORGANISATION |  RAZR=1

55 — | IDENTIFICATION DE LA REGION RTR |  RAZR=1

56 — | INSCRIPTION OBJET POR AU PLANNING RTR ID |  RAZR=1

60 — | LANCEMENT DU TRAITEMENT REORGANISATION DE L'OBJET POR RETOUR IDPOR |

| IDPOC |

51 — | ETABLIR PLANNING RAPIDE DE REORGANISATION PRR* AVEC LISTE DE SELECTION OBJETS OR |  RAZC=1

52 — | ETABLIR PLANNING RAPIDE DE COPIE AVEC LISTE DE SELECTION OBJETS OC |  RAZC=1

53' — | RETROPLANNING DE COPIE OC |
| IDENTIFICATION DE LA REGION RTC |
| INSCRIPTION OBJET POC AU PLANNING RTC ID |  RAZC=1

60' — | LANCEMENT DU TRAITEMENT REORGANISATION DE L'OBJET POC RETOUR IDPOC |

FIG.3

51 — PLANNING RAPIDE DE REORGANISATION PRR*

511 — INITIALISATION

512 — BOUCLE SUR OBJETS

513 — ELIMINATION DES INTERSECTIONS D'OBJETS

514 — REMISE EN CAUSE DES CHOIX PRECEDENTS

515 — VERIFICATION SUFFISANCE DU TEMPS COPIE

516 — SELECTION DE L'OBJET COURANT

FIG.4

52 — PLANNING RAPIDE DE COPIE PRC

521 — INITIALISATION

522 — INSPECTION DES REGIONS DE REORGANISATION

523 — TRAITEMENT DE LA LISTE PRIOCOPIE

524 — EMPILAGE DES PILES DE SELECTION

### LEC/BD/REORG/BD
### LECTURE DE BASE DE DONNEES INDEXEE STRUCTUREE
### EN LIGNES - REORGANISATION BASE DE DONNEES

FIG.5A

101 — LECTURE SEQ. INDEX/BDD ET CHARGEMENT MX ET MT

102 — LECTURE ORDONNEE INDEX VERS MT

103 — RECHERCHE LIGNE DONT IDENTIFIANT DONNE PAR L' INDEX

103A — SI OUI = EXTRACTION LIGNE VERS FICHIER ORDONNE FT1

103B — SI NON = VIDANGE MT VERS FICHIER LIGNES A TRIER FT2

104 — FIN DE LECTURE / LIGNES RESTANTES VERS FT2

### LEC/IND/REORG/IND
### LECTURE D'INDEX DE BASE DE DONNEES INDEXEE
### STRUCTUREE EN LIGNES - REORGANISATION INDEX

FIG.5B

101X — LECTURE SEQ. INDEX ET CHARGEMENT MX

102X — COUPLE CLE/LIGNE INF > DERNIER COUPLE CLE/LIGNE TRAITE

103XA — SI OUI = EXTRACTION CLE/ LIGNE VERS FICHIER ORDONNE FX1

103XB — SI NON = VIDANGE MX VERS FICHIER CLE/LIGNE A TRIER FX2

104X — FIN DE LECTURE / CLE/LIGNE RESTANTES VERS FX2

### REORG/TABLE
### REORGANISATION ESPACE DE TABLES

FIG. 8A

401 — LECTURE CONTENU INDEX / ESPACE DE TABLES (FT1/FT2)

402 — TRI FT2 PAR ORDRE CLE PRIMAIRE CROISSANTE (FT'2)

403 — FUSION VIRTUELLE FICHIER FT1 ET FICHIER FT'2

404 — RECHARGEMENT FICHIER LIGNES TRIEES

405 — RECHARGEMENT INDEX PRIMAIRE TABLE

406 — MISE A JOUR AUTRES INDEX

### REORG/IND(ET)
### REORGANISATION INDEX

FIG. 8B

401X — LECTURE CONTENU INDEX (FX1/FX2)

402X — TRI FX2 PAR ORDRE DES COUPLES CLE-RID CROISSANTS (FX'2)

403X — FUSION VIRTUELLE FICHIER FX1 ET FICHIER FX'2

404X — RECHARGEMENT FICHIER INDEX AVEC COUPLES CLE-RID

**FIG. 6A**

LEC/IND/REORG/TABLE
DECHARGEMENT INDEX - REORGANISATION ESP. DE TABLES

201 ⌐ LECTURE SEQ. INDEX ET CHARGEMENT MX

202 ⌐ RECHERCHE ET ELIMINATION DES PAGES INVALIDES DE MX

202A ⌐ VERIF. = PAS DE CLE-RID > DERNIER CLE-RID TRAITE
OU VERIF = PXC ≤ PXL - DMA

202B ⌐ SI OUI = INVALIDATION PAGE COURANTE PXC
RETOUR 201
SI NON = 203

203 ⌐ RECHERCHE PAGE PXmin CONTENANT CLE INF DANS MX

204 ⌐ TRAITEMENT PXmin EN SEQUENCE LOGIQUE = 204A/B/C

204A ⌐ LECTURE ORDRE CROISSANT DES CLE-RID PAGE PXmin

204B ⌐ ENVOI RID DE PXmin DANS ORDRE CROISSANT DE CLE-RID
VERS LECTURE ESPACE DE TABLES

204C ⌐ INVALIDATION PAGE PXmin TRAITEE / RETOUR 201

**FIG. 6B**

LEC/IND/REORG/IND(ET)
DECHARGEMENT INDEX - REORGANISATION INDEX(ET)

201 ⌐ LECTURE SEQ. INDEX ET CHARGEMENT MX

202 ⌐ RECHERCHE ET ELIMINATION DES PAGES INVALIDES DE MX

202A ⌐ VERIF. = PAS DE CLE-RID > DERNIER CLE-RID TRAITE
OU VERIF = PXC ≤ PXL - DMA

202'B ⌐ SI OUI = ECRITURE CLE-RID DANS FICHIER A TRIER FX2
INVALIDATION PAGE COURANTE PXC / RETOUR 201
SI NON = 203

203 ⌐ RECHERCHE PAGE PXmin CONTENANT CLE INF DANS MX

204 ⌐ TRAITEMENT PXmin EN SEQUENCE LOGIQUE = 204A'/C

204'A ⌐ LECTURE ORDRE CROISSANT DES CLE-RID PAGE PXmin
ECRITURE CLE-RID DANS FICHIER ORDONNE FX 1

204C ⌐ INVALIDATION PAGE PXmin TRAITEE / RETOUR 201

**FIG. 7**

LEC/TABLE/REORG/TABLE

DECHARGEMENT ESPACE DE TABLES

301 — | LECTURE SEQ. ESPACE DE TABLES ET CHARGEMENT MT |

302 — | POUR CHAQUE RID VENANT DE L'INDEX (204B) = PAGE PTRID
SI PTRID < PTmin : RID IGNORE / RETOUR = 302
SI PTRID > PTmax : 303 / SI NON : 304
SI RID ABSENT A LECTURE DE L'INDEX : 305 |

303 — | SI PTRID - PTmax ≤ INC : 303A
SI NON : 303B |

303A — | VIDANGE LIGNES DE PTmin VERS FICHIER LIGNES A TRIER FT2
LECTURE PAGE SUIVANTE VERS MT / SI PAGE NON PTRID : 303A
LORSQUE DERNIERE PAGE LUE CORRESPOND A PTRID : 304 |

303B — | SI PTRID - PTmax > INC ET SI PTRID (n) - PTRID (n-1) < PRM
ALORS INC = 2xINC / SI NON INC = INC
DANS LES DEUX CAS : RID IGNORE / RETOUR = 302 |

304 — | SI PTRID PRESENTE DANS MT ALORS ECRITURE LIGNE RID
DANS LE FICHIER DES LIGNES ORDONNEES FT1
ET INC = INC/2 SAUF SI INC = VALEUR MINIMALE
RETOUR = 302 |

305 — | LORSQUE TOUS LES RID TRAITES, TOUTES PAGES RESTANTES
DE MT ET DE L' ESPACE DE TABLES DIRIGEES VERS FT2 |